# EUROPEAN PATENT APPLICATION

(11) **EP 4 715 668 A1**
(43) Date of publication of application: **25.03.2026**
(21) Application number: 24811024.9
(22) Date of filing: 16.05.2024
(51) Int. Cl.: G06N 3/008, B25J 13/00, G06F 3/01, G06N 3/004, G06Q 90/00, G06T 7/00, G06V 10/82

(54) **CONTROL SYSTEM, SYSTEM, AND PROGRAM**

(30) Priority: 19.05.2023 JP 2023083349; 19.05.2023 JP 2023083476; 19.05.2023 JP 2023083501; 01.06.2023 JP 2023090992; 09.06.2023 JP 2023095467; 09.06.2023 JP 2023095476; 09.06.2023 JP 2023095575; 09.06.2023 JP 2023095581; 09.06.2023 JP 2023095668
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/018115
(87) International publication number: WO 2024/242017

(57) **Abstract**

A control system (20) that controls an action of an electronic device, the control system (20) including: a recording control unit (270) that processes at least part of information continuously detected by a sensor to generate and record information in a first recording format or information in a second recording format having an information volume larger than an information volume of the information in the first recording format; and a switching control unit (260) that switches the recording format of the recording control unit (270) from the first recording format to the second recording format in a case where an emotion of the electronic device (40) or a user (30) exceeds a threshold when the information of the first recording format is being generated.

## Description

### Field

The present invention relates to a control system, a system, and a program.

### Background

There is known a terminal that learns a conversation between a user and a conversation partner and accumulates replies from the conversation partner to an inquiry of the user in a reply table (refer to Patent Literature 1, for example). In addition, also known is an emotion generation device including a neural network that inputs user information, device information, and a current emotion state of the user and outputs a next emotion state (refer to Patent Literature 2, for example). In addition, also known is a technique of storing a spatiotemporal pattern in associative memory including a plurality of electronic neurons having a layer neural network relationship having directional artificial synaptic connectivity (refer to Patent Literature 3, for example).

### Citation List

### Patent Literature

Patent Literature 1: JP 2011-253389 A
Patent Literature 2: JP H10-254592 A
Patent Literature 3: JP 2013-535067 A

### Summary

### Technical Problem

However, the conventional technique has a problem that there is a case where data cannot be appropriately recorded in accordance with the emotion of the user or the robot.

The present invention has been made in view of the above, and an object thereof is to provide a control system, a system, and a program capable of appropriately recording data in accordance with an emotion.

### Solution to Problem

A control system that controls an action of an electronic device, the control system includes: a recording control unit that processes at least part of information continuously detected by a sensor to generate and record information in a first recording format or information in a second recording format having an information volume larger than an information volume of the information in the first recording format; and a switching control unit that switches the recording format of the recording control unit from the first recording format to the second recording format in a case where an emotion of the electronic device or a user exceeds a threshold when the information of the first recording format is being generated.

A control system includes: an emotion decision unit that decides an emotion value indicating intensity of an emotion of an electronic device or intensity of an emotion of a user, or a type of the emotion, based on information detected by a sensor provided in an electronic device; a specifying unit that specifies a mode of recording data indicating information related to the user detected by the sensor, based on information decided by the emotion decision unit; and a recording control unit that records the data based on the mode specified by the specifying unit.

A control system that controls an action of an electronic device, the control system includes: an emotion decision unit that decides an emotion of one or both of a user and the electronic device based on at least part of information detected by a sensor that continuously detects the user; a storage unit that stores information obtained by processing at least part of the information detected by the sensor in association with the decided emotion of one or both of the user and the electronic device; and an output control unit that performs control to change one or both of the action of the electronic device and an output timing of the information in accordance with the emotion associated with the information stored in the storage unit when the information is output by the electronic device.

A control system that controls storage of an electronic device, the control system includes: an emotion decision unit that decides emotions of a user and the electronic device based on at least part of information detected by a sensor that continuously detects the user; a storage unit that stores information obtained by processing at least part of the information detected by the sensor in association with the decided emotion of one or both of the user and the electronic device; and a preservation control unit that controls a preservation period of the information in accordance with the emotion associated with the information stored in the storage unit.

A control system that is a system controlling storage of an electronic device, the control system includes: an emotion decision unit that decides an emotion of an electronic device based on information detected by a sensor included in the electronic device; a storage unit that stores information detected by the sensor included in the electronic device and the emotion decided by the emotion decision unit in association with each other; and a recording control unit that updates an emotion decided in the past by the emotion decision unit based on an emotion newly decided by the emotion decision unit, specifically, updates the emotion decided in the past by the emotion decision unit, associated with information detected in the past by the sensor included in the electronic device, including an element common to the information newly detected by the sensor included in the electronic device, based on an element related to the emotion newly decided by the emotion decision unit.

A control system includes: an emotion decision unit that decides intensity of an emotion of a user based on at least part of information detected by a sensor that continuously detects the user; and a storage control unit that records information obtained by processing at least part of the information detected by the sensor, and switches the information to be recorded in accordance with whether the intensity of the emotion of the user decided by the emotion decision unit exceeds a threshold.

A control system includes: an information acquisition unit that acquires event information related to an event experienced by a target object being a storage control target; an emotion decision unit that decides intensity of an emotion of the target object based on the event information acquired by the information acquisition unit; and a storage control unit that controls to store the intensity of the emotion decided by the emotion decision unit and the event information in association with each other.

A control system that controls an action of an electronic device, the control system includes: a recording control unit that processes at least part of information continuously detected by a sensor to generate and record information in a first recording format or information in a second recording format having an information volume larger than an information volume of the information in the first recording format; and a switching control unit that switches the recording format of the recording control unit from the first recording format to the second recording format in response to an increase in a change of an emotion of the electronic device or an emotion of a user when the information of the first recording format is being generated.

A control system that controls an action of an electronic device, the control system includes: a recording control unit that processes at least part of information continuously detected by a sensor, generates information in a first recording format or information in a second recording format having an information volume larger than that of the information in the first recording format, and records the generated information after tagging with the information in the second recording format; and an output control unit that controls to output information in the second recording format selected based on tagged information from among the information in the second recording format recorded by the recording control unit.

### Advantageous Effects of Invention

According to one aspect of the embodiment, data can be appropriately recorded in accordance with an emotion.

### Brief Description of Drawings

FIG. 1 is a diagram schematically illustrating an example of a system according to a first embodiment.
FIG. 2 is a diagram illustrating an example of an emotion value change.
FIG. 3 is a diagram schematically illustrating a block configuration of a server and a robot.
FIG. 4 is a diagram schematically illustrating a neural network.
FIG. 5 is a diagram schematically illustrating parameters of a neural network in a table format.
FIG. 6 is a diagram schematically illustrating an operation flow of a server 200 in a case where a robot is activated or reset.
FIG. 7 is a diagram schematically illustrating calculation of a coupling coefficient of an artificial synapse.
FIG. 8 is a diagram schematically illustrating time evolution of a coupling coefficient in a case where a function hₜ^{ij} is defined as an increase/decrease parameter of the coupling coefficient.
FIG. 9 is a diagram schematically illustrating time evolution of a coupling coefficient in a case where further synchronized firing is performed at time t2.
FIG. 10 is a diagram schematically illustrating influence definition information defining a chemical influence given to a parameter.
FIG. 11 is a diagram illustrating a flowchart of calculating an internal state and a status.
FIG. 12 is a diagram schematically illustrating a calculation example of an internal state in a case where an artificial neuron does not fire.
FIG. 13 is a diagram schematically illustrating a calculation example of an output in a case where an artificial neuron fires.
FIG. 14 is a diagram schematically illustrating time evolution of a coupling coefficient in a case where a function is defined as an increase/decrease parameter of an artificial neuron.
FIG. 15 is a diagram illustrating an example of a rule stored in a recording format switching rule in a table format.
FIG. 16 is a diagram schematically illustrating an example of a system according to a second embodiment.
FIG. 17 is a diagram illustrating an example of an emotion value change.
FIG. 18 is a diagram schematically illustrating a block configuration of a server and a robot.
FIG. 19 is a diagram illustrating a flowchart related to operation control of a robot.
FIG. 20 is a flowchart related to control of a data preservation period.
FIG. 21 is a diagram schematically illustrating a block configuration of a server and a robot according to a third embodiment.
FIG. 22 is a diagram schematically illustrating an example of a system according to a fourth embodiment.
FIG. 23 is a diagram schematically illustrating an action executed by a robot onto a user.
FIG. 24 is a diagram schematically illustrating a scene in which a robot executes switching of a recording format of data to be recorded in a server.
FIG. 25 is a diagram schematically illustrating a functional configuration of a robot.
FIG. 26 is a diagram schematically illustrating a functional configuration of a server.
FIG. 27 is a diagram schematically illustrating information perceived by a perception processing unit.
FIG. 28 is a diagram schematically illustrating information understood by a semantic comprehension unit.
FIG. 29 is a table illustrating information included in a reaction rule in a table format.
FIG. 30 is a diagram schematically illustrating processing based on a reaction rule.
FIG. 31 is a diagram schematically illustrating an example of an operation flow related to an operation of deciding an action in a robot.
FIG. 32 is a diagram illustrating an example of reaction rule statistical information stored in a server.
FIG. 33 is a diagram schematically illustrating an action executed by a robot in order to decide a label attached to record data.
FIG. 34 is a diagram illustrating an example of a recording format switching rule.
FIG. 35 is a diagram schematically illustrating an example of an operation flow related to switching of a recording format.
FIG. 36 is a diagram illustrating an example of a pattern table.
FIG. 37 is a diagram illustrating an example of a recording mode table.
FIG. 38 is a diagram illustrating an example of a flow of processing of recording data in a recording mode corresponding to an emotion.
FIG. 39 is a diagram schematically illustrating an example of a system according to a fifth embodiment.
FIG. 40 is a diagram schematically illustrating a functional configuration of a robot.
FIG. 41 is a diagram schematically illustrating an example of an operation flow related to an operation of deciding information to be recorded in a robot.
FIG. 42 is a diagram illustrating an emotion map on which a plurality of emotions is mapped.
FIG. 43 is a diagram illustrating another example of the emotion map.
FIG. 44 is a diagram illustrating an example of the emotion table.
FIG. 45 is a diagram illustrating an example of the emotion table.
FIG. 46 is an external view of a stuffed toy according to another embodiment.
FIG. 47 is a rear-front view of a stuffed toy according to the another embodiment.
FIG. 48 is a diagram schematically illustrating an example of an overall configuration of a system according to a sixth embodiment.
FIG. 49 is a diagram schematically illustrating functional block configurations of a robot and a server.
FIG. 50 is a diagram schematically illustrating an emotion map.
FIG. 51 is a diagram schematically illustrating a part of a neural network used by a system.
FIG. 52 is a diagram illustrating an example of association information for associating a remaining capacity of a storage battery with an internally secreted substance.
FIG. 53 is a diagram illustrating an example of coupling coefficient association information for associating a noradrenaline secretion amount with a coupling coefficient BS.
FIG. 54 is a diagram schematically illustrating a temporal change of an excitement degree in a robot.
FIG. 55 is a diagram schematically illustrating an example of a temporal change in memorization strength of memorization information stored in a storing unit.
FIG. 56 is a diagram schematically illustrating another example of the temporal change of the memorization strength of the memorization information stored in the storing unit.
FIG. 57 is a diagram for explaining an acquisition sequence of information acquired from a robot.
FIG. 58 is a diagram illustrating an example of information stored in a storing unit.
FIG. 59 is a diagram for describing an acquisition sequence of supplementary memorization information attached to memorization information.
FIG. 60 is a diagram illustrating an internally secreted substance reflected in a case of occurrence of an event different from evoke information or an event denying evoke information.
FIG. 61 is a diagram illustrating selection tolerance information indicating evoke information that is allowed to be selected as evoke information.
FIG. 62 is a diagram schematically illustrating an example of a relationship between the number of pieces of the same event information and intensity of an emotion.
FIG. 63 is a diagram schematically illustrating an example of a relationship between intensity of an emotion and a retention amount of memory.
FIG. 64 is a diagram schematically illustrating an example of a relationship between attentiveness and a retention amount of memory.
FIG. 65 is a diagram schematically illustrating an example of a relationship between the number of attention targets and a retention amount of memory.
FIG. 66 is a diagram schematically illustrating an example of a relationship between the number of pieces of the same event information and the retention amount of memory.
FIG. 67 is a diagram schematically illustrating an example of an operation flow of a server.

### Description of Embodiments

Hereinafter, the present invention will be described through embodiments of the invention, but the following embodiments do not limit the invention according to the claims. In addition, not all combinations of features described in the embodiments are essential to the solution of the invention.

### (First embodiment)

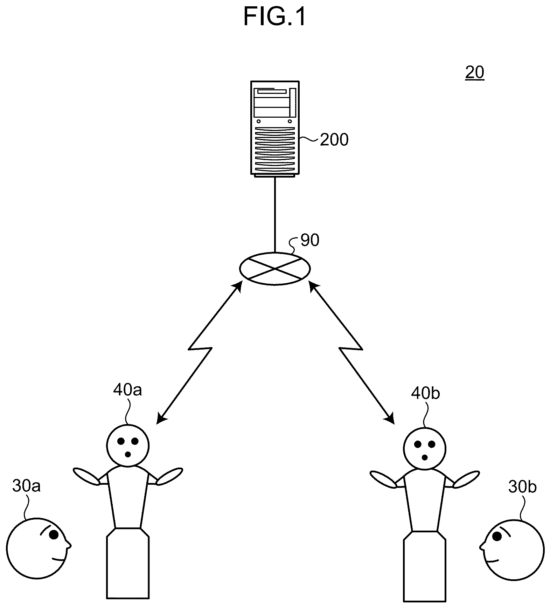

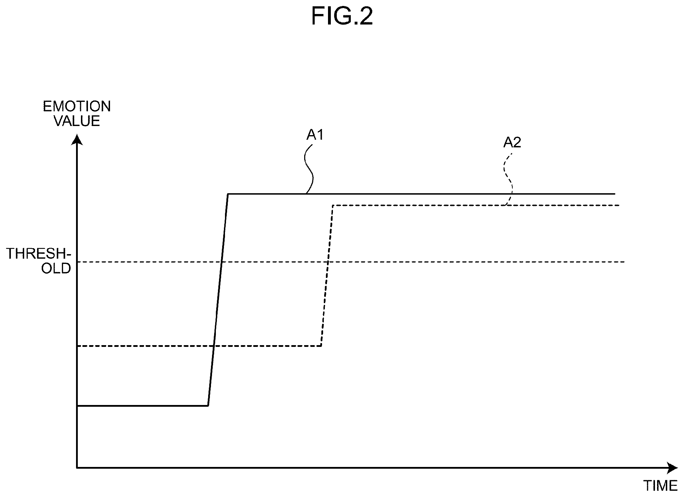

FIG. 1 schematically illustrates an example of a system 20 according to a first embodiment. FIG. 2 is a diagram illustrating an example of an emotion value change. The system 20 includes a server 200, a robot 40a, and a robot 40b. The robot 40a and the robot 40b communicate with the server 200 to exchange information through a communication network 90 Note that the robot 40a and the robot 40b are examples of electronic devices.

A user 30a is a user of the robot 40a. A user 30b is a user of the robot 40b. The robot 40b has substantially the same function as the robot 40a. Therefore, in the description of the system 20, the robot 40a and the robot 40b will be collectively denoted as a robot 40.

The robot 40 performs various operations in accordance with the situation, such as moving the head or limbs, having a conversation with a user 30, or providing a video to the user 30 in accordance with the situation. At this time, the robot 40 decides an operation in cooperation with the server 200. For example, the robot 40 transmits detection information such as a face image of the user 30 acquired by a camera function and a voice of the user 30 acquired by a microphone function to the server 200. The server 200 analyzes the detection information received from the robot 40, decides an operation to be performed by the robot 40, and transmits operation information representing the decided operation to the robot 40. The robot 40 operates in accordance with the operation information received from the server 200.

The robot 40 has an emotion value indicating its own emotion. For example, the robot 40 has emotion values indicating the intensity of each emotion such as "happy", "joyful", "sorrowful", "scared", and "excited". The emotion value of the robot 40 is decided by the server 200. The server 200 causes the robot 40 to perform an operation corresponding to the decided emotion. For example, when having a conversation with the user 30 in a state where the robot 40 has a large emotion value of excitement, the robot 40 is caused to make an utterance at a high speed. In this manner, the robot 40 can express its own emotion by action or the like.

The server 200 updates the current state of the robot 40 using a neural network based on the detection information received from the robot 40. The state of the robot 40 includes the emotion of the robot 40. Accordingly, the server 200 uses the neural network to decide the emotion of the robot 40.

In addition, the robot 40 causes the server 200 to record video data, etc. of the user 30 acquired by the camera function. The robot 40 acquires video data, etc. from the server 200 as necessary, and provides the video data, etc. to the user 30. The robot 40 generates video data and causes the server 200 to record the generated video data such that, the higher the intensity of its own emotion, the more the information volume in the video data to be generated. For example, in a case where information in a high-compression format such as skeleton data is recorded, the robot 40 switches, in response to the emotion value of its own excitement exceeding a threshold, to recording of information in a low-compression format such as an HD moving image. According to the system 20, it is possible to leave high-definition video data when the emotion of the robot 40 has increased, as a record. In addition, the robot 40 generates video data and causes the server 200 to record the generated video data such that, the higher the intensity of the emotion of the user 30, the more the information volume in the video data to be generated. Specifically, in a case where information in a high-compression format such as skeleton data is recorded, the robot 40 switches, in response to the emotion value of excitement of the user 30 exceeding a threshold, to recording of information in a low-compression format such as an HD moving image. According to the system 20, it is possible to leave high-definition video data when the emotion of the user 30 has increased, as a record.

In addition, in a case where the intensity of the emotion of the robot 40 or the user exceeds a threshold, the robot 40 generates video data having a large information volume and causes the server 200 to record the generated video data. For example, in a case where information in a high-compression format such as skeleton data is recorded, the robot 40 switches, in response to the emotion value of its own or user's excitement exceeding a threshold as a trigger, to recording of information in a low-compression format such as an HD moving image. According to the system 20, it is possible to leave high-definition video data when the intensity of the emotion of the robot 40 or the user 30 exceeds the threshold, as a record.

For example, it is assumed that the robot 40 performs interaction (for example, a conversation) with the user and then the emotion value of the user's anger exceeds a threshold. That is, it is assumed that the action of the robot 40 makes the user angry. In such a case, the robot 40 causes the server 200 to record data with a large information volume, making it possible for the system 20 to perform learning based on detailed information when the robot 40 made the user angry.

In this case, the system 20 learns information related to the flow of conversation, statement, and wording by the user and the robot 40, facial expression and attitude of the user and the robot 40, and the like. In a similar situation, the system 20 can perform control such as avoiding, from the next time, an action (conversation, gesture, or the like) of the robot 40 that has made the user uncomfortable.

As a specific example, for example, the system 20 records a flow of conversation, statements, facial expression, and the like in a scene where the robot 40 is calm and the user gets emotional, and based on these pieces of information, control is performed to restrict the action of the robot 40 that has made the user emotional and to cause the robot 40 to perform another action in a similar situation.

On the other hand, the case of performing such control can include a case, for example, where the user does not worry about the action of the robot 40, being a target of restriction, and this might lead to excessive restriction of the action of the robot 40.

Therefore, the system 20 may perform temporal weighting on the action of the robot 40 that has made the user feel unpleasant. For example, the system 20 may gradually release, with the lapse of time, the restriction on the action of the robot 40 that has made the user uncomfortable.

In addition, the system 20 may record the action performed by the robot 40 onto the user and the user's emotion value at that time in association with each other, level the user's emotion values when the robot 40 performs the same action, and then determine whether the robot 40 is to perform the same action. In this case, in a case where the robot 40 takes a specific action (for example, an action that has made the user angry), the system 20 causes the server 200 to record data having a large information volume regardless of the magnitude of the emotion value.

In addition, the robot 40 generates video data having a large information volume triggered by the propagation of the user's emotion to the robot or the propagation of the emotion of the robot 40 to the user, and causes the server 200 to record the video data generated.

Here, the emotion propagation indicates a case where, after the emotion value of a specific emotion of the user or robot 40 as the propagation source exceeds a threshold, the emotion value of the same emotion increases in the user or robot 40 as the propagation destination. For example, the emotion propagation indicates that the emotion value of anger of the robot increases after the emotion value of anger of the user exceeds the threshold. Note that the occurrence of the emotion propagation assumes that the emotion value of anger of the user or the robot 40 as the propagation destination of the emotion is a predetermined value or less, that is, the user or the robot 40 as the propagation destination of the emotion is in a state of not being angry.

Specifically, as illustrated in FIG. 2, it is assumed that after an emotion value A1 of the anger in the user exceeds a threshold, the user's emotion is propagated to the robot 40 by an interaction (for example, a conversation) between the user and the robot to change the emotion of the robot 40 from calm to anger, making the emotion value A2 of the anger exceed the threshold.

In such a case, the robot 40 causes the server 200 to record data with a large information volume triggered by an event in which the emotion value A1 of the user exceeds the threshold and then the emotion value A2 of the robot 40 exceeds the threshold.

In such a case, the server 200 can record detailed information at the time of propagation of the user's emotion to the robot 40. In addition, by collecting detailed information of such a case, the system 20 makes it possible to improve the action of the robot 40 onto the user when the user gets emotional, for example, when the user's emotion value exceeds the threshold.

While FIG. 2 illustrates a case where each of the user's emotion value and the emotion value of the robot 40 exceeds the threshold, the present invention is not limited thereto. In the emotion propagation, when the emotion value of anger of the robot 40 exceeds the threshold after the emotion value of anger of the user exceeds the threshold, the emotion value of anger of the user may be the threshold or less. In addition, the emotion propagation includes a case where the emotion value of anger of the robot 40 does not exceed the threshold as long as the emotion value of anger of the user increases after the emotion value of anger exceeds the threshold.

In addition, the robot 40 causes the server 200 to record a video, etc. having a large information volume even in a case where a strong emotion of the robot 40 has been propagated to the user. As a specific example, for example, here is an assumable case where after the emotion value of anger of the robot 40 exceeds a threshold, the user's emotion changes from calm to angry through a conversation between the robot 40 and the user, and the emotion value of anger in the robot 40 exceeds the threshold.

In such a case, the system 20 can collect detailed data at propagation of the angry emotion of the robot 40 to the user, making it possible to improve the action of the robot 40 using such data.

For example, the system 20 makes it possible to take countermeasures such as controlling the emotion of the robot 40 so as not to let the emotion of the robot 40 become angry due to the user's statement or the like, and changing the action (tone of speech, wording, gesture, etc.) when the robot 40 is angry to an action that would not change the emotion of the user to anger.

In addition, the system 20 may switch the detection trigger for start of recording of data having a large information volume in accordance with the situation. For example, the system 20 switches, in accordance with the situation, the detection trigger, being any of the following facts, namely, the fact that the emotion value of the robot 40 or the user exceeds a threshold, the fact that the user's emotion has been propagated to the robot 40, and the fact that the emotion of the robot 40 has been propagated to the user.

For example, the system 20 switches the detection trigger for the start of recording using, as a key, a conversation topic by the user and the robot 40, a specific keyword or wording in the conversation, or the like. For example, in a case where the system 20 has detected a phrase or wording in which the emotion value of the user has exceeded a threshold in the past in the utterance by the robot 40, the system switches the fact that the emotion value of the user exceeded the threshold to the detection trigger. That is, the system 20 switches the detection trigger using the topic of the past by the user or the robot 40 which is brought up again, as a key.

In such a state, it is also allowable to suppress start of recording even if the emotion value of anger of the robot 40 exceeds the threshold. That is, in this case, the system 20 starts recording by focusing on the user's emotion value after a specific phrase or wording by the robot 40.

In addition, when having detected a phrase or wording in which the emotion value of anger of the robot 40 has exceeded a threshold in the past in the utterance of the user, the system 20 switches the fact that the emotion value of anger of the robot 40 has exceeded the threshold to the detection trigger, as a key.

In addition, the system 20 switches the fact that the user's emotion has been propagated to the robot 40 to the detection trigger using, as a key, a case where the conversation is a specific topic, such as a case where the user and the robot 40 are talking about a topic of conversation when the user's emotion has been propagated to the robot 40 in the past.

For example, in this case, the system 20 starts recording when having detected that the emotion value of the user's anger exceeds a threshold and thereafter the emotion value of the robot 40 exceeds the threshold. In addition, when switching the detection trigger, the system 20 may switch the detection trigger by combining conditions such as weather, temperature, number of people in the surroundings, place, time zone, facial expression, and emotion.

In addition, the robot 40 tags information to be recorded in a case where a current detection trigger is detected, such as a case where an emotion value of the robot 40 or the robot itself exceeds a threshold. Specifically, the robot 40 tags the video data with information detected by a sensor of the robot 40 or information regarding the user's or own emotion value. The information to be tagged includes, for example, surrounding information (information regarding objects existing in the surroundings, and the like), smell, temperature, humidity, position information, weather, the number of people in the surroundings, facial expressions, emotions, and the like. This makes it possible for the user 30, when confirming the recorded information, to clearly recall the situation, etc. at the time from the tagged information. In addition, tagging makes it possible to easily find information even when searching for information related to a specific situation from the recorded information.

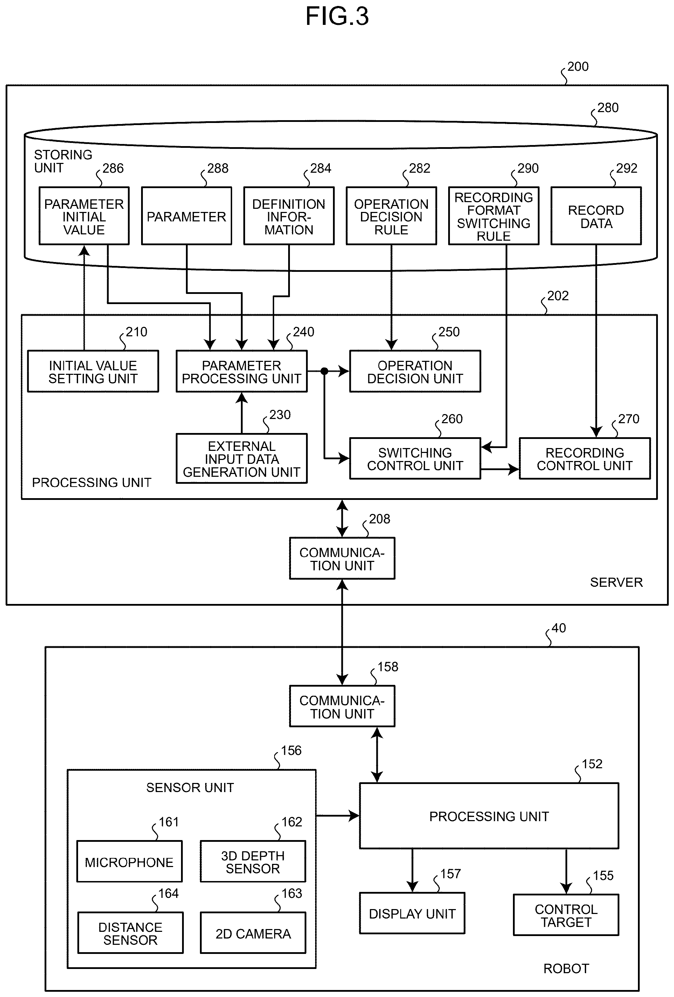

FIG. 3 schematically illustrates a block configuration of the server 200 and the robot 40. The robot 40b includes a sensor unit 156, a processing unit 152, a control target 155, a communication unit 158, and a display unit 157. The server 200 includes a processing unit 202, a storing unit 172, and a communication unit 208. The processing unit 202 includes an initial value setting unit 210, an external input data generation unit 230, a parameter processing unit 240, an operation decision unit 250, a switching control unit 260, and a recording control unit 270. The storing unit 172 stores operation decision rule 282, definition information 284, parameter initial value 286, latest parameter 288, recording format switching rule 290, and record data 292.

In the robot 40, the sensor unit 156 includes sensors such as a microphone 161, a 2D camera 163, a 3D depth sensor 162, and a distance sensor 164. Each sensor included in the sensor unit 156 continuously detects information. The sensor information detected by the sensor unit 156 is output to the processing unit 152. The 2D camera 163 is an example of an image sensor that continuously images an object, and imaging with visible light to generate video information. The 3D depth sensor 162 continuously emits an infrared pattern and analyzes the infrared pattern from the infrared image continuously captured by the infrared camera, thereby detecting outline of the object. The sensor unit 156 may further include various sensors such as a clock, a gyro sensor, a touch sensor, a motor feedback sensor, a remaining battery level detection sensor, an odor sensor, a temperature sensor, a humidity sensor, and a Global Positioning System (GPS) sensor.

The processing unit 152 is formed of a processor such as a CPU. The processing unit 152 controls to transmit, through the communication unit 158, sensor information continuously detected by each sensor included in the sensor unit 156, to the server 200. In addition, the processing unit 152 processes at least part of the sensor information continuously detected by each sensor included in the sensor unit 156 to generate information for recording. The processing unit 152 generates information in a first recording format or information in a second recording format having a larger information volume than the information in the first recording format. The information in the first recording format is information in a high-compression format, for example, and the information in the second recording format is information in a low-compression format, for example. For example, based on skeleton information continuously detected by the 3D depth sensor 162, the processing unit 152 generates shape data such as skeleton data of an object as information in the first recording format. In addition, the processing unit 152 generates full HD video data and audio data from the video information captured by the 2D camera 163 and audio information detected by the microphone 161. The video data of full HD is an example of moving image data having more information than the shape data of the object.

The communication unit 158 transmits the information in the first recording format or the information in the second recording format generated by the processing unit 152 to the server 200. In the server 200, the recording control unit 270 stores the information in the first recording format or the information in the second recording format received by the communication unit 208 from the robot 40 in the record data 292. The recording control unit 270 stores the information received from each robot 40 in association with information identifying each robot 40 in the record data 292.

In the robot 40, the communication unit 158 acquires the information stored in the record data 292 from the server 200. The communication unit 158 functions as a recording information reception unit that acquires information in the second recording format including moving image data, recorded by the recording control unit 270. The processing unit 152 generates a video to be presented to the user 30 based on the moving image data included in the information in the second recording format received by the communication unit 158. The processing unit 152 functions as a video generation unit that generates a video to be presented to the user 30.

In addition, the communication unit 158 receives operation information indicating operation content from the server 200. The processing unit 152 controls the control target 155 based on the operation content received by the communication unit 158. The control target 155 includes a speaker, a motor that drives each unit of the robot 40 such as limbs, a light emitting device, and the like. When having received information indicating speech content from the server 200, the processing unit 152 causes the speaker to output a voice in accordance with the received generation content. In addition, by controlling the drive motors of the limb portions, the processing unit 152 can control a part of the action of the robot 40. In addition, by controlling these motors, the processing unit 152 can express a part of the emotions of the robot 40.

In the server 200, the communication unit 208 outputs information received from the robot 40 to the processing unit 202. The initial value setting unit 210 stores the initial value of the parameter indicating the initial state of the neural network received by the communication unit 208, in the parameter initial value 286 in the storing unit 172. Note that the initial value of the parameter of the neural network may be determined in advance in the server 200, or may be changeable by the user 30 via the communication network 90.

The external input data generation unit 230 processes at least part of the sensor information received by the communication unit 208, generates input information from the outside of the neural network, and outputs the generated input information to the parameter processing unit 240. The parameter processing unit 240 calculates the neural network based on the input information and the current parameters 288 and the definition information 284 of the neural network stored in the storing unit 172.

The artificial neuron in the neural network includes: a plurality of artificial neurons in which the situation of the robot 40 is defined; a plurality of emotion artificial neurons in which a plurality of emotions of the robot 40 itself is defined; and a plurality of internal secretion artificial neurons in which a generation state of an internally secreted substance of the robot 40 itself is defined. Based on the input information generated by the external input data generation unit 230, the parameter processing unit 240 calculates a parameter representing an internal state of a plurality of artificial neurons in the neural network. For example, based on the input information generated by the external input data generation unit 230, the parameter processing unit 240 updates the parameters of the current internal state of the plurality of artificial neurons or the like in which the situation of the robot 40 is defined. In addition, the parameter processing unit 240 calculates a parameter of an internal state of another artificial neuron in the neural network. This makes it possible to calculate a parameter of the internal state of the emotion artificial neuron in which the emotion of "happy" is defined, for example. The parameter of the internal state of the emotion artificial neuron is an example of an index indicating the intensity of the emotion of "happy". Therefore, the parameter processing unit 240 can decide the intensity of the emotion in the control system based on the internal state of the emotion artificial neuron. In this manner, the parameter processing unit 240 functions as an emotion decision unit that decides the intensity of the emotion using the neural network based on at least part of the information detected by the sensor included in the sensor unit 156.

The parameters of the neural network calculated by the parameter processing unit 240 are supplied to the switching control unit 260 and the operation decision unit 250. The switching control unit 260 decides the recording format of the information to be generated by the processing unit 152 of the robot 40 based on the parameter supplied from the parameter processing unit 240. In a case where it is necessary to switch the recording format of the information generated by the processing unit 152, the switching control unit 260 controls to transmit, through the communication unit 208, an instruction to switch the recording format to the robot 40. In the robot 40, the processing unit 152 switches the recording format in accordance with the instruction received from the server 200.

For example, when having the processing unit 152 generate the information in the first recording format, the switching control unit 260 transmits, to the robot 40, an instruction to switch the recording format of the information to be generated by the processing unit 152 from the first recording format to the second recording format in response to the increase in the intensity of the emotion decided by the parameter processing unit 240. In this manner, the switching control unit 260 switches the recording format of the information recorded by the recording control unit 270 from the first recording format to the second recording format in response to the increase in the intensity of the emotion decided by the parameter processing unit 240. This makes it possible to leave, as a detailed record, the information when the emotion of the robot 40 has increased. In addition, in the robot 40, the processing unit 152 acquires moving image data in the second recording format acquired from the server 200, and generates a video to be presented to the user 30. This makes it possible for the user 30 to enjoy the information when the emotion of the robot 40 has increased, as a video.

In addition, the switching control unit 260 transmits, to the robot 40, an instruction to switch the recording format of the information to be generated by the processing unit 152 from the first recording format to the second recording format in response to the increase in the intensity of the emotion of the user 30. In this manner, the switching control unit 260 switches the recording format of the information recorded by the recording control unit 270 from the first recording format to the second recording format in response to the increase in the intensity of the emotion decided by the parameter processing unit 240. This makes it possible to leave, as a detailed record, the information when the emotion of the user 30 has increased. In addition, in the robot 40, the processing unit 152 acquires moving image data in the second recording format acquired from the server 200, and generates a video to be presented to the user 30. Therefore, the user 30 can enjoy the information when his/her emotion has increased, as a video. The emotion of the user can be detected based on a voice or facial expression detected from the user 30, for example. In addition, the switching control unit 260 may recognize a change in emotion of the user 30 based on detection of an impact by a touch sensor (not illustrated) included in the sensor unit 156. For example, in a case where an impact is detected by the touch sensor included in the sensor unit 156, the switching control unit 260 may recognize that the emotion of the user 30 has worsened.

Note that, when having the processing unit 152 generate the information in the second recording format, the switching control unit 260 transmits, to the robot 40, an instruction to switch the recording format of the information to be generated by the processing unit 152 from the second recording format to the first recording format in response to the decrease in the intensity of the emotion of the robot 40 or the user decided by the parameter processing unit 240. In this manner, the switching control unit 260 switches the recording format of the information recorded by the recording control unit 270 from the second recording format to the first recording format in response to the decrease in the intensity of the emotion decided by the parameter processing unit 240 or the decrease in the intensity of the emotion of the user.

In addition, the switching control unit 260 transmits, to the robot 40, an instruction to switch the recording format of the information generated by the processing unit 152 from the first recording format to the second recording format in a case where the emotion of the user 30 has been propagated to the robot 40 or in a case where the emotion of the robot 40 has been propagated to the user 30. This makes it possible to leave, as a detailed record, the information when the user 30 or the robot 40 propagates to the other party.

The switching control unit 260 switches, in accordance with a situation, a trigger for switching from the first recording format to the second recording format. For example, the switching control unit 260 switches, in accordance with the situation, the detection trigger at the time of switching from the first recording format to the second recording format.

The switching control unit 260 switches the detection trigger when having detected a topic of a conversation when the emotion value of the user 30 or the robot 40 exceeds a threshold, a keyword or wording included in the conversation, or a gesture of the user 30 or the robot 40, etc. based on data of a past conversation or the like.

For example, the switching control unit 260 sets a detection trigger based on past data when the emotion values of the user 30 or the robot 40 or both the user 30 and the robot 40 exceeded a threshold, and switches from the first recording format to the second recording format when having detected the detection trigger.

In addition, in the robot 40, the processing unit 152 acquires moving image data in the second recording format acquired from the server 200, and generates a video to be presented to the user 30. Therefore, the user 30 responds to the change in emotion becoming stronger.

When having the processing unit 152 generate the information in the second recording format, the switching control unit 260 transmits, to the robot 40, an instruction to switch the recording format of the information to be generated by the processing unit 152 from the second recording format to the first recording format in response to the change in the emotion of the robot 40 or the emotion of the user being settled (the change amount has become the threshold or less) or the emotion of the robot 40 or the emotion of the user having returned to the emotion before the change. In this manner, the switching control unit 260 switches the recording format of the information recorded by the recording control unit 270 from the second recording format to the first recording format in response to the settlement of the change in the emotion of the robot 40 or the emotion of the user.

In addition, when switching the recording format of the information to be generated by the processing unit 152 from the first recording format to the second recording format, the recording control unit 270 transmits, to the robot 40, an instruction to tag the information in the second recording format. This makes it possible for the user 30, when confirming the recorded information, to clearly recall the situation, etc. at the time from the tagged information. In addition, tagging makes it possible to easily find information even when searching for information related to a specific situation from the recorded information.

The operation decision rule 282 prescribes an operation to be performed by the robot 40 in association with the state of the robot 40. For example, the operation decision rule 282 prescribes the operation to be performed by the robot 40 in association with the internal state of the artificial neuron of the neural network. For example, the operation decision rule 282 prescribes an operation of uttering a word expressing happiness in association with a condition of a high state of the emotion artificial neuron defining an emotion of "happy". In addition, the operation decision rule 282 determines an operation at the time of having drowsiness in association with the condition of a high internal state of the internal secretion artificial neuron defining the internally secreted substance corresponding to drowsiness.

The internally secreted substance means a substance that is secreted in the body and transmits a signal, such as a neurotransmitter and a hormone. In addition, internal secretion means that an internally secreted substance is secreted in the body. However, the internally secreted substance of the robot 40 itself is one of information that influences the operation of the robot 40, and does not mean that the robot 40 actually generates the internally secreted substance. Similarly, the emotion of the robot 40 itself is one of information that influences the operation of the robot 40, and does not mean that the robot 40 actually has an emotion.

The operation decision unit 250 decides the operation of the robot 40 based on the operation prescribed in the operation decision rule 282 in association with an activation state or an internal state of each artificial neuron decided by the parameter processing unit 240. The operation information indicating the operation decided by the operation decision unit 250 is transmitted from the communication unit 208 to the robot 40. The processing unit 152 in the robot 40 controls the control target 155 to perform the operation indicated by the information received from the server 200. This makes it possible for the robot 40 to perform an appropriate operation corresponding to the current emotion of the robot 40.

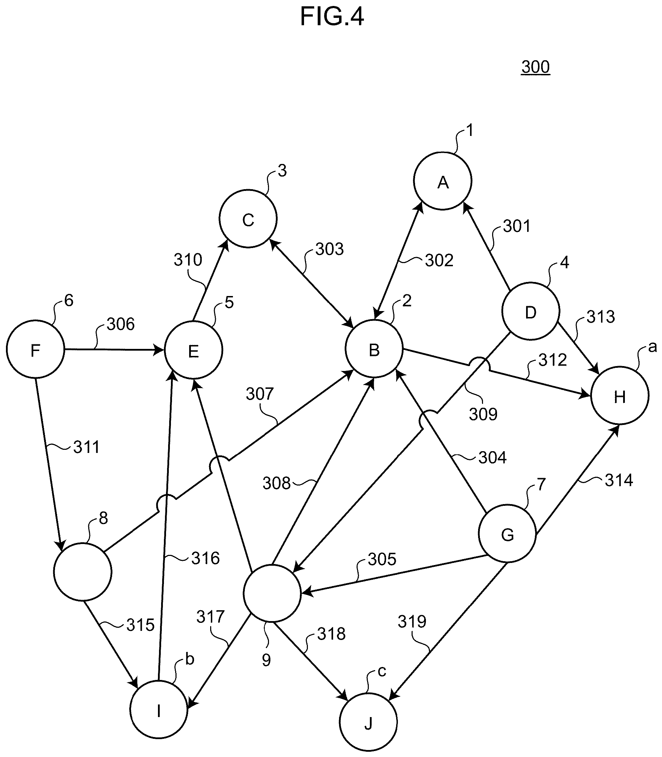

FIG. 4 schematically illustrates a neural network 300. The neural network 300 is an exemplary neural network for illustrating the operation of the parameter processing unit 240. The neural network 300 includes a plurality of artificial neurons, including an artificial neuron 1, an artificial neuron 2, an artificial neuron 3, an artificial neuron 4, an artificial neuron 5, an artificial neuron 6, an artificial neuron 7, an artificial neuron 8, an artificial neuron 9, an artificial neuron a, an artificial neuron b, and an artificial neuron c. The neural network 300 includes a plurality of artificial synapses, including an artificial synapse 301, an artificial synapse 302, an artificial synapse 303, an artificial synapse 304, an artificial synapse 305, an artificial synapse 306, an artificial synapse 307, an artificial synapse 308, an artificial synapse 309, an artificial synapse 310, an artificial synapse 311, an artificial synapse 312, an artificial synapse 313, an artificial synapse 314, an artificial synapse 315, an artificial synapse 316, an artificial synapse 317, an artificial synapse 318, and an artificial synapse 319. The artificial neuron corresponds to a neuron in a living body. The artificial synapse corresponds to a synapse in a living body.

The artificial synapse 301 connects the artificial neuron 4 and the artificial neuron 1 to each other. The artificial synapse 301 is an artificial synapse unidirectionally connected as indicated by an arrow of the artificial synapse 301. The artificial neuron 4 is an artificial neuron connected to an input of the artificial neuron 1. The artificial synapse 302 connects the artificial neuron 1 and the artificial neuron 2 to each other. The artificial synapse 302 is an artificial synapse bidirectionally connected as indicated by arrows at both ends of the artificial synapse 302. The artificial neuron 1 is an artificial neuron connected to an input of the artificial neuron 2. The artificial neuron 2 is an artificial neuron connected to an input of the artificial neuron 1.

In the present embodiment, the artificial neuron may be represented by N, and the artificial synapse may be represented by S. In addition, in identifying each artificial neuron, a superscript reference sign is used as the identification character. In addition, in the case of representing a certain artificial neuron, i or j may be used as the identification character. For example, Nⁱ represents a certain artificial neuron.

In addition, the artificial synapse may be identified using identification numbers i and j of two artificial neurons connected to the artificial synapse. For example, S⁴¹ represents an artificial synapse connecting N¹ and N⁴ to each other. In general, S^{ij} represents an artificial synapse that inputs an output of Nⁱ to N^{j}. Note that S^{ji} represents an artificial synapse that inputs an output of N^{j} to Nⁱ.

In FIG. 4, A to J indicate that the state of the robot 40 is defined. The state of the robot 40 includes the emotion of the robot 40, the generation state of internally secreted substances, the situation of the robot 40, and the like. As an example, N⁴, N⁶, and N⁷ are concept artificial neurons defining a concept representing the situation of the robot 40. For example, N⁴ is a concept artificial neuron to which the situation "the bell rang" is assigned. N⁶ is a concept artificial neuron to which the situation "charging has started" is assigned. N⁷ is a concept artificial neuron to which the situation "power storage level is threshold or less" is assigned.

N¹, N³, N^{b}, and N^{c} are emotion artificial neurons defining emotions of the robot 40. N¹ is an emotion artificial neuron to which an emotion of "happy" is assigned. N³ is an emotion artificial neuron to which the emotion of "sorrowful" is assigned. N^{b} is an emotion artificial neuron to which the emotion of "scared" is assigned. N^{c} is an emotion artificial neuron to which the emotion of "joyful" is assigned.

N², N⁵, and N^{a} are internal secretion artificial neurons defining an internal secretion state of the robot 40. N⁵ is an internal secretion artificial neuron to which a dopamine generation state is assigned. Dopamine is an example of an internally secreted substance involved in the reward system. That is, N⁵ is an example of an internal secretion artificial neuron involved in the reward system. N² is an internal secretion artificial neuron to which a serotonin developmental state is assigned. Serotonin is an example of an internally secreted substance involved in the sleep system. That is, N² is an example of an internal secretion artificial neuron involved in the sleep system. N^{a} is an internal secretion artificial neuron to which a noradrenaline developmental state is assigned. Noradrenaline is an example of an internally secreted substance involved in the sympathetic nervous system. That is, N^{a} is an internal secretion artificial neuron involved in the sympathetic nervous system.

The definition information 284 in the storing unit 172 stores information defining the state of the robot 40 as described above for each artificial neuron of a plurality of artificial neurons constituting the neural network. In this manner, the neural network 300 includes a concept artificial neuron, an emotion artificial neuron, and an internal secretion artificial neuron. The concept artificial neuron, the emotion artificial neuron, and the internal secretion artificial neuron are artificial neurons explicitly defining meanings such as a concept, emotion, and internal secretion. On the other hand, N⁸ and N⁹ are artificial neurons not defining the state of the robot 40. In addition, N⁸ and N⁹ are artificial neurons not explicitly defining meanings such as concept, emotion, and internal secretion.

Parameters of the neural network 300 include Iₜⁱ, which is an input to each Nⁱ of the neural network, Eₜⁱ, which is an input to Nⁱ from the outside of the neural network, parameters of Nⁱ, and parameters of Sⁱ.

The parameters of Nⁱ include: Sₜⁱ representing the status of Nⁱ; Vⁱmₜ representing the internal state of the artificial neuron represented by Nⁱ; Tⁱₜ representing a threshold of firing of Nⁱ; t_{f} representing the final firing time being the time when Nⁱ was last fired; Vⁱm_{tf} representing the internal state of the artificial neuron Nⁱ at the final firing time; and aₜⁱ, bₜⁱ, hₜⁱ which are increase/decrease parameters for output. The output increase/decrease parameter is an example of a parameter determining the time evolution of the output at the time of firing of the artificial neuron. In the present embodiment, the subscript t represents a parameter that can be updated with the progress of time. In addition, Vⁱmₜ is information corresponding to the membrane potential of the artificial neuron, and is an example of a parameter representing the internal state of the artificial neuron or output of the artificial neuron.

The parameters of S^{ij} include: BSₜ^{ij} representing the coupling coefficient of the artificial synapse of S^{ij}; t_{cf} representing the final synchronized firing time, which is the time when Nⁱ and Nⁱ connected to S^{ij} fired last in synchronization; BS^{ij}_{tcf} representing the coupling coefficient at the final synchronized firing time; and aₜ^{ij}, bₜ^{ij}, hₜ^{ij} which are increase/decrease parameters of the coupling coefficient. The increase/decrease parameter of the coupling coefficient is an example of a parameter determining time evolution of the coupling coefficient after the last synchronized firing of the two artificial neurons connected by the artificial synapse.

The parameter processing unit 240 updates the above-described parameters based on the input from the external input data generation unit 230 and the neural network, and decides the activation state of each artificial neuron. The operation decision unit 250 decides the operation of the robot 40 based on the internal state or the activation state of at least a part of artificial neurons determined by the value of the parameter of at least a part of artificial neurons among the plurality of artificial neurons in the neural network and based on the state defined for at least a part of artificial neurons by the definition information 284. The activation state can be either an activated state or a non-activated state. In the present embodiment, activation may be referred to as "firing", and non-activation may be referred to as "non-firing". As described below, the "firing" state is divided into an "rising phase" and a "falling phase" depending on whether the internal state is rising or not. "Non-firing", "rising phase", and "falling phase" are represented by a status Sti.

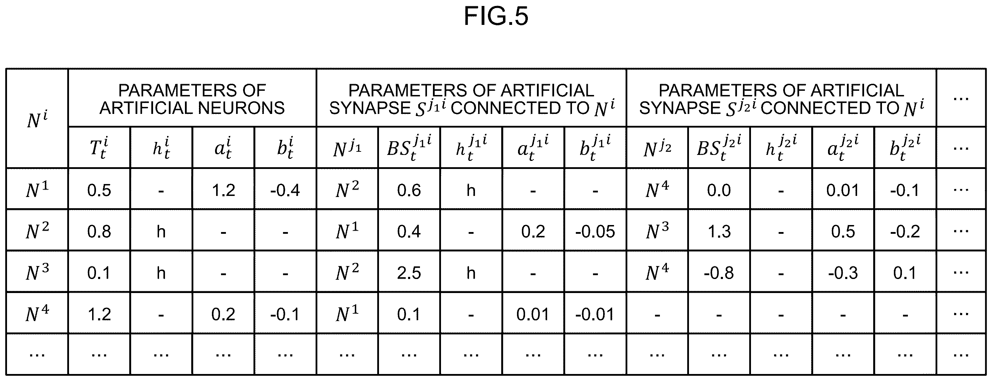

FIG. 5 schematically illustrates parameters of the neural network in a table format. Each neuron N has a threshold Tₜ and increase/decrease parameters ht, aₜ, and bₜ as parameters. In addition, each artificial synapse includes the coupling coefficient BSt and the increase/decrease parameters ht, at, and bₜ as parameters. In FIG. 5, for each Nⁱ, each parameter of all the artificial neurons directly connected to Nⁱ by the artificial synapse, and each parameter of the artificial synapse, are listed in one line.

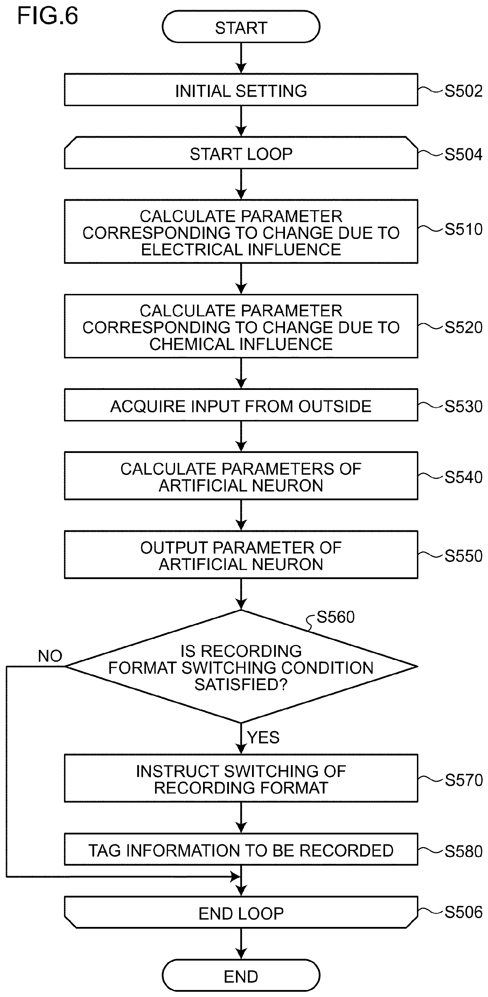

FIG. 6 schematically illustrates an operation flow of the server 200 when the robot 40 is activated or reset. When the server 200 receives that the robot 40 has been activated or reset, the parameter processing unit 240 performs initial setting of parameters of the neural network. For example, the parameter processing unit 240 acquires an initial value of the parameter from the storing unit 172, and generates parameter data of the neural network in a predetermined data structure (S502). In addition, a parameter value of the neural network at time t₀ is set. When the initial setting is completed, a loop related to time t is started in S504.

In S510, the parameter processing unit 240 calculates a parameter corresponding to the change caused by the electrical influence of the artificial synapse in the time step tₙ₊₁. Specifically, BSₜ^{ij} of certain Sij is calculated.

In S520, the parameter processing unit 240 calculates a parameter corresponding to the change caused by the chemical influence by the internally secreted substance in the time step tₙ₊₁. Specifically, calculations of changes in the parameters of Nⁱ, and S^{ij} influenced by the internal secretion artificial neurons are performed. More specifically, the calculations are performed, in the time step tₙ₊₁, to calculate the increase/decrease parameter and the threshold of the internal state of the artificial neuron Nⁱ influenced by the internal secretion artificial neuron, as well as the increase/decrease parameter and the coupling coefficient of S^{ij} influenced by the internal secretion artificial neuron.

In S530, the parameter processing unit 240 acquires an input from the outside of the neural network. Specifically, the parameter processing unit 240 acquires the output of the external input data generation unit 230.

In S540, the parameter processing unit 240 calculates the internal state of Nⁱ in the time step tₙ₊₁. Specifically, Vⁱmₜₙ₊₁ and the status Sₜₜⁱ are calculated. In S550, the value of each parameter at time tₙ₊₁ is stored in the parameter 288 of the storing unit 172. In addition, the value of each parameter at time tₙ₊₁ is output to the operation decision unit 250 and the switching control unit 260.

In S560, the switching control unit 260 determines whether the parameter of Nⁱ at the time step tₙ₊₁ satisfies the switching condition of the recording format of the data to be stored in the record data 292. When the parameter of Nⁱ at the time step tₙ₊₁ satisfies the switching condition of the recording format, the switching control unit 260 instructs the robot 40 to switch the recording format (S570). Subsequently, when switching from the first recording format to the second recording format, the recording control unit 270 instructs tagging of information in the second recording format (S580), and the processing proceeds to S506. In contrast, when the parameter of Nⁱ in the time step tₙ₊₁ does not satisfy the switching condition of the recording format in S560, the processing proceeds to S506.

In S506, the parameter processing unit 240 determines whether to end the loop. For example, in a case where the time indicated by the time step reaches a predetermined time or in a case where the sensor information from the robot 40 has not been received for a predetermined time, it is determined to end the loop. When the loop is not to be ended, the processing returns to S510, and the next time step is further calculated. When the loop is to be ended, this flow is ended.

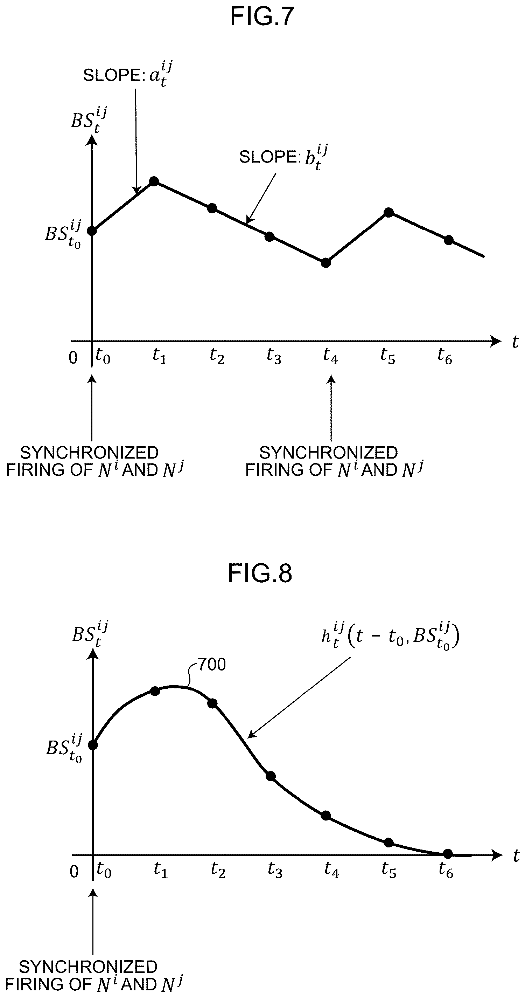

FIG. 7 is a diagram schematically illustrating calculation of a coupling coefficient of an artificial synapse. Here, a case where constants a^{ij} and b^{ij} are defined as initial values of the increase/decrease parameter will be described.

In a case where both Nⁱ and N^{j} have fired at both ends of S^{ij} at the time step of time tₙ, the parameter processing unit 240 calculates BSₜₙ₊₁^{ij} at time tₙ₊₁ by calculating as BSₜₙ₊₁^{ij} =BSₜₙ^{ij}+aₜₙ^{ij}×(tₙ₊₁-tₙ). In contrast, when neither Sⁱ nor S^{j} has fired in the time step at time tₙ, the coupling coefficient BSₜₙ₊₁^{ij} at time tₙ₊₁ is calculated as BSₜₙ₊₁^{ij}=BSₜₙⁱ+bₜₙ^{ij}×(tₙ₊₁-tₙ). When BSₜₙ₊₁^{ij} has a negative value, BSₜₙ₊₁^{ij} is set to 0. In S^{ij} where BS^{ij} is a positive value, at^{ij} is a positive value, and bt^{ij} is a negative value. In S^{ij} where BS^{ij} is a negative value, at^{ij} is a positive value, and bt^{ij} is a negative value.

As illustrated in FIG. 7, since synchronized firing has occurred in the artificial neurons at both ends at time t₀, BSₜ^{ij} increases at at₀^{ij} per unit time. In addition, since synchronized firing has not occurred at time t₁, BSₜ^{ij} decreases at |bₜ₁^{ij}| per unit time. In addition, due to the synchronized firing at time t₄, BSₜ^{ij} increases at aₜ₄^{ij} per unit time.

FIG. 8 schematically illustrates time evolution of a coupling coefficient in a case where a function hₜ^{ij} is defined as an increase/decrease parameter of the coupling coefficient. The hₜ^{ij} is defined at an elapsed time Δt(=t-t_{cf}) ≥ 0 from t_{cf}. hₜ^{ij} is a function of at least Δt and takes a value of a real number.

A function 700 illustrated in FIG. 8 is an example of ht^{ij}. The function 700 is a function of the coupling coefficients BS_{tcf}^{ij} and Δt at time t_{cf}. The function 700 monotonically increases in a case where Δt is smaller than a predetermined value, and monotonically decreases, as a gradual decrease, toward 0 in a case where Δt is larger than the predetermined value. The function 700 takes the value BS_{tcf}^{ij} at Δt=0.

FIG. 8 illustrates a coupling coefficient in a case where a function 700 is defined as an increase/decrease parameter of the coupling coefficient, indicating a coupling coefficient at synchronized firing of Nⁱ and N^{j} at both ends at time t₀. The parameter processing unit 240 calculates BSₜ^{ij} at each of the times t₁ to t₆ based on the function 700 and Δt. Synchronized firing of Nⁱ and N^{j} has not occurred within the time range of time t₁ to time t₆. Therefore, for example, after time t₂, the coupling coefficient monotonously decreases.

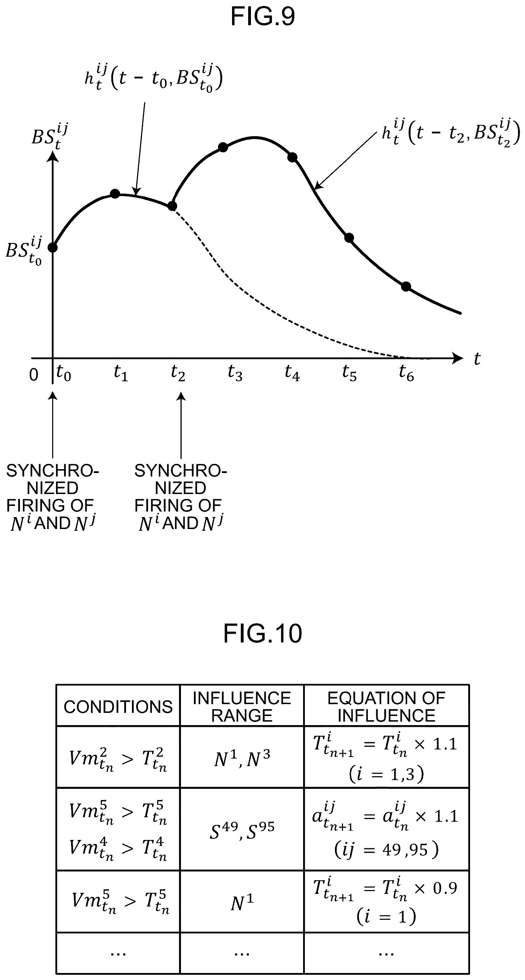

FIG. 9 schematically illustrates time evolution of the coupling coefficient when further synchronized firing of Nⁱ and N^{j} occurs at time t₂. The coupling coefficient is calculated similarly to FIG. 8 in a range of time t₀ to time t₂. When synchronized firing of Nⁱ and N^{j} further occurred at time t₂, the parameter processing unit 240 calculates a coupling coefficient at each of times, namely, times t₃ to t₆, in accordance with hₜ^{ij}(t-t₂, BSₜ₂^{ij}). In this manner, the coupling coefficient increases every time the synchronized firing is repeated. This makes it possible to obtain, as in the Hebb's law in a living body, an effect of strengthening artificial synapse connections. On the other hand, when the time duration with no occurrence of synchronized firing is long as illustrated in FIGS. 7 and 8, it is possible to obtain an effect that the artificial synapse connection is weakened.

FIG. 10 is a diagram schematically illustrating influence definition information defining a chemical influence given to a parameter. This influence definition information is used for calculation of a change in a parameter in S520 of FIG. 6. The definition information includes: a condition related to the internal state of the internal secretion artificial neuron; information specifying the artificial neuron or the artificial synapse having an influence; and an expression defining the content of the influence.

In the example of FIG. 10, an internal secretion artificial neuron N² is an internal secretion artificial neuron to which a drowsiness-inducing internally secreted substance is assigned. The definition information related to the internal secretion artificial neuron N² prescribes: a condition of "Vmₜₙ²>Tₜₙ²; "emotion artificial neurons N¹ and N³" as artificial neurons influenced by the internal secretion artificial neuron N²; and "Tₜₙ₊₁ⁱ=Tₜₙⁱ×1.1" as a formula determining the content of influence. With this configuration, in a case where Vmₜₙ² exceeds Tₜₙ², the parameter processing unit 240 increases the thresholds of the emotion artificial neurons N¹ and N³ at time tₙ₊₁ by 10%. This makes it possible, for example, to make it difficult to cause the emotion artificial neuron to fire in a case where drowsiness occurs. For example, by determining a neural network in which the output of the concept artificial neuron N⁷ defined as "the power storage level is the threshold or less" is connected to the input of the internal secretion artificial neuron N², it is possible to embody a phenomenon in which emotion is less likely to increase when the power storage level is low.

The internal secretion artificial neuron N⁵ is an internal secretion artificial neuron to which dopamine is assigned. The first definition information related to the internal secretion artificial neuron N⁵ prescribes: a condition of "Vmₜₙ⁵>Tₜₙ⁵and Vmₜₙ⁴>Tₜₙ⁴" , synapses "S⁴⁹ and S⁹⁵" as artificial synapses influenced by the internal secretion artificial neuron N⁵; and an expression "aₜₙ₊₁^{ij}=aₜₙ^{ij}×1.1" as an expression determining the content of influence. With this configuration, in a case where Vmₜₙ⁵ exceeds Tₜₙ⁵ and Vmₜₙ⁴ exceeds Tₑₙ⁴, the parameter processing unit 240 increases the increase/decrease parameter of the artificial synapses S⁴⁹ and S⁹⁵ at time tₙ₊₁ by 10%.

With this configuration, in a case where the internal secretion artificial neuron of the reward system has fired, when the concept artificial neuron N⁴ defining the situation "the bell rang" has fired, it is possible to strengthen the connection between the concept artificial neurons N⁴ and N⁵ via the implicit artificial neuron N⁹. This makes it easier for the internal secretion artificial neuron N⁵ of the reward system to fire when the bell rang.

In addition, the second definition information related to the internal secretion artificial neuron N⁵ prescribes: a condition of "Vmₜₙ⁵>Tₜₙ⁵ ; "emotion artificial neuron N¹ " as an artificial neuron influenced by the internal secretion artificial neuron N⁵; and "Tₑₙ₊₁ⁱ=Tₑₙⁱ×1.1" as a formula determining the content of influence. With this configuration, in a case where Vmₜₙ⁵ exceeds Tₜₙ⁵, the parameter processing unit 240 decreases the increase/decrease parameter of the artificial neuron N¹ at time tₙ₊₁ by 10%. This makes it easier for the emotion of happy to fire when the internal secretion artificial neuron N⁵ of the reward system has fired.

With such a definition defining the influence on the internal secretion artificial neuron of the reward system, it is possible to establish a conditioning that the robot 40 takes an action expressing happiness only by ringing a bell after repetition of charging the robot 40 while ringing the bell.

Note that the influence definition information is not limited to the example of FIG. 10. For example, a condition to be defined may be a condition that the internal state of the artificial neuron is a threshold or less. In addition, the condition to be defined may be a condition related to the status of the artificial neuron, for example, a condition related to a rising phase, a falling phase, or non-firing. In addition, the range of influence can be defined as "all artificial synapses connected to a specific artificial neuron" in addition to directly designating an artificial neuron or an artificial synapse. In addition, the formula of influence may be defined as a formula, in a case where the target is an artificial neuron, being a formula of adding a constant to the threshold or multiplying the increase/decrease parameter of the internal state by a constant, in addition to a formula of multiplying the threshold by a constant. In addition, in a case where the target is an artificial synapse, it is allowable to define a formula of multiplying the coupling coefficient by a constant, in addition to multiplying the increase/decrease parameter by a constant.

The influence definition information is stored in the definition information 284 of the storing unit 172. In this manner, the storing unit 172 stores the influence definition information defining the influence of at least one of the internal state and the firing state of the internal secretion artificial neuron on the parameter of at least one of another artificial neuron and another artificial synapse, which are not directly connected to the internal secretion artificial neuron by the artificial synapse. Based on at least one of the internal state and the firing state of the internal secretion artificial neuron and the influence definition information, the parameter processing unit 240 updates the parameter of at least one of the another artificial neuron and the another artificial synapse, which are not directly connected to the internal secretion artificial neuron through the artificial synapse. In addition, the parameter of the another artificial neuron influenced by at least one of the internal state and the firing state of the internal secretion artificial neuron can include at least one of parameters regarding the another artificial neuron, namely, a parameter determining a threshold, a parameter determining a firing state, and a parameter determining time evolution of an output at the time of firing, of the another artificial neuron. In addition, the parameter of the artificial synapse influenced by at least one of the internal state and the firing state of the internal secretion artificial neuron can include at least one of a parameter determining a coupling coefficient of the artificial synapse and a parameter determining time evolution of the coupling coefficient after the latest synchronized firing of two artificial neurons connected via the artificial synapse. The influence definition information includes information determining the influence of the firing state of the internal secretion artificial neuron associated with the reward system on the threshold of the emotion artificial neuron. When the internal secretion artificial neuron has fired, the parameter processing unit 240 updates the threshold of the emotion artificial neuron in accordance with the influence definition information.

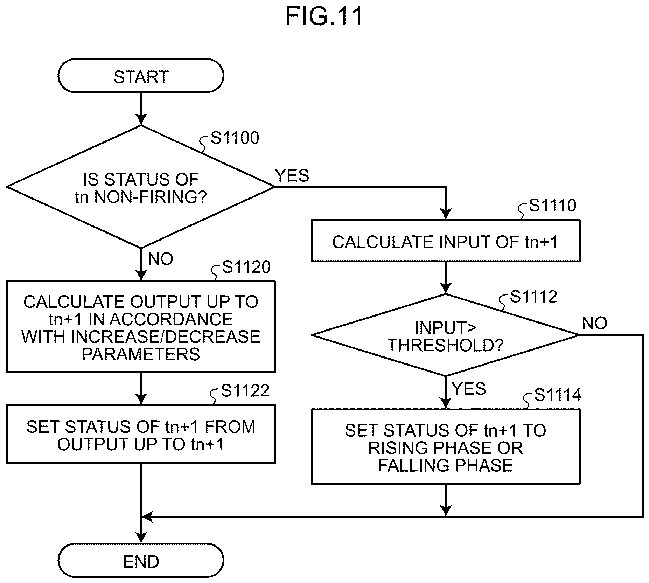

FIG. 11 illustrates a flowchart for calculating Vₜₙ₊₁ⁱ and Sₜₙ₊₁ⁱ. The processing of this flowchart can be applied to a part of the processing in S540 of FIG. 6. In S1100, the parameter processing unit 240 determines whether Sₜₙⁱ indicates non-firing.

In a case where Sₜₙⁱ indicates non-firing, the parameter processing unit 240 calculates an input Iₜₙ₊₁ⁱto Nⁱ (S1110). Specifically, when an input from the outside of the neural network is not connected to Nⁱ, the calculation is performed by Iₜₙ₊₁ⁱ =ΣⱼBSₜₙ₊₁^{ji}×Vmₜₙ^{j}×f(Sₜₙ^{j}). When an input from the outside of the neural network is connected to Nⁱ, it is calculated by Iₜₙ₊₁ⁱ=ΣⱼBSₜₙ₊₁^{ji}× Vmₜₙ^{j}×f (Sₜₙ^{j})+Eₜₙ₊₁ⁱ. Here, Eₜₙⁱ is an input at time tₙ from the outside of the neural network.

In addition, f(S) returns 0 when S is a value indicating non-firing, and returns 1 when S is a value indicating a rising phase or a falling phase. This model corresponds to a model in which a synapse transmits an action potential only when a neuron has fired. Note that f(S) =1 may be returned. This corresponds to a model that transmits the membrane potential regardless of the firing state of the neuron.

In S1112, the parameter processing unit 240 determines whether Iₜₙ₊₁ⁱ exceeds Tₜₙ₊₁ⁱ. When Iₜₙ₊₁ⁱ exceeds Tₜₙ₊₁ⁱ, the parameter processing unit 240 calculates Vmₜₙ₊₁ⁱ based on the increase/decrease parameter and sets Sₜₙ₊₁ⁱ to a value indicating the rising phase or the falling phase in accordance with Vmₜₙ₊₁ⁱ (S1114), so as to end this flow.

When Sₜₙⁱ is the rising phase or the falling phase in S1100, the parameter processing unit 240 calculates Vmₜₙ₊₁ⁱ (S1120). In a case where Vmₜⁱ has reached Vmin by tₙ₊₁, the parameter processing unit 240 sets Sₜₙ₊₁ⁱ to a value indicating non-firing, and in a case where Vmₜⁱ has not reached Vmin by tₙ₊₁, the parameter processing unit 240 sets Sₜₙ₊₁ⁱ to a value of the rising phase or the falling phase, and ends this flow. The parameter processing unit 240 sets the value of the falling phase to Sₜₙ₊₁ⁱ when Vmₜⁱ has reached Vmax by tₙ₊ᵢ, and sets the value of the rising phase to Sₜₙ₊₁ⁱ when Vmₜⁱ has not reached Vmax by tₙ₊₁.

In this manner, when Nⁱ is firing, even when the output lowers to the threshold or less, the output of Nⁱ does not depend on the input. Such a period corresponds to an absolute refractory period in a neuron of a living body.

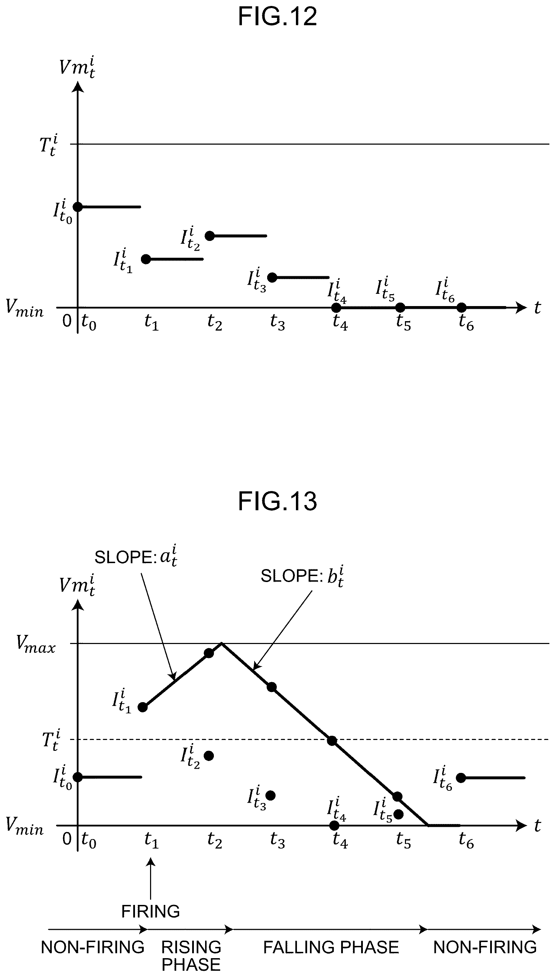

FIG. 12 is a diagram schematically illustrating a calculation example of Vtⁱ in a case where Nⁱ does not fire.

Nⁱ indicates non-firing in the time step at time t₀. When Iₜ₁ⁱ at time t₁ is Tₜ₁ⁱ or less, the parameter processing unit 240 calculates Vₜ₁ⁱ at time t₁ by Vₜ₁ⁱ=Iₜ₁ⁱ, and calculates Vtⁱ in a period from time t₀ to t₁ by Vₜⁱ=Iₜ₀ⁱ. Similarly, the parameter processing unit 240 maintains the value of Vₜⁿ calculated at the time step tₙ until the next time step, and changes the value of Vₜⁿ to Iₜₙ₊₁ at Vₑₙ₊₁.

FIG. 13 is a diagram schematically illustrating a calculation example of Vⁱₜ in a case where Nⁱ fires. FIG. 13 is a calculation example in a case where the constants aⁱ and bⁱ are defined.

Nⁱ indicates non-firing in the time step at time t₀. When Iₜ₁ⁱ at time t₁ exceeds Tₜ₁ⁱ, the parameter processing unit 240 calculates Vₜ₁ⁱ at time t₁ by Vₜ₁ⁱ=Iₜ₁ⁱ, and calculates Vₜⁱ in a period from time t₀ to t₁ by Vₜⁱ=Iₜ₀ⁱ. Here, Iₜ₁ⁱ at time t₁ is assumed to be Vmax or less. In a case where Iₜ₁ⁱ at time t₁ exceeds Vmax, it is assumed that Iₜ₁ⁱ=Vmax is satisfied.

As illustrated in FIG. 13, the parameter processing unit 240 increases Vₜⁱ by at^{ij} per unit time during a period after time t₁ until the time Vₜⁱ reaches Vmax. In addition, the parameter processing unit 240 decides the status Sₜⁱ of Nⁱ in this period as the rising phase.

In addition, when Vₜⁱ reaches Vmax, Vₜⁱ is to be decreased by |bₜⁱ| per unit time during a period until Vₜⁱ reaches Vmin. In addition, the parameter processing unit 240 decides the status of Nⁱ in this period as the falling phase. When Vₜⁱ reaches Vmin, Vₜ₆ⁱ at the next point of time is calculated by Vₜ₆ⁱ=Iₜ₆ⁱ. In addition, the status after Vₜⁱ reaches Vmin is decided to be non-firing.

When the status of Nⁱ is in the falling phase, Vmₜⁱ does not depend on Iₜⁱ even if calculated Vmₜⁱ falls below Tₜⁱ. Even if Vmₜⁱ falls below Tₜⁱ, the parameter processing unit 240 calculates Vmₜⁱ in accordance with the increase/decrease parameter until Vmₜⁱ reaches Vmin.

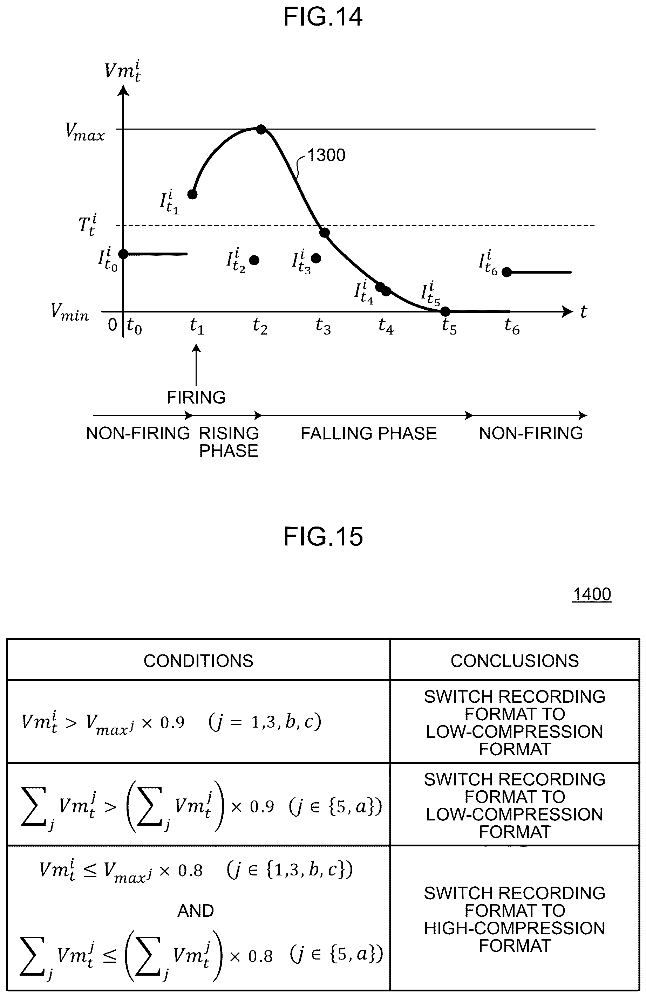

FIG. 14 is a diagram schematically illustrating time evolution of a coupling coefficient in a case where a function hₜⁱ is defined as an increase/decrease parameter of Nⁱ. In general, hₜⁱ is defined at an elapsed time Δt(=t-t_{f}) ≥ 0 from a firing time t_{f}. hₜⁱ is a function of at least Δt. hₜⁱ takes a real number value, and a value range of hₜⁱ is Vmin or more and Vmax or less.

A function 1300 illustrated in FIG. 14 is an example of hₜⁱ. The function 1300 is a function of Vm_{tf}ⁱ and Δt at time t_{f}. The function 1300 monotonically increases in a case where Δt is smaller than a predetermined value, and monotonically decreases in a case where Δt is larger than the predetermined value. The function 1300 takes a value Vm_{tf}ⁱ at Δt=0.

FIG. 14 illustrates an output in a case where a function 1400 is defined as an increase/decrease parameter of the internal state and Nⁱ has fired at time t₁. The parameter processing unit 240 calculates Vmti at each of the times t₁ to t5 based on the function 1400, Δt, and Vm_{f}ⁱ. Since Vmₜⁱ has reached Vmin at time t₅, Vmⁱ=Iₜ₆ⁱ is established at time t₆.

FIG. 15 illustrates an example of rule 1400 stored in the recording format switching rule 290 in a table format. The rule 1400 defines an operation of switching the information recording format, that is "switching to a low-compression format" when at least a first condition that Vmti of any of N¹, N³, N^{b}, and N^{c} exceeds a threshold is satisfied. With this configuration, in a case where information is recorded in the high-compression format, and when a state in which the first condition is not satisfied has turned to a state in which the first condition is satisfied, the switching control unit 260 determines to switch the recording format of the information to the low-compression format. An example of the threshold is a value obtained by multiplying Vmax of each N^{j} by a constant 0.9. The threshold may be higher than Tit.

The rule 1400 also defines an operation of switching the data recording format, that is, "switching to the low-compression format" when at least a second condition that the total value of Vmₜⁱ of N⁵ and N^{a} exceeds the threshold is satisfied. With this configuration, in a case where information is recorded in the high-compression format, and when a state in which the second condition is not satisfied has turned to a state in which the second condition is satisfied, the switching control unit 260 determines to switch the recording format of the information to the low-compression format. An example of the threshold is a value obtained by multiplying the total value of Vmax of each N^{j} by a constant 0.9. The threshold may be higher than the total value of Tⁱₜ of each N^{j}.

N¹, N³, N^{b}, and N^{c} are emotion artificial neurons in which emotions of "happy", "sorrowful", "scared", and "joyful" are defined, respectively. Accordingly, the intensity of the emotion is decided based on the internal state of the emotion artificial neuron in the parameter processing unit 240, and the recording format can be switched to the low-compression format in accordance with an event in which the decided intensity of the emotion exceeds the predetermined threshold.

N5 and Na are internal secretion artificial neurons in which internally secreted substances of "dopamine" and "noradrenaline" are defined, respectively. The total value of the parameters of the internal state of these internal secretion artificial neurons is an example of an index representing the intensity of emotion, "excitement". Accordingly, the intensity of the emotion is decided based on the internal state of the internal secretion artificial neuron in the parameter processing unit 240, and the recording format can be switched to the low-compression format in accordance with an event in which the decided intensity of the emotion exceeds the predetermined threshold.

In addition, the rule 1400 defines an operation of switching the data recording format, that is, "switching to the high-compression format" when a third condition that Vmₜⁱ of any of N¹, N³, N^{b}, and N^{c} is the first threshold or less, and the total value of Vmₜⁱ of N⁵ and N^{a} is the second threshold or less is satisfied. Accordingly, in a case where information is recorded in the low-compression format, and when a state in which the third condition is not satisfied has turned to a state in which the third condition is satisfied, the switching control unit 260 determines to switch the recording format of the information to the high-compression format. In this manner, the recording format can be switched to the high-compression format in accordance with an event in which the intensity of the emotion becomes a predetermined threshold or less.

The first threshold of the third condition is a value obtained by multiplying Vmax of each N^{j} by a constant 0.8. In addition, the second threshold of the third condition is a value obtained by multiplying the total value of Vmax of each N^{j} by a constant 0.8. In this manner, the description is an exemplary case where the first threshold of the third condition is smaller than the threshold of the first condition and the second threshold of the third condition is smaller than the threshold of the second condition. However, the first threshold may be the same as the threshold of the first condition, and the second threshold may be the same as the threshold of the second condition. The first threshold of the third condition may be higher than Tⁱₜ of each Nⱼ. In addition, the second threshold of the third condition may be higher than the total value of Tⁱₜ of each N^{j}. The threshold of each condition is not limited to these examples, and can be determined by adopting various values.

According to the system 20, the robot 40 continuously transmits information in a high-compression format such as skeleton data to the server 200 and causes the server 200 to record the transmitted information during a period in which the robot 40 is not in a significantly high emotional state. The information such as continuous skeleton data recorded in the server 200 can be used at the time of analyzing the memory of the robot 40. When the emotion of the robot 40 has been significantly raised, the robot 40 starts transmitting full HD video data and the audio data, and causes the server 200 to record information in a low-compression format including the full HD video data and the audio data in addition to the skeleton data during a period in which the highly emotional state with a certain value or more continues. Subsequently, for example, in a case where the user 30 requests the robot 40 to provide a video of memories of the robot 40, the robot 40 requests the server 200 to transmit full HD video data and audio data, and provides the video data and the audio data received from the server 200 to the user 30.

In this manner, according to the system 20, the high-quality video data of the scene in which the robot 40 held a strong emotion can be accumulated in the server 200. On the other hand, in a case where the robot 40 does not hold a strong emotion, simplified information such as skeleton data can be accumulated in the server 200. In this manner, like a human, the robot 40 can leave its clear memories at the time of holding a strong emotion, and can leave simplified memories at the time of not holding a strong emotion.

While the present embodiment uses "happy", "sorrowful", "scared", "joyful", and "excited" as emotions, the emotions handled by the system 20 are not limited thereto. In addition, in the present embodiment, "dopamine", "serotonin", and "noradrenaline" have been described as internally secreted substances, but the internally secreted substances handled by the system 20 are not limited thereto.

In addition, the function of the server 200 may be implemented by one or more computers. At least some functions of the server 200 may be implemented by a virtual machine. In addition, at least a part of the functions of the server 200 may be implemented by a cloud. Among the functions of the server 200, the functions of the components other than the storing unit 172 can be implemented by the CPU operating based on the program. For example, at least a part of the processing described as the operation of the server 200 can be implemented by the processor controlling each piece of hardware (for example, a hard disk, memory, or the like) of the computer according to the program. In this manner, at least a part of the processing of the server 200 can be implemented by cooperative operation of each piece of hardware including the processor, the hard disk, and the memory, with the program by the processor operating according to the program to control each piece of hardware. That is, the program can allow the computer to function as each component of the server 200. Similarly, among the components of the robot 40, the functions of the components other than the control target 155 and the sensor unit 156 can be implemented by the CPU operating based on a program. That is, the program can allow the computer to function as each component of the robot 40. Note that the computer may load a program controlling the execution of the above-described processing, operate according to the loaded program, and execute the processing. The computer can load the program from a computer-readable recording medium storing the program. In addition, the program may be supplied to the computer through a communication link, and the computer may load the program supplied through the communication link.

In the embodiment described above, the server 200 different from the robot 40 is responsible for the processing of the neural network. In addition, the server 200 different from the robot 40 stores information such as video data. However, the robot 40 itself may be responsible for the function of the server 200 such as processing of a neural network. In addition, the robot 40 itself may store information such as video data. The robot 40 is an example of a device to be a control target of the server 200. The device to be a control target to be controlled is not limited to the robot 40, and various devices such as home electric appliances, vehicles, and toys can be applied as the control target.

### (Second embodiment)

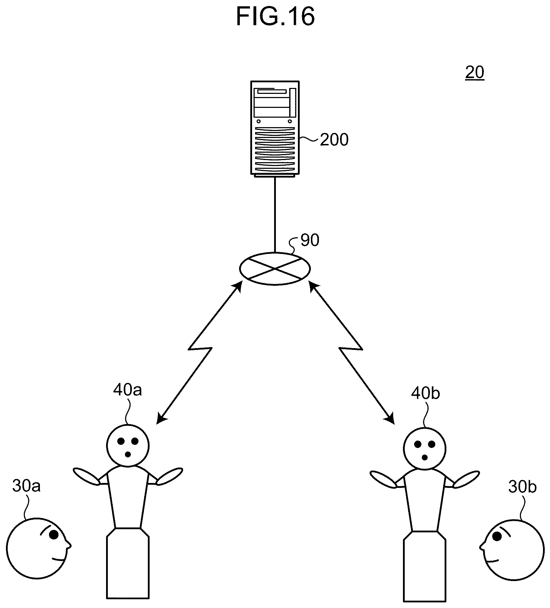

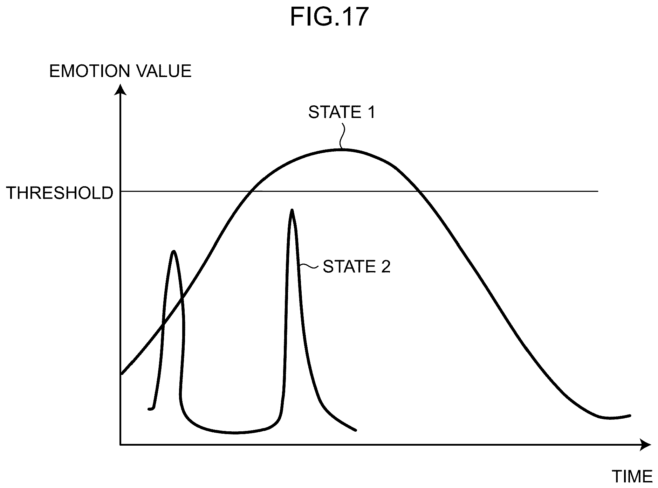

Next, a second embodiment will be described. Here, portions different from those of the first embodiment will be mainly described. The description of the configuration similar to that of the first embodiment will be omitted. FIG. 16 schematically illustrates an example of a system 20 according to the second embodiment. FIG. 17 is a diagram illustrating an example of an emotion value change. The system 20 includes a server 200, a robot 40a, and a robot 40b. The robot 40a and the robot 40b communicate with the server 200 to exchange information through a communication network 90

The robot 40 has an emotion value indicating its own emotion. For example, the robot 40 has emotion values indicating the intensity of each emotion such as "happy", "joyful", "sorrowful", "scared", and "excited". The emotion value of the robot 40 is decided by the server 200. The server 200 causes the robot 40 to perform an operation corresponding to the decided emotion. For example, when having a conversation with the user 30 in a state where the robot 40 has a large emotion value of excitement, the robot 40 is caused to make an utterance at a high speed. In this manner, the robot 40 can express its own emotion by action or the like.

The server 200 updates the current state of the robot 40 using a neural network based on the detection information received from the robot 40. The state of the robot 40 includes the emotion of the robot 40. Accordingly, the server 200 uses the neural network to decide the emotion of the robot 40.

In addition, the robot 40 acquires various types of information related to the user 30. For example, the robot 40 captures an image with a camera function to acquire a video of the user 30. In addition, the robot 40 acquires various types of information related to the surroundings by sensors of the robot 40. For example, the robot 40 acquires surrounding information, being information regarding objects existing in the surroundings, smell, temperature, humidity, position information, weather, the number of people in the surroundings, and their facial expressions. In addition, the robot 40 detects an event from various types of information related to the user 30 and the surroundings.

The server 200 stores various types of information related to the user 30 and the surroundings received from the robot 40 in association with the emotion of the robot 40. For example, the server 200 tags various types of information related to the user 30 and the surroundings with information regarding the emotion value of the robot 40, and stores the tagged information. This makes it possible for the server 200 to leave, as a record, the emotion at the time of acquisition of information in association with various types of information related to the user 30 and the surroundings.

In addition, in a case where an event is detected from various types of information related to the user 30 and the surroundings, the server 200 stores the degree of emotion of the robot 40 and the event in association with each other. The server 200 tags the event information with the information of the emotion value of the robot 40 and stores the tagged information. This makes it possible for the server 200 to leave, as a record, the emotion at the time of acquisition of information in association with the event.

When outputting the stored information from the robot 40, the server 200 performs control to change one or both of the action of the robot 40 and the output timing of the information in accordance with the emotion associated with the information. This makes it possible for the user 30 to feel the emotion associated with the information from the action and the output timing when the robot 40 outputs the information. In this manner, the server 200 can cause the robot 40 to output the stored information in accordance with the emotion associated with the information.

In addition, the server 200 controls a preservation period of the information in accordance with the emotion associated with the stored information. For example, the server 200 performs control such that information associated with a strong emotion is to be preserved for a long period of time and information associated with a weak emotion is to be preserved for a short time. This makes it possible to preserve information that is memorable for the user 30 for a long time, while erasing information that is not memorable for the user 30 in a short time. In this manner, the server 200 can appropriately store information in accordance with the associated emotion.

In addition, the robot 40 causes the server 200 to record video data, etc. of the user 30 acquired by the camera function. The robot 40 acquires video data, etc. from the server 200 as necessary, and provides the video data, etc. to the user 30. The robot 40 generates video data and causes the server 200 to record the generated video data such that, the higher the intensity of its own emotion, the more the information volume in the video data to be generated. For example, in a case where information in a high-compression format such as skeleton data is recorded, the robot 40 switches, in response to the emotion value of its own excitement exceeding a threshold, to recording of information in a low-compression format such as an HD moving image. According to the system 20, it is possible to leave high-definition video data when the emotion of the robot 40 has increased, as a record. In addition, the robot 40 generates video data and causes the server 200 to record the generated video data such that, the higher the intensity of the emotion of the user 30, the more the information volume in the video data to be generated. Specifically, in a case where information in a high-compression format such as skeleton data is recorded, the robot 40 switches, in response to the emotion value of excitement of the user 30 exceeding a threshold, to recording of information in a low-compression format such as an HD moving image. According to the system 20, it is possible to leave high-definition video data when the emotion of the user 30 has increased, as a record.

In addition, even in a case where the intensity of the emotion of the robot or the user is not strong as in state 2 of FIG. 17, when the emotion of the robot 40 or the emotion of the user has rapidly changed, the robot 40 generates video data having a large information volume and causes the server 200 to record the generated data. For example, when information in a high-compression format such as skeleton data is being recorded, the robot 40 switches to the recording of information in a low-compression format such as an HD moving image in accordance with the event in which the change in the emotion value exceeds the threshold, even when the emotion value of excitement of the robot 40 or the user is the threshold or less. According to the system 20, it is possible to leave, as a record, high-definition video data when emotions of the robot 40 and the user 30 have changed drastically. In addition, the robot 40 may change the information volume of the video data in accordance with the degree of change in emotion. Specifically, the robot 40 sets the compression rate of the video data such that, the larger the degree of change in the emotion of the robot 40 or the user, the lower the compression rate of the video data will be. As another example, the robot 40 may change the format of information to be recorded such as text alone → image alone → voice and image → low quality video → high quality video, in the ascending order of the degree of change in the emotion of the robot 40 or the user. In addition, the robot 40 is not limited to changing the compression rate or the format of the information, and may change the length and data amount of the video data. This makes it possible to leave, as a record, video data with higher definition when the emotion of the robot 40 or the user 30 has changed more drastically.

In addition, the robot 40 tags information to be recorded when the emotion value of itself or the robot 40, or when a change in the emotion value exceeds a threshold. Specifically, the robot 40 tags the video data with information detected by a sensor of the robot 40 or information regarding the user's or own emotion value. The information to be tagged includes, for example, surrounding information (information regarding objects existing in the surroundings, and the like), smell, temperature, humidity, position information, weather, the number of people in the surroundings, facial expressions, emotions, and the like. This makes it possible for the user 30, when confirming the recorded information, to clearly recall the situation, etc. at the time from the tagged information. In addition, tagging makes it possible to easily find information even when searching for information related to a specific situation from the recorded information.

In addition, even in a case where the intensity of the emotion of the robot or the user is not strong as in state 2 of FIG. 17, when the emotion of the robot 40 or the emotion of the user has rapidly changed, the robot 40 generates video data having a large information volume and causes the server 200 to record the generated data. For example, when information in a high-compression format such as skeleton data is being recorded, the robot 40 switches to the recording of information in a low-compression format such as an HD moving image in accordance with the event in which the change in the emotion value exceeds the threshold, even when the emotion value of excitement of the robot 40 or the user is the threshold or less. According to the system 20, it is possible to leave, as a record, high-definition video data when emotions of the robot 40 and the user 30 have changed drastically. In addition, the robot 40 may change the information volume of the video data in accordance with the degree of change in emotion. Specifically, the robot 40 sets the compression rate of the video data such that, the larger the degree of change in the emotion of the robot 40 or the user, the lower the compression rate of the video data will be. As another example, the robot 40 may change the format of information to be recorded such as text alone → image alone → voice and image → low quality video → high quality video, in the ascending order of the degree of change in the emotion of the robot 40 or the user. In addition, the robot 40 is not limited to changing the compression rate or the format of the information, and may change the length and data amount of the video data. This makes it possible to leave, as a record, video data with higher definition when the emotion of the robot 40 or the user 30 has changed more drastically.

In addition, the robot 40 may change information to be stored in accordance with continuity of change in emotions of the robot 40 or in the user 30 as in state 1 of FIG. 17. For example, in a case where a cumulative value of the emotion values within a predetermined time exceeds a threshold, the robot 40 generates video data having a large information volume and causes the server 200 to record the generated data. In addition, the robot 40 may change information to be stored in accordance with a combination of ups and downs in the change (inclination) in emotion, or the degree of the inclination, within a predetermined time. For example, in a case where the inclination indicating the change in the emotion value is a combination of sudden rise → moderate for a certain time → sudden fall, occurring within a predetermined time, the robot 40 generates video data having a large information volume and causes the server 200 to record the generated data. With this configuration, for example, regarding a scene where the user is nervous due to pressure or the like, it is possible to leave video data in a situation where the user feels the time long even though the absolute value of the emotion is not relatively large (where the emotion value of a certain value or more continues for a predetermined time) as a record.

In addition, based on a newly decided emotion, the robot 40 updates the emotion decided in the past associated with information detected in the past, including an element common to the newly detected information, based on an element related to the newly decided emotion. For example, in a case where the intensity of the newly decided emotion exceeds a predetermined threshold, the robot 40 updates the emotion decided in the past associated with information detected in the past, including an element common to the newly detected information, based on an element related to the newly decided emotion. This makes it possible to generate various emotions in consideration of a change in a relationship with a target using the intensity of the emotion decided in accordance with the situation of the person or the event learned in the past and the current situation.

In addition, for example, in a case where the type of the newly decided emotion has a predetermined change, the robot 40 updates the emotion decided in the past associated with information detected in the past, including an element common to the newly detected information, based on an element related to the newly decided emotion. This makes it possible to generate various emotions in consideration of a change in a relationship with a target using the change in the emotion decided in accordance with the situation of the person or the event learned in the past and the current situation.

In addition, for example, the robot 40 updates the emotion decided in the past to an emotion corresponding to the intensity of the newly decided emotion. This makes it possible to update an emotion in accordance with the intensity of the decided emotion and generate various emotions in consideration of a change in a relationship with the target.

In addition, for example, the robot 40 updates the emotion decided in the past to an emotion corresponding to an information volume stored in association with the newly decided emotion. This makes it possible to update the emotion in accordance with the information volume stored in association with the decided emotion and generate various emotions in consideration of the change in the relationship with the target.

In addition, for example, the robot 40 updates the emotion decided in the past to an emotion corresponding to the time period during which the information detected in the past is stored, including an element common to the newly detected information, associated with the newly decided emotion. This makes it possible to update an emotion in accordance with the time period during which the information being an update target is stored and generate various emotions in consideration of a change in the relationship with the target.

In addition, for example, the robot 40 can perform update processing by combining the intensity and type of the newly decided emotion. This makes it possible to generate various emotions in consideration of a change in a relationship with a target using the change and intensity of the emotion decided in accordance with the situation of the person or the event learned in the past and the current situation.

In addition, for example, the information detected by the sensor provided in the robot 40 includes elements such as surrounding information, position information, date and time, weather, temperature, temperature, scenery, smell, sound, the number of people in the surroundings, a person, facial expression of the person, and behavior of a person. This makes it possible to generate various emotions in consideration of a change in a relationship with a target using the emotion decided after specifying the similarities between the situation of the person or the event learned in the past and the current situation.

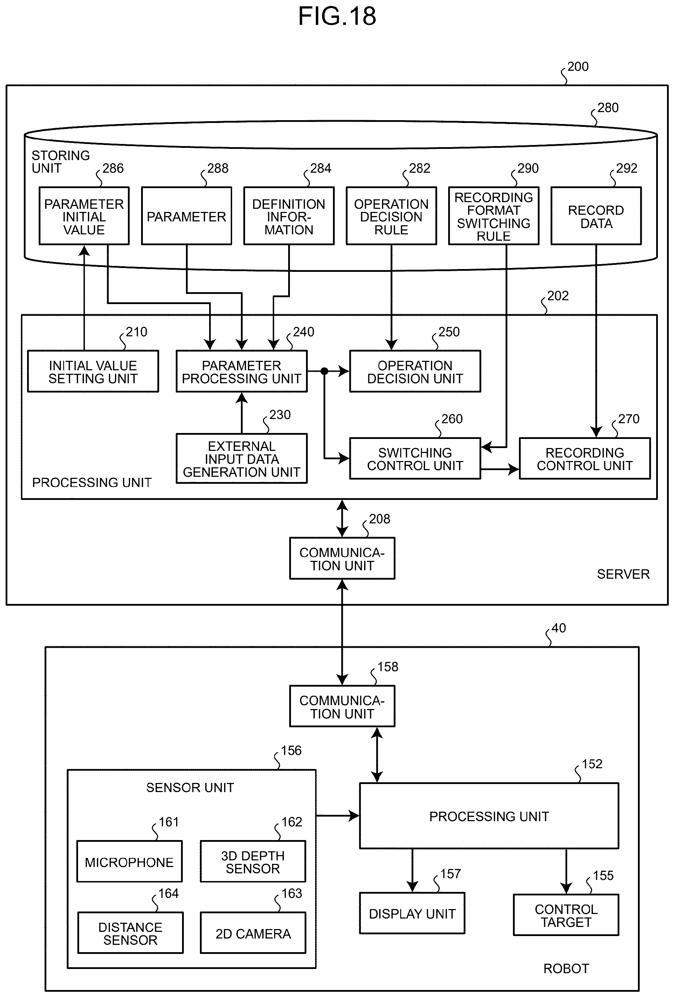

FIG. 18 schematically illustrates a block configuration of the server 200 and the robot 40. FIG. 18 will mainly describe processing related to the processing unit 152 and the processing unit 202.

The processing unit 152 detects an event from various types of information related to the user 30 and the surroundings detected by each sensor included in the sensor unit 156. When having detected an event, the processing unit 152 controls to transmit event information related to the detected event to the server 200 through the communication unit 158. Note that the event may be detected by the processing unit 202 of the server 200.

The communication unit 158 transmits the information in the first recording format or the information in the second recording format generated by the processing unit 152 to the server 200. When having detected an event, the communication unit 158 transmits event information related to the detected event to the server 200.

In the robot 40, the communication unit 158 acquires the information stored in the record data 292 from the server 200. The communication unit 158 functions as a recording information reception unit that acquires information in the second recording format including moving image data, recorded by the recording control unit 270. The processing unit 152 generates a video to be presented to the user 30 based on the moving image data included in the information in the second recording format received by the communication unit 158. The processing unit 152 functions as a video generation unit that generates a video to be presented to the user 30.

In addition, the communication unit 158 receives operation information indicating operation content from the server 200. The processing unit 152 controls the control target 155 based on the operation content received by the communication unit 158. The control target 155 includes a speaker, a motor that drives each unit of the robot 40 such as limbs, a light emitting device, and the like. When having received information indicating speech content from the server 200, the processing unit 152 causes the speaker to output a voice in accordance with the received generation content. In addition, by controlling the drive motors of the limb portions, the processing unit 152 can control a part of the action of the robot 40. In addition, by controlling these motors, the processing unit 152 can express a part of the emotions of the robot 40.

In the server 200, the communication unit 208 outputs information received from the robot 40 to the processing unit 202.

In the processing unit 202, the initial value setting unit 210 stores the initial value of the parameter indicating the initial state of the neural network received by the communication unit 208, in the parameter initial value 286 in the storing unit 172. Note that the initial value of the parameter of the neural network may be determined in advance in the server 200, or may be changeable by the user 30 via the communication network 90.

The external input data generation unit 230 processes at least part of the sensor information received by the communication unit 208, generates input information from the outside of the neural network, and outputs the generated input information to the parameter processing unit 240. The parameter processing unit 240 calculates the neural network based on the input information and the current parameters 288 and the definition information 284 of the neural network stored in the storing unit 172.

Based on the input information generated by the external input data generation unit 230, the parameter processing unit 240 calculates a parameter representing an internal state of a plurality of artificial neurons in the neural network. For example, based on the input information generated by the external input data generation unit 230, the parameter processing unit 240 updates the parameters of the current internal state of the plurality of artificial neurons or the like in which the situation of the robot 40 is defined. In addition, the parameter processing unit 240 calculates a parameter of an internal state of another artificial neuron in the neural network. This makes it possible to calculate a parameter of the internal state of the emotion artificial neuron in which the emotion of "happy" is defined, for example. The parameter of the internal state of the emotion artificial neuron is an example of an index indicating the intensity of the emotion of "happy". Therefore, the parameter processing unit 240 can decide the intensity of the emotion in the control system based on the internal state of the emotion artificial neuron. In this manner, the parameter processing unit 240 functions as an emotion decision unit that decides the emotion using the neural network based on at least part of the information detected by the sensor included in the sensor unit 156. For example, the parameter processing unit 240 decides the type and intensity of the emotion based on at least a part of the information detected by the sensor included in the sensor unit 156.

In addition, the parameter processing unit 240 decides an emotion based on information newly detected by a sensor included in the sensor unit 156 of the robot 40 and based on an emotion decided in the past by the parameter processing unit 240 associated with information detected in the past by a sensor included in the sensor unit 156 of the robot 40. For example, based on the information "person A" and "stroked on the head" detected in the past by the sensor included in the sensor unit 156 of the robot 40 and the information "happy" decided in the past by the parameter processing unit 240, the parameter processing unit 240 can newly decide an emotion analogous to the emotion of "happy" decided in the past for the information "person A" newly detected by the sensor included in the sensor unit 156 of the robot 40.

That is, in a case where the newly detected information includes a specific element (for example, "person A"), the parameter processing unit 240 decides an emotion toward the newly detected information based on an emotion associated with the specific element. That is, the parameter processing unit 240 suppresses, to some extent, occurrence of strong emotion completely opposite to the emotion generated in the past in a situation having a common point with the situation experienced in the past. This makes it possible to generate various emotions in accordance with information regarding persons and events learned in the past and the current situation.

In addition, the parameter processing unit 240 decides an emotion by using the emotion information updated by the recording control unit 270. For example, the parameter processing unit 240 decides an emotion based on information newly detected by a sensor included in the sensor unit 156 of the robot 40 and based on an emotion updated by the recording control unit 270 associated with information detected in the past by a sensor included in the sensor unit 156 of the robot 40. More specifically, the parameter processing unit 240 can newly decide an emotion analogous to the emotion "scared" updated by the recording control unit 270 and associated with the element "person A" included in the information "person A" and "stroked" newly detected by the sensor included in the sensor unit 156 of the robot 40 and in the information "person A" and "hit" detected in the past by the sensor included in the sensor unit 156 of the robot 40. That is, the parameter processing unit 240 suppresses, to some extent, occurrence of strong emotion completely opposite to the updated emotion in a situation having a common point with the situation experienced in the past, in consideration of the change in the relationship. This makes it possible to generate various emotions in consideration of the change in a relationship with a target in accordance with a situation of a person or an event learned in the past and a current situation.

The parameters of the neural network calculated by the parameter processing unit 240 are supplied to the switching control unit 260, the recording control unit 270, and the operation decision unit 250.

The recording control unit 270 stores, in the storing unit 172, information obtained by processing at least part of the information detected by each sensor included in the sensor unit 156, in association with the emotion of the robot 40. For example, the recording control unit 270 stores the emotion of the robot 40 in association with various types of information received by the communication unit 208, in the record data 292. For example, the recording control unit 270 stores, in the record data 292, the emotion of the robot 40 in association with various types of information related to the user 30, surrounding information, and event information. For example, the recording control unit 270 associates the emotion value of the robot 40 as the emotion of the robot and stores it in the record data 292.

For example, the recording control unit 270 causes the storing unit 172 to store information detected by a sensor included in the sensor unit 156 of the robot 40 and the emotion decided by the parameter processing unit 240 in association with each other. For example, the recording control unit 270 stores the information "person A" and "head stroked" detected by a sensor included in the sensor unit 156 of the robot 40 and the emotion "happy" decided by the parameter processing unit 240 in association with each other in the record data 292. That is, the recording control unit 270 stores information such as a person or an event in association with emotion information.

In addition, the recording control unit 270 stores, in the record data 292, the information in the first recording format or the information in the second recording format received by the communication unit 208 from the robot 40. The recording control unit 270 stores the information received from each robot 40 in association with information identifying each robot 40 in the record data 292.

In addition, based on the emotion newly decided by the parameter processing unit 240, the recording control unit 270 updates the emotion decided in the past by the parameter processing unit 240 associated with the information detected in the past by the sensor of the robot 40, including the element common to the information newly detected by the sensor of the robot 40, to the emotion newly decided by the parameter processing unit 240.

For example, in a case where the intensity of the emotion newly decided by the parameter processing unit 240 exceeds a predetermined threshold, the recording control unit 270 updates the emotion decided in the past by the parameter processing unit 240 associated with the information detected in the past by the sensor of the robot 40, including an element common to the information newly detected by the sensor of the robot 40, to the emotion newly decided by the parameter processing unit 240.

More specifically, in a case where the emotion "very happy" newly decided by the parameter processing unit 240 exceeds a predetermined threshold, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "embraced" newly detected by the sensor of the robot 40, to the emotion "very happy" newly decided by the parameter processing unit 240. That is, in the above example, the recording control unit 270 updates the emotion associated with "person A" from "happy" to "very happy".

The predetermined threshold may be set using not only a fixed value, but also a certain value or a change rate corresponding to a purpose, such as a certain value or a change rate for the intensity of the current emotion and a certain value or a change rate for the type of the current emotion. This makes it possible to generate various emotions in consideration of a change in a relationship with a target using the intensity of the emotion decided in accordance with the situation of the person or the event learned in the past and the current situation.

In addition, in the above example, when updating an emotion associated with a specific element included in the detected information, the recording control unit 270 may update an emotion associated with another detected element together with a common element. More specifically, in a case where the emotion "very joyful" newly decided by the parameter processing unit 240 exceeds a predetermined threshold, the recording control unit 270 updates the emotion "bored" decided in the past by the parameter processing unit 240 associated with the element "amusement park" included in the information "person A" and "amusement park" detected in the past by the sensor included in the sensor unit 156 of the robot 40, including the element "person A" common to the information "person A," "embraced," and "park" newly detected by the sensor of the robot 40, to the emotion "very joyful" newly decided by the parameter processing unit 240. That is, in the above example, the recording control unit 270 updates the emotion associated with the "amusement park" associated with the "person A" from "bored" to "very joyful" using the common element "person A" as a key. That is, when updating the emotion associated with the common element "person A" from "bored" to "very joyful", the recording control unit 270 can also update the emotion associated with the element "amusement park" detected in the past together with the common element "person A" from "bored" to "very joyful". With this procedure, for example, when the emotion for a person has changed from negative to positive, the emotion toward an event related to the person is also changed from negative to positive. This makes it possible to propagate a change in a relationship with a target to another target in accordance with a situation of a person or an event learned in the past and a current situation, and generate various emotions in consideration of the changed relationship.

In addition, for example, in a case where the type of the emotion newly decided by the parameter processing unit 240 has a predetermined change, the recording control unit 270 updates the emotion decided in the past by the parameter processing unit 240 associated with the information detected in the past by the sensor included in the sensor unit 156 of the robot 40 including an element common to the information newly detected by the sensor included in the sensor unit 156 of the robot 40, to the emotion newly decided by the parameter processing unit 240. More specifically, in a case where the emotion "scared" newly decided by the parameter processing unit 240 is a predetermined change, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "hit" newly detected by the sensor included in the sensor unit 156 of the robot 40, to the emotion "scared" newly decided by the parameter processing unit 240.

That is, in the above example, the recording control unit 270 updates the emotion associated with "person A" from "happy" to "scared". The predetermined change may use not only the change to the opposite emotion described in the above example but also any change corresponding to the purpose. This makes it possible to generate various emotions in consideration of a change in a relationship with a target using the change in the emotion decided in accordance with the situation of the person or the event learned in the past and the current situation.

In addition, for example, the recording control unit 270 can perform the update processing by combining the intensity and type of the emotion decided by the parameter processing unit 240. For example, in a case where the type of the emotion newly decided by the parameter processing unit 240 has a predetermined change and the intensity of the emotion exceeds a predetermined threshold, the recording control unit 270 updates the emotion decided in the past by the parameter processing unit 240 associated with the information detected in the past by the sensor included in the sensor unit 156 of the robot 40 including an element common to the information newly detected by the sensor included in the sensor unit 156 of the robot 40, to the emotion newly decided by the parameter processing unit 240. More specifically, in a case where the emotion "very scared" newly decided by the parameter processing unit 240 is a predetermined change and exceeds a predetermined threshold, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "hit" newly detected by the sensor included in the sensor unit 156 of the robot 40, to the emotion "very scared" newly decided by the parameter processing unit 240. That is, in the above example, the recording control unit 270 updates the emotion associated with "person A" from "happy" to "very scared". This makes it possible to generate various emotions in consideration of a change in a relationship with a target using the change and intensity of the emotion decided in accordance with the situation of the person or the event learned in the past and the current situation.

Note that a target to be updated by the recording control unit 270 is an emotion associated with information including an element common to the information newly detected by the sensor included in the sensor unit 156 of the robot 40. In other words, the target to be updated by the recording control unit 270 can be an emotion associated with information in which at least one or more elements are common, among information such as surrounding information, position information, date and time, weather, temperature, temperature, scenery, smell, sound, the number of people in the surroundings, a person, facial expression of the person, a speech and behavior of the person, and other situations. This makes it possible to generate various emotions in consideration of a change in a relationship with a target using the emotion decided after specifying the similarities between the situation of the person or the event learned in the past and the current situation.

The switching control unit 260 decides the recording format of the information to be generated by the processing unit 152 of the robot 40 based on the parameter supplied from the parameter processing unit 240. In a case where it is necessary to switch the recording format of the information generated by the processing unit 152, the switching control unit 260 controls to transmit, through the communication unit 208, an instruction to switch the recording format to the robot 40. In the robot 40, the processing unit 152 switches the recording format in accordance with the instruction received from the server 200.

For example, when having the processing unit 152 generate the information in the first recording format, the switching control unit 260 transmits, to the robot 40, an instruction to switch the recording format of the information to be generated by the processing unit 152 from the first recording format to the second recording format in response to the increase in the intensity of the emotion decided by the parameter processing unit 240. In this manner, the switching control unit 260 switches the recording format of the information recorded by the recording control unit 270 from the first recording format to the second recording format in response to the increase in the intensity of the emotion decided by the parameter processing unit 240. This makes it possible to leave, as a detailed record, the information when the emotion of the robot 40 has increased. In addition, in the robot 40, the processing unit 152 acquires moving image data in the second recording format acquired from the server 200, and generates a video to be presented to the user 30. This makes it possible for the user 30 to enjoy the information when the emotion of the robot 40 has increased, as a video.

In addition, the switching control unit 260 transmits, to the robot 40, an instruction to switch the recording format of the information to be generated by the processing unit 152 from the first recording format to the second recording format in response to the increase in the intensity of the emotion of the user 30. In this manner, the switching control unit 260 switches the recording format of the information recorded by the recording control unit 270 from the first recording format to the second recording format in response to the increase in the intensity of the emotion decided by the parameter processing unit 240. This makes it possible to leave, as a detailed record, the information when the emotion of the user 30 has increased. In addition, in the robot 40, the processing unit 152 acquires moving image data in the second recording format acquired from the server 200, and generates a video to be presented to the user 30. Therefore, the user 30 can enjoy the information when his/her emotion has increased, as a video. The emotion of the user 30 can be detected based on a voice or facial expression detected from the user 30, for example. In addition, the switching control unit 260 may recognize a change in emotion of the user 30 based on detection of an impact by a touch sensor (not illustrated) included in the sensor unit 156. For example, in a case where an impact is detected by the touch sensor included in the sensor unit 156, the switching control unit 260 may recognize that the emotion of the user 30 has worsened.

Note that, when having the processing unit 152 generate the information in the second recording format, the switching control unit 260 transmits, to the robot 40, an instruction to switch the recording format of the information to be generated by the processing unit 152 from the second recording format to the first recording format in response to the decrease in the intensity of the emotion of the robot 40 or the user decided by the parameter processing unit 240. In this manner, the switching control unit 260 switches the recording format of the information recorded by the recording control unit 270 from the second recording format to the first recording format in response to the decrease in the intensity of the emotion decided by the parameter processing unit 240 or the decrease in the intensity of the emotion of the user.

In addition, the switching control unit 260 transmits, to the robot 40, an instruction to switch the recording format of the information to be generated by the processing unit 152 from the first recording format to the second recording format in response to the increase in the change of the emotion of the user 30 or the robot 40. This makes it possible to leave, as a detailed record, the information when the emotion of the user 30 or the robot 40 has increased. In addition, in the robot 40, the processing unit 152 acquires moving image data in the second recording format acquired from the server 200, and generates a video to be presented to the user 30. This makes it possible for the user 30 to enjoy the information when the emotion of the user 30 themselves or the robot 40 has increased, as a video.

When having the processing unit 152 generate the information in the second recording format, the switching control unit 260 transmits, to the robot 40, an instruction to switch the recording format of the information to be generated by the processing unit 152 from the second recording format to the first recording format in response to the change in the emotion of the robot 40 or the emotion of the user being settled (the change amount has become the threshold or less) or the emotion of the robot 40 or the emotion of the user having returned to the emotion before the change. In this manner, the switching control unit 260 switches the recording format of the information recorded by the recording control unit 270 from the second recording format to the first recording format in response to the settlement of the change in the emotion of the robot 40 or the emotion of the user.

In addition, the switching control unit 260 may switch the recording format in accordance with continuity of changes in emotions of the robot 40 or the user 30. For example, the switching control unit 260 transmits, to the robot 40, an instruction to switch the recording format of the information to be generated by the processing unit 152 from the first recording format to the second recording format in a case where the cumulative value of the emotion values within the predetermined time exceeds the threshold. In addition, the switching control unit 260 may switch the recording format in accordance with a combination of ups and downs in the change (inclination) in emotion, or the degree of the inclination, within a predetermined time. For example, the switching control unit 260 transmits, to the robot 40, an instruction to switch the recording format of the information to be generated by the processing unit 152 from the first recording format to the second recording format in a case where the inclination indicating the change in the emotion value is a combination of sudden rise → moderate for a certain time → sudden fall, occurring within a predetermined time. With this configuration, for example, regarding a scene where the user is nervous due to pressure or the like, it is possible to leave video data in a situation where the user feels the time long even though the absolute value of the emotion is not relatively large (where the emotion value of a certain value or more continues for a predetermined time) as a record.

In addition, when switching the recording format of the information to be generated by the processing unit 152 from the first recording format to the second recording format, the recording control unit 270 transmits, to the robot 40, an instruction to tag the information in the second recording format. This makes it possible for the user 30, when confirming the recorded information, to clearly recall the situation, etc. at the time from the tagged information. In addition, tagging makes it possible to easily find information even when searching for information related to a specific situation from the recorded information.

Meanwhile, there is a case where a person remembers information in a different period corresponding to an emotion when the information is stored. For example, a person tends to store information associated with strong emotions for a long time and information associated with weak emotions for a long time.

Accordingly, the recording control unit 270 controls the preservation period of the information in accordance with the emotion associated with the information stored in the record data 292 of the storing unit 172. For example, the recording control unit 270 performs control such that information associated with a strong emotion is to be preserved for a long period of time and information associated with a weak emotion is to be preserved for a short time. For example, the recording control unit 270 determines whether the emotion value associated with the information is a predetermined threshold or more over which the emotion is considered to be strong. The recording control unit 270 determines that the emotion is strong when the emotion value is the threshold or more, and determines that the emotion is strong when the emotion value is less than the threshold. The recording control unit 270 may set the threshold in a plurality of stages and determine the emotion in multiple stages such as strong, normal, and weak.

The recording control unit 270 sets the preservation period in accordance with the magnitude of emotion. For example, the recording control unit 270 sets a long preservation period for storing information associated with a strong emotion, and sets a short preservation period for storing information associated with a weak emotion. The recording control unit 270 periodically determines whether the preservation period has elapsed from the date and time when the information is stored in the record data 292 for each information stored in the record data 292. The recording control unit 270 deletes the information that has passed its preservation period from the record data 292. This makes it possible to appropriately store the information in accordance with the emotion when the information is stored. For example, information associated with a strong emotion can be stored longer than information associated with a weak emotion.

Note that, even when the information is associated with a weak emotion, the recording control unit 270 may change the preservation period of the information to a longer period of time when there is continuation of similar information, than when there is no continuation of similar information. For example, the recording control unit 270 changes the holding period to a longer period of time in a case where information such as the same person or event is stored a predetermined number of times during a predetermined period. This makes it possible to store the information for a long time when the information is not continuous, even when it is information associated with a weak emotion.

When switching the recording format of the information to be generated by the processing unit 152 from the first recording format to the second recording format, the recording control unit 270 transmits, to the robot 40, an instruction to tag the information in the second recording format. This makes it possible for the user 30, when confirming the recorded information, to clearly recall the situation, etc. at the time from the tagged information. In addition, tagging makes it possible to easily find information even when searching for information related to a specific situation from the recorded information.

Meanwhile, a person sometimes allows stored information to be simplified with the lapse of time. For example, a person tends to gradually forget details of the stored information with the lapse of time, resulting in leaving simplified information. The last remaining memory becomes a memory in higher concept.

Accordingly, the recording control unit 270 may update the information stored in the storing unit 172 so as to simplify the stored information with the lapse of time from the timing at which the information is stored. For example, the recording control unit 270 updates the information stored in the record data 292 to information of a higher concept with the lapse of time from the timing at which the information is stored. For example, the recording control unit 270 reads the information stored in the record data 292 every time a predetermined period elapses from the timing at which the information is stored. The predetermined period may be a certain period, or may be determined corresponding to a period in which memory fades. For example, the predetermined period may be set to be longer in order of 1 month, 3 months, 6 months, 1 year, 3 years ···. The recording control unit 270 specifies a higher concept of the read information. For example, the recording control unit 270 specifies schematic information about detailed information included in the information. For example, regarding the date and time and place information included in the information, the recording control unit 270 specifies a wider area including the place, a wider time zone, date and a time period including the date and time. In addition, the recording control unit 270 erases a part of detailed content of the read information. Then, the recording control unit 270 updates the information stored in the record data 292 corresponding to the read information to the specified higher concept information. For example, in a case where "went to a character theme park" is stored in the record data 292, the recording control unit 270 updates the information with the lapse of time, specifically, first updates the information to "went to a theme park" and then updates the information to "went to a certain amusement park". In addition, for example, in a case where "sunny partly (30%) cloudy" is stored in the record data 292, the recording control unit 270 updates the information with the lapse of time, specifically, first updates the information to "sunny, slightly cloudy", then updates the information to "sunny", and then updates the information to "good weather". In addition, for example, in a case where it is stored as "stroked by a child", the recording control unit 270 updates the information with the lapse of time, specifically, first updates the information to "stroked by someone" and then updates the information to "stroked" In addition, for example, in a case where "travelled to Thailand" is stored, the recording control unit 270 updates the information with the lapse of time, specifically, first updates the information to "travelled to Thailand", next updates the information to "travelled to South East Asia", next updates the information to "travelled to a foreign country", and next updates the information to "travelled". This makes it possible to simplify, compress, or delete the stored information, with the lapse of time.

In addition, a person tends to have a weakened emotion corresponding to the stored information with the lapse of time.

Accordingly, the recording control unit 270 may update the emotion associated with the information stored in the storing unit 172 with the lapse of time. For example, the recording control unit 270 updates the information stored in the record data 292 so as to decrease the intensity of the emotion associated with the information stored in the record data 292 with the lapse of time from the timing at which the information is stored. For example, the recording control unit 270 updates the emotion value associated with the information stored in the record data 292 to a value smaller by a predetermined ratio or a predetermined value every time a predetermined period elapses from the timing at which the information is stored. The predetermined period may be a fixed period, or may be determined corresponding to a period in which memory fades. This makes it possible to decrease the intensity of the emotion associated with the stored information with the lapse of time.

The operation decision rule 282 prescribes an operation to be performed by the robot 40 in association with the state of the robot 40. For example, the operation decision rule 282 prescribes the operation to be performed by the robot 40 in association with the internal state of the artificial neuron of the neural network. For example, the operation decision rule 282 prescribes an operation of uttering a word expressing happiness in association with a condition of a high state of the emotion artificial neuron defining an emotion of "happy". In addition, the operation decision rule 282 determines an operation at the time of having drowsiness in association with the condition of a high internal state of the internal secretion artificial neuron defining the internally secreted substance corresponding to drowsiness.

The internally secreted substance means a substance that is secreted in the body and transmits a signal, such as a neurotransmitter and a hormone. In addition, internal secretion means that an internally secreted substance is secreted in the body. However, the internally secreted substance of the robot 40 itself is one of information that influences the operation of the robot 40, and does not mean that the robot 40 actually generates the internally secreted substance. Similarly, the emotion of the robot 40 itself is one of information that influences the operation of the robot 40, and does not mean that the robot 40 actually has an emotion.

The operation decision unit 250 decides the operation of the robot 40 based on the operation prescribed in the operation decision rule 282 in association with an activation state or an internal state of each artificial neuron decided by the parameter processing unit 240.

The operation decision unit 250 reads information stored in the record data 292 of the storing unit 172 in accordance with the decided operation. For example, when it is necessary to output the information stored in the record data 292 by the operation defined in operation decision rule 282, the operation decision unit 250 reads necessary information from the record data 292. In addition, for example, in a case where there is an output instruction related to the information stored in the record data 292 from the user 30, the operation decision unit 250 reads the information instructed to be output from the record data 292. In addition, when performing a conversation with the user 30, a response to an inquiry from the user 30, or an inquiry to the user 30, the operation decision unit 250 reads information indicating speech content from the record data 292.

The operation decision unit 250 generates operation information of the robot 40 so as to perform operation of the decided operation, and outputs the operation information to the robot 40 together with the read information. When outputting the information stored in the record data 292 of the storing unit 172 by the robot 40, the operation decision unit 250 performs control to change one or both of the action of the robot 40 and the output timing of the information in accordance with the emotion associated with the information. For example, the operation decision unit 250 associates the degree of emotion with the event, and provides a lag in the timing of outputting information in accordance with the degree of emotion. For example, the operation decision unit 250 controls to allow information associated with a weak emotion, as compared with information associated with a strong emotion, to be output over a longer time or to be output together with a filler word. For example, the operation decision unit 250 performs control to allow the information associated with a weak emotion to be output over a longer time. For example, the operation decision unit 250 performs control to allow the information associated with a weak emotion to be output with a filler word such as "well," or" Hmm" placed between conversations. This makes it possible to output the stored information in accordance with the emotion associated with the information. In addition, it is possible to develop the output into a natural conversation.

In addition, the operation decision unit 250 controls to output information bit by bit even when the information is associated with a strong emotion, for example. The operation decision unit 250 controls to output information associated with a strong emotion little by little as compared with information associated with a weak emotion. In addition, the operation decision unit 250 detects, by a sensor, a surrounding situation when information associated with a strong emotion is output from the robot 40, and controls one or both of the action of the robot 40 and the output timing of the information in accordance with the surrounding situation detected. For example, in a case where a strong emotion is associated with the information, the robot 40 puts a filler word such as "ah" or" Well," into a conversation, and controls to perform output while carefully examining surrounding information in consideration of what line to give as a statement next. This makes it possible to output the stored information in accordance with the emotion associated with the information. In addition, it is possible to gain time for grasping surrounding information. In addition, it is possible to output the next line given as a statement while grasping the surrounding information, leading to development into a natural conversation.

The operation information indicating the operation decided by the operation decision unit 250 is transmitted from the communication unit 208 to the robot 40. The processing unit 152 in the robot 40 controls the control target 155 to perform the operation indicated by the information received from the server 200. This makes it possible for the robot 40 to perform an appropriate operation corresponding to the current emotion of the robot 40.

Meanwhile, there is a case where a person remembers information in a different period corresponding to an emotion when the information is stored. For example, a person tends to store information associated with strong emotions for a long time and information associated with weak emotions for a long time.

Accordingly, the recording control unit 270 controls the preservation period of the information in accordance with the emotion associated with the information stored in the record data 292 of the storing unit 172. For example, the recording control unit 270 performs control such that information associated with a strong emotion is to be preserved for a long period of time and information associated with a weak emotion is to be preserved for a short time. For example, the recording control unit 270 determines whether the emotion value associated with the information is a predetermined threshold or more over which the emotion is considered to be strong. The recording control unit 270 determines that the emotion is strong when the emotion value is the threshold or more, and determines that the emotion is strong when the emotion value is less than the threshold. The recording control unit 270 may set the threshold in a plurality of stages and determine the emotion in multiple stages such as strong, normal, and weak.

The recording control unit 270 sets the preservation period in accordance with the magnitude of emotion. For example, the recording control unit 270 sets a long preservation period for storing information associated with a strong emotion, and sets a short preservation period for storing information associated with a weak emotion. The recording control unit 270 periodically determines whether the preservation period has elapsed from the date and time when the information is stored in the record data 292 for each information stored in the record data 292. The recording control unit 270 deletes the information that has passed its preservation period from the record data 292. This makes it possible to appropriately store the information in accordance with the emotion when the information is stored. For example, information associated with a strong emotion can be stored longer than information associated with a weak emotion.

Note that, even when the information is associated with a weak emotion, the recording control unit 270 may change the preservation period of the information to a longer period of time when there is continuation of similar information, than when there is no continuation of similar information. For example, the recording control unit 270 changes the holding period to a longer period of time in a case where information such as the same person or event is stored a predetermined number of times during a predetermined period. This makes it possible to store the information for a long time when the information is not continuous, even when it is information associated with a weak emotion.

When switching the recording format of the information to be generated by the processing unit 152 from the first recording format to the second recording format, the recording control unit 270 transmits, to the robot 40, an instruction to tag the information in the second recording format. This makes it possible for the user 30, when confirming the recorded information, to clearly recall the situation, etc. at the time from the tagged information. In addition, tagging makes it possible to easily find information even when searching for information related to a specific situation from the recorded information.

Meanwhile, a person sometimes allows stored information to be simplified with the lapse of time. For example, a person tends to gradually forget details of the stored information with the lapse of time, resulting in leaving simplified information. The last remaining memory becomes a memory in higher concept.

Accordingly, the recording control unit 270 may update the information stored in the storing unit 172 so as to simplify the stored information with the lapse of time from the timing at which the information is stored. For example, the recording control unit 270 updates the information stored in the record data 292 to information of a higher concept with the lapse of time from the timing at which the information is stored. For example, the recording control unit 270 reads the information stored in the record data 292 every time a predetermined period elapses from the timing at which the information is stored. The predetermined period may be a certain period, or may be determined corresponding to a period in which memory fades. For example, the predetermined period may be set to be longer in order of 1 month, 3 months, 6 months, 1 year, 3 years ···. The recording control unit 270 specifies a higher concept of the read information. For example, the recording control unit 270 specifies schematic information about detailed information included in the information. For example, regarding the date and time and place information included in the information, the recording control unit 270 specifies a wider area including the place, a wider time zone, date and a time period including the date and time. In addition, the recording control unit 270 erases a part of detailed content of the read information. Then, the recording control unit 270 updates the information stored in the record data 292 corresponding to the read information to the specified higher concept information. For example, in a case where "went to a character theme park" is stored in the record data 292, the recording control unit 270 updates the information with the lapse of time, specifically, first updates the information to "went to a theme park" and then updates the information to "went to a certain amusement park". In addition, for example, in a case where "sunny partly (30%) cloudy" is stored in the record data 292, the recording control unit 270 updates the information with the lapse of time, specifically, first updates the information to "sunny, slightly cloudy", then updates the information to "sunny", and then updates the information to "good weather". In addition, for example, in a case where it is stored as "stroked by a child", the recording control unit 270 updates the information with the lapse of time, specifically, first updates the information to "stroked by someone" and then updates the information to "stroked" In addition, for example, in a case where "travelled to Thailand" is stored, the recording control unit 270 updates the information with the lapse of time, specifically, first updates the information to "travelled to Thailand", next updates the information to "travelled to South East Asia", next updates the information to "travelled to a foreign country", and next updates the information to "travelled". This makes it possible to simplify, compress, or delete the stored information, with the lapse of time.

In addition, a person tends to have a weakened emotion corresponding to the stored information with the lapse of time.

Accordingly, the recording control unit 270 may update the emotion associated with the information stored in the storing unit 172 with the lapse of time. For example, the recording control unit 270 updates the information stored in the record data 292 so as to decrease the intensity of the emotion associated with the information stored in the record data 292 with the lapse of time from the timing at which the information is stored. For example, the recording control unit 270 updates the emotion value associated with the information stored in the record data 292 to a value smaller by a predetermined ratio or a predetermined value every time a predetermined period elapses from the timing at which the information is stored. The predetermined period may be a fixed period, or may be determined corresponding to a period in which memory fades. This makes it possible to decrease the intensity of the emotion associated with the stored information with the lapse of time.

In addition, the recording control unit 270 updates the emotion decided in the past by the parameter processing unit 240 to an emotion, which is an emotion corresponding to the time period during which the information detected in the past by the sensor included in the sensor unit 156 of the robot 40 is stored, and which is an emotion including an element common to the information newly detected by the sensor included in the sensor unit 156 of the robot 40, associated with the emotion newly decided by the parameter processing unit 240. For example, the recording control unit 270 updates the emotion to an emotion, which is an emotion corresponding to the time period during which the information detected in the past is stored, and which is an emotion including an element common to the information newly detected by the sensor included in the sensor unit 156 of the robot 40, associated with the emotion newly decided by the parameter processing unit 240, such that the more recent the information detected in the past by the sensor included in the sensor unit 156 of the robot 40, the emotion is updated to an emotion closer to the emotion newly decided by the parameter processing unit 240, while the less recent the information, the emotion is updated to an emotion closer to the emotion decided in the past by the parameter processing unit 240.

More specifically, an example will be described in which, in a case where the person A was kind when meeting the person A for the first time, and the emotion of "very happy" has been associated with the "person A", it was found, after a few days, the person A had taken such an action with ulterior motive instead of kindness, and the emotion of "very sad" is newly decided. In this example, when updating the emotion associated with the "person A", the recording control unit 270 updates the emotion "very happy" decided in the past by the parameter processing unit 240 to an emotion "very sad" same as the emotion "very sad" newly decided by the parameter processing unit 240, which is the emotion including an element common with information newly detected by the sensor included in the sensor unit 156 of the robot 40, the emotion being associated with the emotion newly decided by the parameter processing unit 240, because the time period during which the information detected in the past by the sensor included in the sensor unit 156 of the robot 40 is stored is recent.

In addition, an example will be described in which, in a case where the person A was kind when meeting the person A a few years before, and the emotion of "very happy" has been associated with the "person A", it was found, when they met again after a few years, the person A had taken such an action with ulterior motive instead of kindness, and the emotion of "very sad" is newly decided. In this example, when updating the emotion associated with the "person A", the recording control unit 270 updates the emotion "very happy" decided in the past by the parameter processing unit 240 to an emotion "happy" slightly closer to "very sad" same as the emotion "very sad" newly decided by the parameter processing unit 240, which is the emotion including an element common with information newly detected by the sensor included in the sensor unit 156 of the robot 40, the emotion being associated with the emotion newly decided by the parameter processing unit 240, because the time period during which the information detected in the past by the sensor included in the sensor unit 156 of the robot 40 is stored is a few years before, which is not recent.

In addition, an example will be described in which, in a case where the person A was kind when meeting the person A scores of years before, and the emotion of "very happy" has been associated with the "person A", the "person A" took a very rude behavior when they met again after scores of years, and the emotion of "very sad" is newly decided. In this example, when updating the emotion associated with the "person A", the recording control unit 270 performs no update on the emotion "very happy" decided in the past by the parameter processing unit 240 without bringing the emotion slightly closer to "very sad" newly decided by the parameter processing unit 240, or updates the emotion to an emotion "very happy" same as the emotion decided in the past, which is the emotion including an element common with information newly detected by the sensor included in the sensor unit 156 of the robot 40, the emotion being associated with the emotion newly decided by the parameter processing unit 240, because the time period during which the information detected in the past by the sensor included in the sensor unit 156 of the robot 40 is stored is scores of years before, which is not recent. That is, in the above example, the recording control unit 270 updates the emotion within a range from the emotion decided in the past to the newly decided emotion in accordance with the time period during which the information to be updated is stored. This makes it possible to update an emotion in accordance with the time period during which the information being an update target is stored and generate various emotions in consideration of a change in the relationship with the target.

In addition, the recording control unit 270 updates the emotion decided in the past by the parameter processing unit 240 to an emotion corresponding to the information volume stored in association with the emotion newly decided by the parameter processing unit 240. For example, the recording control unit 270 updates the emotion such that, the larger the information volume stored in association with the emotion newly decided by the parameter processing unit 240, the closer the update is to be performed to the emotion newly decided by the parameter processing unit 240; the smaller the information volume, the closer the update is to be performed to the emotion decided in the past by the parameter processing unit 240 More specifically, an example will be described in which, in a case where the person A was kind in the past, and the emotion of "very happy" has been associated with the "person A", it was found thereafter, that the person A had taken such an action with ulterior motive instead of kindness, and the emotion of "very sad" is newly decided. In this example, when updating the emotion associated with the "person A", the recording control unit 270 updates the emotion "very happy" decided in the past by the parameter processing unit 240 to an emotion "very sad" same as the emotion "very sad" newly decided by the parameter processing unit 240, because the emotion "very sad" newly decided by the parameter processing unit 240 is a very strong emotion and the information volume stored in association is large.

On the other hand, an example will be described in which, in a case where the person A was kind in the past, and the emotion of "very happy" has been associated with the "person A", and thereafter, and the emotion of "slightly sad" is newly decided because of a little nasty action of the person A. In this example, when updating the emotion associated with the "person A", the recording control unit 270 updates the emotion "very happy" decided in the past by the parameter processing unit 240 to an emotion "happy" slightly closer to the emotion "slightly sad" newly decided by the parameter processing unit 240, because the emotion "slightly sad" newly decided by the parameter processing unit 240 is a weak emotion and the information volume stored in association is small. That is, in the above example, the recording control unit 270 updates the emotion within a range from the emotion decided in the past to the newly decided emotion in accordance with the information volume associated with the newly decided emotion. This makes it possible to update the emotion in accordance with the information volume associated with the decided emotion and generate various emotions in consideration of the change in the relationship with the target.

Here, returning to an example in which the recording control unit 270 performs the update in a case where the intensity of the emotion newly decided by the parameter processing unit 240 exceeds a predetermined threshold. More specifically, in a case where the emotion "very happy" newly decided by the parameter processing unit 240 exceeds a predetermined threshold, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "embraced" newly detected by the sensor of the robot 40, to "very happy" based on an element related to the emotion "very happy" newly decided by the parameter processing unit 240. That is, in the above example, the recording control unit 270 updates the emotion associated with "person A" from "happy" to "very happy".

The predetermined threshold may be set using not only a fixed value, but also a certain value or a change rate corresponding to a purpose, such as a certain value or a change rate for the intensity of the current emotion and a certain value or a change rate for the type of the current emotion. This makes it possible to generate various emotions in consideration of a change in a relationship with a target using the intensity of the emotion decided in accordance with the situation of the person or the event learned in the past and the current situation.

In addition, in the above example, when updating an emotion associated with a specific element included in the detected information, the recording control unit 270 may update an emotion associated with another detected element together with a common element. More specifically, in a case where the emotion "very joyful" newly decided by the parameter processing unit 240 exceeds a predetermined threshold, the recording control unit 270 updates the emotion "bored" decided in the past by the parameter processing unit 240 associated with the element "amusement park" included in the information "person A" and "amusement park" detected in the past by the sensor included in the sensor unit 156 of the robot 40, including the element "person A" common to the information "person A," "embraced," and "park" newly detected by the sensor of the robot 40, to "joyful" based on an element related to the emotion "very joyful" newly decided by the parameter processing unit 240. That is, in the above example, the recording control unit 270 updates the emotion associated with the "amusement park" associated with the "person A" from "bored" to "joyful" using the common element "person A" as a key. That is, when updating the emotion associated with the common element "person A" from "bored" to "joyful", the recording control unit 270 can also update the emotion associated with the element "amusement park" detected in the past together with the common element "person A" from "bored" to "joyful". With this procedure, for example, when the emotion for a person has changed from negative to positive, the emotion toward an event related to the person is also changed from negative to positive. This makes it possible to propagate a change in a relationship with a target to another target in accordance with a situation of a person or an event learned in the past and a current situation, and generate various emotions in consideration of the changed relationship.

In addition, for example, in a case where the type of the emotion newly decided by the parameter processing unit 240 has a predetermined change, the recording control unit 270 updates the emotion decided in the past by the parameter processing unit 240 associated with the information detected in the past by the sensor included in the sensor unit 156 of the robot 40 including an element common to the information newly detected by the sensor included in the sensor unit 156 of the robot 40, based on an element related to the emotion newly decided by the parameter processing unit 240. More specifically, in a case where the emotion "scared" newly decided by the parameter processing unit 240 is a predetermined change, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "hit" newly detected by the sensor included in the sensor unit 156 of the robot 40, to "slightly scared" based on an element related to the emotion "scared" newly decided by the parameter processing unit 240.

That is, in the above example, the recording control unit 270 updates the emotion associated with "person A" from "happy" to "slightly scared". The predetermined change may use not only the change to the opposite emotion described in the above example but also any change corresponding to the purpose. This makes it possible to generate various emotions in consideration of a change in a relationship with a target using the change in the emotion decided in accordance with the situation of the person or the event learned in the past and the current situation.

In addition, for example, the recording control unit 270 can perform the update processing by combining the intensity and type of the emotion decided by the parameter processing unit 240. For example, in a case where the type of the emotion newly decided by the parameter processing unit 240 has a predetermined change and the intensity of the emotion exceeds a predetermined threshold, the recording control unit 270 updates the emotion decided in the past by the parameter processing unit 240 associated with the information detected in the past by the sensor included in the sensor unit 156 of the robot 40 including an element common to the information newly detected by the sensor included in the sensor unit 156 of the robot 40, based on an element related to the emotion newly decided by the parameter processing unit 240. More specifically, in a case where the emotion "very scared" newly decided by the parameter processing unit 240 is a predetermined change and exceeds a predetermined threshold, the recording control unit 270 updates the emotion "happy" decided in the past by the parameter processing unit 240 associated with the element "person A" included in the information "person A" and "stroked" detected in the past by the sensor included in the sensor unit 156 of the robot 40, including the element "person A" common to the information "person A" and "hit" newly detected by the sensor included in the sensor unit 156 of the robot 40, to "scared" based on an element related to the emotion "very scared" newly decided by the parameter processing unit 240. That is, in the above example, the recording control unit 270 updates the emotion associated with "person A" from "happy" to "scared". This makes it possible to generate various emotions in consideration of a change in a relationship with a target using the change and intensity of the emotion decided in accordance with the situation of the person or the event learned in the past and the current situation.

Note that a target to be updated by the recording control unit 270 is an emotion associated with information including an element common to the information newly detected by the sensor included in the sensor unit 156 of the robot 40. In other words, the target to be updated by the recording control unit 270 can be an emotion associated with information in which at least one or more elements are common, among information such as surrounding information, position information, date and time, weather, temperature, temperature, scenery, smell, sound, the number of people in the surroundings, a person, facial expression of the person, a speech and behavior of the person, and other situations. This makes it possible to generate various emotions in consideration of a change in a relationship with a target using the emotion decided after specifying the similarities between the situation of the person or the event learned in the past and the current situation.

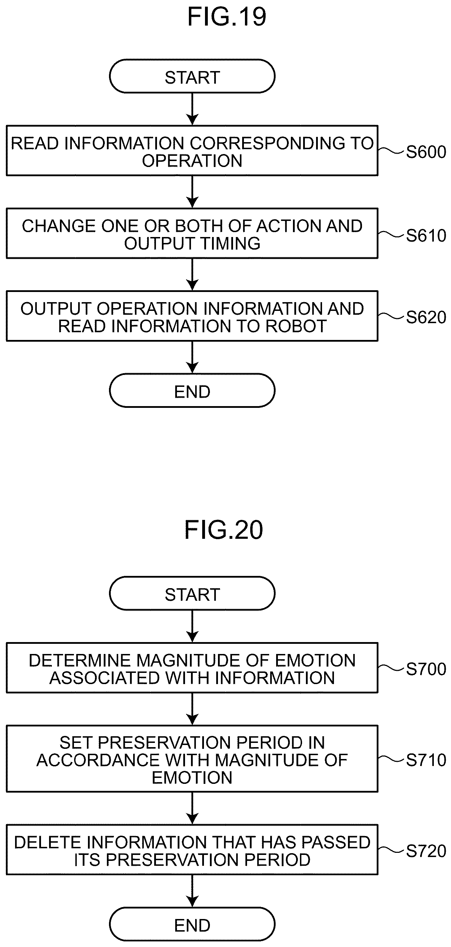

Next, operation control of the robot 40 will be described. FIG. 19 is a flowchart related to operation control of the robot 40. When having decided the operation of the robot 40, the operation decision unit 250 reads the information stored in the record data 292 of the storing unit 172 in accordance with the decided operation (S600).

In S610, the operation decision unit 250 changes one or both of the action of the robot 40 and the output timing of the information in accordance with the emotion associated with the read information. Subsequently, in S620, the operation decision unit 250 generates operation information of the robot 40 so as to operate the decided operation, outputs the operation information to the robot 40 together with the read information, and ends this flow. This makes it possible for the system 20 to output, from the robot 40, the stored information in accordance with the emotion associated with the information.

Next, deletion of information stored in the record data 292 will be described. FIG. 20 is a flowchart related to control of a data preservation period. The recording control unit 270 determines the magnitude of the emotion associated with the information stored in the record data 292 of the storing unit 172 (S700). For example, the recording control unit 270 determines whether the emotion value associated with the information is a predetermined threshold or more over which the emotion is considered to be strong. The recording control unit 270 determines that the emotion is strong when the emotion value is the threshold or more, and determines that the emotion is strong when the emotion value is less than the threshold.

In S710, the recording control unit 270 sets the preservation period in accordance with the magnitude of the emotion. For example, the recording control unit 270 sets a long preservation period for storing information associated with a strong emotion, and sets a short preservation period for storing information associated with a weak emotion.

In step S720, regarding each piece of information stored in the record data 292, the recording control unit 270 deletes, from the record data 292, information that has passed its preservation period from the date and time of storage of the information in the record data 292, and ends this flow. This makes it possible for the system 20 to appropriately store information in accordance with the associated emotion. For example, information associated with a strong emotion can be stored longer than information associated with a weak emotion.

According to the system 20, the robot 40 continuously transmits information in a high-compression format such as skeleton data to the server 200 and causes the server 200 to record the transmitted information during a period in which the robot 40 is not in a significantly high emotional state. The information such as continuous skeleton data recorded in the server 200 can be used at the time of analyzing the memory of the robot 40. When the emotion of the robot 40 has been significantly raised, the robot 40 starts transmitting full HD video data and the audio data, and causes the server 200 to record information in a low-compression format including the full HD video data and the audio data in addition to the skeleton data during a period in which the highly emotional state with a certain value or more continues. Subsequently, for example, in a case where the user 30 requests the robot 40 to provide a video of memories of the robot 40, the robot 40 requests the server 200 to transmit full HD video data and audio data, and provides the video data and the audio data received from the server 200 to the user 30.

In this manner, according to the system 20, the high-quality video data of the scene in which the robot 40 held a strong emotion can be accumulated in the server 200. On the other hand, in a case where the robot 40 does not hold a strong emotion, simplified information such as skeleton data can be accumulated in the server 200. In this manner, like a human, the robot 40 can leave its clear memories at the time of holding a strong emotion, and can leave simplified memories at the time of not holding a strong emotion.

### (Third embodiment)

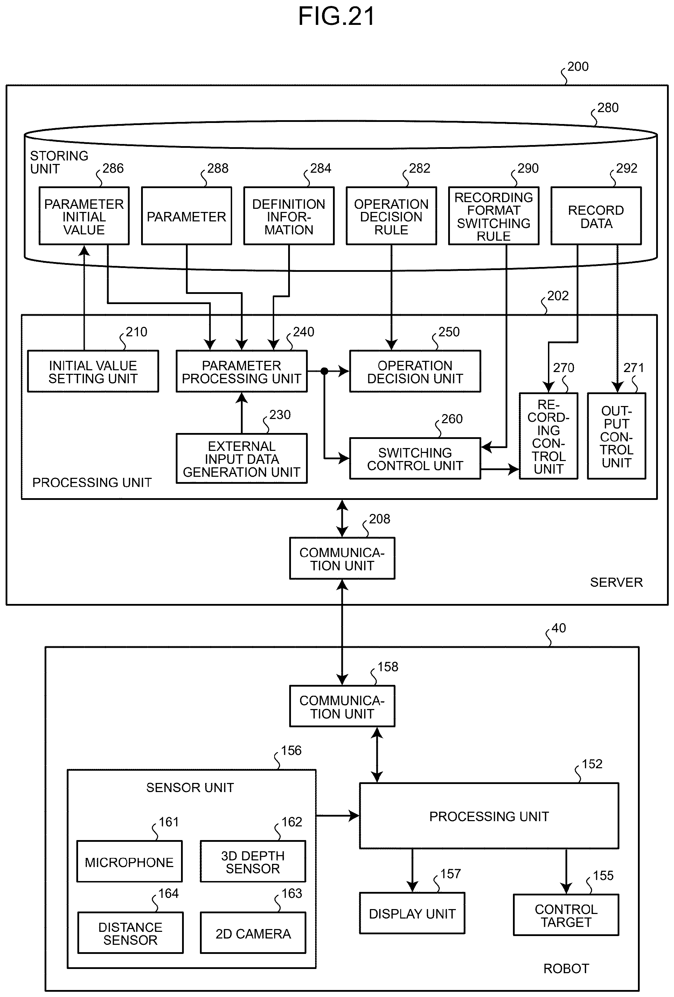

Next, a third embodiment will be described. Here, portions different from the first embodiment and the second embodiment will be mainly described. Descriptions of configurations and the like similar to those of the first embodiment and the second embodiment will be omitted. FIG. 21 is a diagram schematically illustrating a block configuration of the server 200 and the robot 40 according to the third embodiment.

As illustrated in FIG. 21, the server 200 in the present embodiment is different from the above-described embodiment in including an output control unit 271. When outputting recorded information of the second recording format, the output control unit 271 selects the information of the second recording format to be output based on the information tagged to the information of the second recording format. Specifically, the output control unit 271 selects, as an output target, information in the second recording format in which the current situation of the robot 40 and the tagged information are associated with each other.

For example, the output control unit 271 selects and outputs information in the second recording format in which the attribute of the surrounding person and the attribute of the tagged person are associated with each other. Specifically, the output control unit 271 selects and outputs video data in which the age of the surrounding person matches or is analogous to the age of the tagged person, and does not select (does not output) video data in which the age of the surrounding person does not match or is not analogous to the age of the tagged person. In addition, the output control unit 271 selects and outputs video data in which affiliation of a surrounding person and affiliation of a tagged person match or are analogous to each other. In this manner, by selecting information to be output based on the tagged information, it is possible to output only information that is likely to gain empathy and not to output information that is unlikely to gain empathy.

In addition, even in a case where there is information in the second recording format in which the attribute of the surrounding person and the attribute of the tagged person are associated with each other, if the emotion of the surrounding person is a negative emotion (anxious, sorrowful, angry, etc.), the output control unit 271 does not output (prohibits outputting) the information in the second recording format. This makes it possible to avoid information output in a situation where the user is not having an emotion of accepting the information to be output.

### (Fourth embodiment)

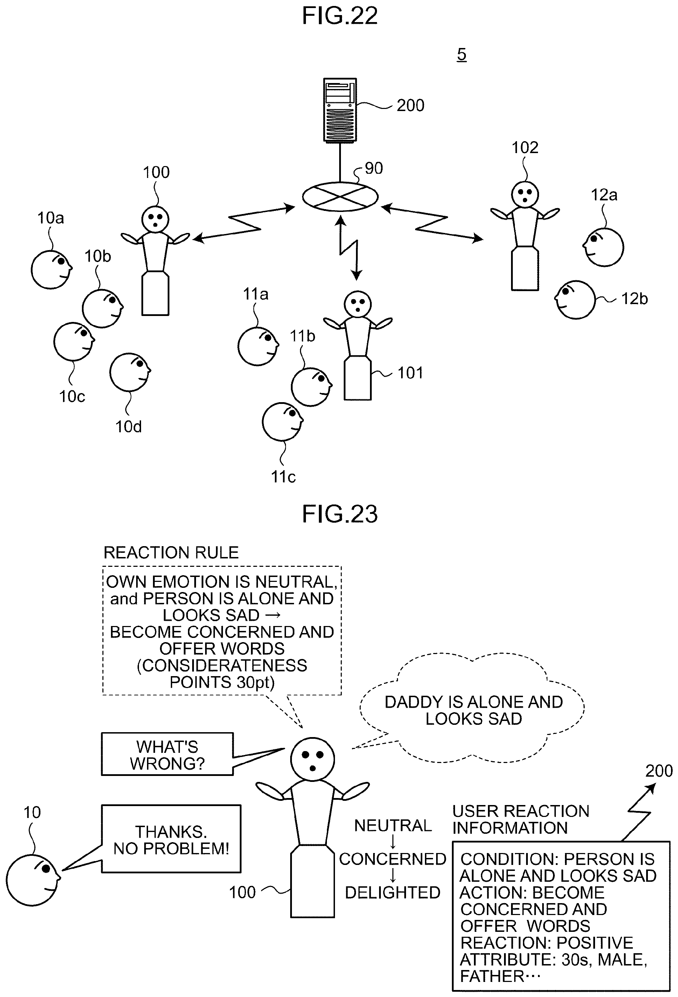

Next, a fourth embodiment will be described. Here, portions different from the above-described embodiments will be mainly described. Description of configurations and the like similar to those of the above-described embodiments will be omitted. FIG. 22 schematically illustrates an example of the system 5 according to the fourth embodiment. The system 5 includes a robot 100, a robot 101, a robot 102, and a server 200. A user 10a, a user 10b, a user 10c, and a user 10d are users of the robot 100. A user 11a, a user 11b, and a user 11c are users of the robot 101. A user 12a and a user 12b are users of the robot 102. Note that, in the description of the present embodiment, the user 10a, the user 10b, the user 10c, and the user 10d may be collectively referred to as a user 10. In addition, the user 11a, the user 11b, and the user 11c may be collectively referred to as a user 11. In addition, the user 12a and the user 12b may be collectively referred to as a user 12. The robot 101 and the robot 102 have substantially the same functions as those of the robot 100. Therefore, the system 5 will be described focusing on the function of the robot 100.

The robot 100 has a conversation with the user 10 and provides a video to the user 10. At this time, the robot 100 performs the conversation with the user 10, provides the video, etc. to the user 10 in cooperation with the server 200, etc. capable of communicating via a communication network 90. For example, the robot 100 not only performs self-learning of appropriate conversations, but also performs learning in cooperation with the server 200 so as to achieve more appropriate conversations with the user 10. In addition, the robot 100 causes the server 200 to record the captured video data and the like of the user 10, requests the video data, etc. from the server 200 as necessary, and provides the video data, etc. to the user 10.

In addition, the robot 100 has an emotion value indicating the type of its own emotion. For example, the robot 100 has emotion values indicating the intensity of each emotion of "delighted", "angry", "sad ", "joyful", "pleasant", "unpleasant", "secure", "anxious", "sorrowful", "excited", "concerned", "relieved", "fulfilled", "empty", and "neutral". For example, when the robot 100 has a conversation in a state of having a high emotion value of excitement with the user 10, the robot 100 emits a voice at a high speed. In this manner, the robot 100 can express its own emotion by action.

In addition, the robot 100 has a function of recognizing the emotion of the user 10. The robot 100 recognizes the emotion of the user 10 by analyzing a face image of the user 10 acquired by a camera function and the voice of the user 10 acquired by a microphone function. The robot 100 decides an action to be executed by the robot 100 based on the recognized emotion of the user 10 or the like. For example, in a case where the robot 100 recognizes that the user 10 looks sad, the robot 100 executes an action such as offering words to the user 10.

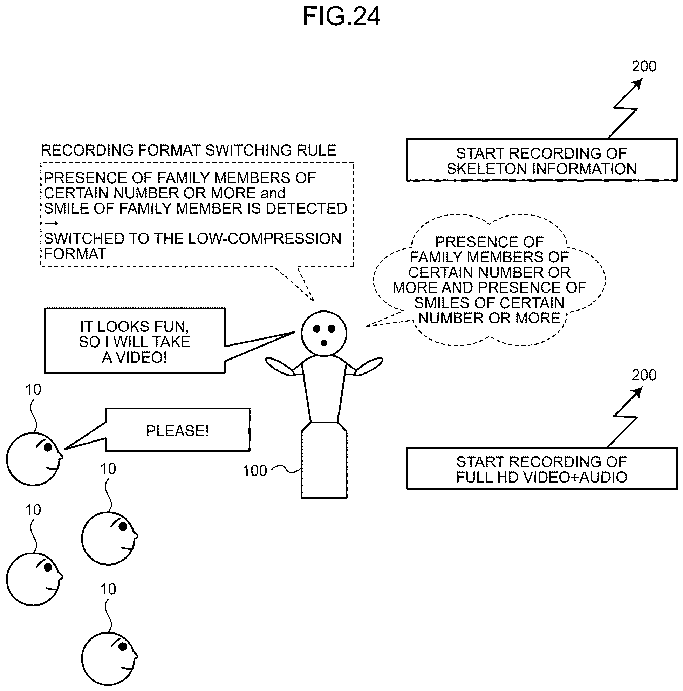

The robot 100 stores a rule defining an action to be executed by the robot 100 based on the emotion of the user 10, the emotion of the robot 100 itself, and the like, and performs various actions in accordance with the rule. An example of an action based on a rule will be schematically described with reference to FIGS. 23, 24, etc.

FIG. 23 schematically illustrates an action executed by the robot 100 with respect to the user 10. The robot 100 has a reaction rule for deciding an action based on the emotion of the user 10. The illustrated reaction rule prescribes that, when a condition that the emotion of the robot 100 is "neutral" and the state of the user is "alone and looks sad" is satisfied, it is possible to execute content of an emotional change in which the emotion of the robot 100 changes to "concerned" and an action of "offering words". Here, the action is associated with considerateness points indicating the intensity of considerateness of the user 10.

When having recognized that the current emotion of the robot 100 is "neutral" and the user 10 is alone and looks sad, the robot 100 increases the emotion value of "concerned" of the robot 100 based on the reaction rule. In addition, the robot 100 selects an action of "offering words" prescribed in the reaction rule as an action to be executed toward the user 10. For example, when having selected the action of "offering words", the robot 100 outputs a word "What's wrong?" indicating a concern and which has been converted into a concerned voice.

After outputting the voice to the user 10, the robot 100 recognizes a change in the emotion of the user 10. For example, after the robot 100 outputs a voice "What's wrong?", the user 10 replies "Thank you. No problem!" and then, by performing voice analysis on the response from the user 10, the robot 100 recognizes that the emotion of the user 10 is improved. Since the emotion of the user 10 has been improved by the action of "offering words", the robot 100 determines that the action of "offering words" is an action with high degree of considerateness and increases the considerateness points of the action of "offering words". This makes it possible for the robot 100 to learn an appropriate action for the user 10.

In addition, the robot 100 transmits, to the server 200, user reaction information indicating that a positive reaction has been obtained from the user 10 by this action. The user reaction information includes, for example, a condition of "Being alone and looking sad", an action of "offering words", a fact that the reaction of the user 10 is positive, and an attribute of the user 10.

The server 200 stores the user reaction information received from the robot 100. Note that the server 200 receives and stores the user reaction information not only from the robot 100 but also from each of the robot 101 and the robot 102. The server 200 analyzes the user reaction information from the robot 100, the robot 101, and the robot 102, and generates a recommended reaction rule.

The robot 100 inquires the server 200 about the recommended reaction rule and thereby receives the recommended reaction rule from the server 200. The robot 100 incorporates the recommended reaction rule into the reaction rule stored in the robot 100. This makes it possible for the robot 100 to incorporate the reaction rule acquired by the robot 101, the robot 102, or the like into its own reaction rule.

FIG. 24 is a diagram schematically illustrating a scene in which the robot 100 executes switching of a recording format of data to be recorded in the server 200. The robot 100 has a recording format switching rule for switching the recording format based on the emotion of the user 10. The illustrated recording format switching rule prescribes taking an action of "switching the data recording format to the low-compression format" when the conditions of "the presence of family members of a certain number or more" and "a certain number or more smiles of the family were detected" are satisfied.

During a period in which the condition of the recording format switching rule is not satisfied, the robot 100 continuously transmits high-compression data such as skeleton data of the user 10 to the server 200 and causes the server 200 to record the data. The skeleton data is an example of shape data representing the shape of the user. When having determined that the conditions of the recording format switching rule are satisfied, the robot 100 starts transmitting full HD video data and audio data, and causes the server 200 to record low-compression data including the full HD video data and audio data in addition to the skeleton data.

When providing some enjoyable video to the user 10, the robot 100 requests the server 200 to transmit full HD video data and audio data, and provides the video data received from the server 200 to the user 10. With this configuration, in a case where the user 10 encounters a highly memorable scene, the robot 100 can accumulate high quality video data of the scene in the server 200.

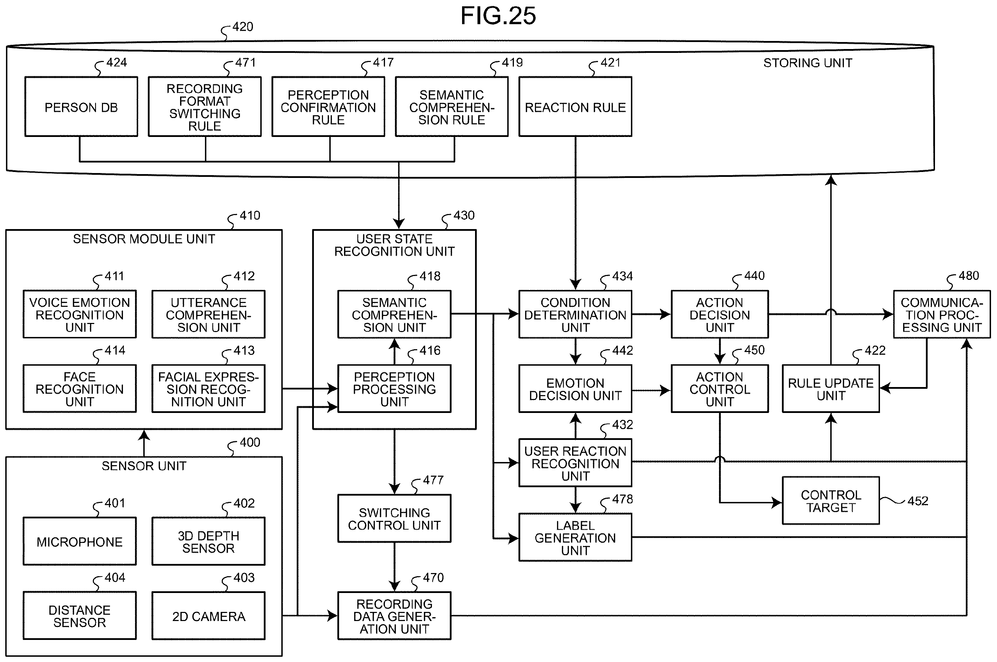

FIG. 25 schematically illustrates a functional configuration of the robot 100. The robot 100 includes a sensor unit 400, a sensor module unit 410, a storing unit 420, a user state recognition unit 430, a condition determination unit 434, a user reaction recognition unit 432, an action decision unit 440, an emotion decision unit 442, a rule update unit 422, a communication processing unit 480, a recording data generation unit 470, a switching control unit 477, a label generation unit 478, and a control target 452.

The control target 452 includes a display device, a speaker, LEDs of eye portions, motors that drive arms, hands, legs, etc. The posture and gesture of the robot 100 are controlled by controlling the motors for the portions such as arms, hands, and legs. Some of the emotions of the robot 100 can be expressed by controlling these motors. In addition, by controlling the light emission state of the LEDs at the eye portions of the robot 100, part of the emotion of the robot 100 can be expressed. The posture, gesture, and facial expression of the robot 100 are examples of the attitude of the robot 100.

The sensor unit 400 includes a microphone 401, a 3D depth sensor 402, a 2D camera 403, and a distance sensor 404. The sensor unit 400 may further include a clock, a gyro sensor, a touch sensor, a motor feedback sensor, and the like.

Note that, among the components of the robot 100 illustrated in FIG. 25, the components other than the control target 452 and the sensor unit 400 are examples of the components included in the action control system of the robot 100. The action control system of the robot 100 sets the control target 452 as a target of control.

The storing unit 420 includes a reaction rule 421, a perception confirmation rule 417, a semantic comprehension rule 419, a recording format switching rule 471, and a person DB 424. At least a part of the storing unit 420 is implemented by a storage medium such as memory. The person DB 424 stores a face image of the user 10, attribute information of the user 10, and the like. Among the components of the robot 100 illustrated in FIG. 518, the functions of the components other than the control target 452, the sensor unit 400, and the storing unit 420 can be implemented by the CPU operating based on a program. For example, the functions of these components can be implemented as the operation of the CPU by basic software (OS) and a program operating on the OS.

The sensor module unit 410 includes a voice emotion recognition unit 411, an utterance comprehension unit 412, a facial expression recognition unit 413, and a face recognition unit 414. The sensor module unit 410 receives input of information detected by the sensor unit 400. The sensor module unit 410 analyzes information detected by the sensor unit 400 and outputs an analysis result to the user state recognition unit 430.

The voice emotion recognition unit 411 of the sensor module unit 410 analyzes the voice of the user 10 detected by the microphone 401 to recognize the emotion of the user 10. For example, the voice emotion recognition unit 411 extracts features such as a frequency component of voice and recognizes the emotion of the user 10 based on the extracted features. The utterance comprehension unit 412 analyzes the voice of the user 10 detected by the microphone 401 and outputs textual information indicating the utterance content of the user 10.

The facial expression recognition unit 413 recognizes the facial expression of the user 10 and the emotion of the user 10 from the image of the user 10 captured by the 2D camera 403. For example, the facial expression recognition unit 413 recognizes the facial expression and emotion of the user 10 based on the shapes, positional relationships, and the like of the eyes and the mouth.

The face recognition unit 414 recognizes the face of the user 10. The face recognition unit 414 recognizes the user 10 by checking the match between the face image stored in the person DB 424 and the face image of the user 10 captured by the 2D camera 403.

The user state recognition unit 430 recognizes the state of the user 10. The user state recognition unit 430 includes a perception processing unit 416 and a semantic comprehension unit 418. The information analyzed by the sensor module unit 410 is output to the perception processing unit 416. The perception processing unit 416 mainly performs processing related to perception using the analysis result of the sensor module unit 410 and the perception confirmation rule 417 of the storing unit 420. For example, the perception processing unit 416 generates perception information such as "Daddy is alone" and "Daddy is not smiling with probability of 90%".

The semantic comprehension unit 418 performs processing of understanding the meaning of the perception information generated by the perception processing unit 416 using the semantic comprehension rule 419 of the storing unit 420. For example, the semantic comprehension unit 418 generates semantic information such as "Daddy is alone and looks sad". The perception information and the semantic information are examples of information indicating the state of the user 10. Here, the information indicating the state of the user 10 may include information indicating the emotion of the user 10.

The semantic information generated by the semantic comprehension unit 418 is output to the condition determination unit 434, the user reaction recognition unit 432, and the label generation unit 478.

The condition determination unit 434 determines that the conditions prescribed in the reaction rule 421 are satisfied based on the semantic information and the reaction rule 421 in the storing unit 420. The reaction rule 421 is an example of decision information for deciding an action of the robot 100. As described above, the plurality of actions and the considerateness points of the plurality of actions are associated with each other by the reaction rule 421. In addition, the reaction rule 421 includes information for deciding an action based on an emotion value indicating an emotion in the robot 100 and the state of the user 10. In this manner, the storing unit 420 functions as an example of an action information storage unit that stores information for deciding the action based on the state of the user.

The condition determination unit 434 determines that the conditions stored by the reaction rule 421 are satisfied. The action decision unit 440 decides an action to be executed from among a plurality of actions stored in the reaction rule 421 in association with the conditions determined to be satisfied by the condition determination unit 434. Specifically, the action decision unit 440 decides an action to be executed based on individual considerateness points of a plurality of actions stored by the reaction rule 421 in association with the condition determined to be satisfied by the condition determination unit 434. In this manner, the action decision unit 440 decides an action to be executed based on the state of the user 10 recognized by the user state recognition unit 430 and the information of the reaction rule 421.

The emotion decision unit 442 decides an emotion value indicating the current emotion of the robot 100 based on the semantic information generated by the semantic comprehension unit 418. In this manner, the emotion decision unit 442 decides an emotion value indicating the current emotion of the robot 100 based on the user state recognized by the user state recognition unit 430.

An action control unit 450 controls the control target 452 based on the action decided by the action decision unit 440. For example, when the action decision unit 440 has decided to perform utterance, the action control unit 450 controls to output a voice from the speaker included in the control target 452. At this time, the action control unit 450 decides the speaking speed of the voice based on the emotion value updated by the emotion decision unit 442. For example, the action control unit 450 decides the speed such that the larger the emotion value of excitement, the higher the generation speed will be. In this manner, the action control unit 450 decides an execution mode of the action decided by the action decision unit 440 based on the emotion value decided by the emotion decision unit 442.

The user reaction recognition unit 432 recognizes a change in the emotion of the user 10 in response to the execution of the action decided by the action decision unit 440. The change in the emotion of the user 10 is an example of the reaction of the user 10. In other words, the user reaction recognition unit 432 recognizes the reaction of the user 10 to the execution of the action decided by the action decision unit 440. Note that the user reaction recognition unit 432 may recognize a change in emotion based on the voice or the facial expression of the user 10. In addition, the user reaction recognition unit 432 may recognize the change in the emotion of the user 10 based on detection of an impact by the touch sensor included in the sensor unit 400. For example, the user reaction recognition unit 432 may recognize that the emotion of the user 10 has worsened in a case where an impact has been detected by the touch sensor included in the sensor unit 400.

Information indicating the reaction of the user 10 recognized by the user reaction recognition unit 432 is output to the emotion decision unit 442, the communication processing unit 480, and the label generation unit 478. As described above, in a case where the user state recognition unit 430 recognizes that the user 10 looks sad, the emotion decision unit 442 may increase the emotion value of sorrow in accordance with the reaction rule 421. In addition, in a case where the user reaction recognition unit 432 has recognized that the user 10 has made a smile, the emotion value of delight may be increased by the reaction rule 421. In this manner, the emotion decision unit 442 updates the emotion value based on at least one of the state of the user recognized by the user state recognition unit 430 and the reaction of the user to the execution of the action decided by the action decision unit 440.

In addition, based on the change in the emotion of the user 10 recognized by the user reaction recognition unit 432, the rule update unit 422 changes the considerateness points stored by the reaction rule 421 in association with the action decided by the action decision unit 440. Specifically, based on the change in the emotion of the user 10 recognized by the user reaction recognition unit 432, the rule update unit 422 changes the considerateness points of the action decided by the action decision unit 440 among the considerateness points of the plurality of actions stored by the reaction rule 421 in association with the condition determined to be satisfied by the condition determination unit 434. For example, in a case where the user reaction recognition unit 432 recognizes that the emotion of the user 10 is improved, the rule update unit 422 increases the considerateness points stored by the reaction rule 421 in association with the condition determined to be satisfied by the condition determination unit 434 and the action decided by the action decision unit 440. In contrast, in a case where the user reaction recognition unit 432 recognizes that the emotion of the user 10 has worsened, the rule update unit 422 decreases the considerateness points stored by the reaction rule 421 in association with the condition determined to be satisfied by the condition determination unit 434 and the action decided by the action decision unit 440.

The communication processing unit 480 is responsible for communication with the server 200. As described above, the communication processing unit 480 transmits the user reaction information to the server 200. In this manner, the communication processing unit 480 transmits, to the server 200, the state of the user 10 recognized by the user state recognition unit 430, the action decided by the action decision unit 440, and the reaction of the user 10 recognized by the user reaction recognition unit 432. In addition, in a case where the action decision unit 440 has not been able to decide an action to be executed based on the state of the user 10 and the reaction rule 421, the communication processing unit 480 receives a recommended reaction rule from the server 200. In this manner, in a case where the action decision unit 440 has not been able to decide the action to be executed based on the state of the user 10 and the reaction rule 421, the communication processing unit 480 receives, from the server 200, the action suitable for the state of the user 10 recognized by the user state recognition unit 430.

The rule update unit 422 updates the reaction rule 421 based on the recommended reaction rule received by communication processing unit 480 from the server 200. In this manner, the rule update unit 422 updates the reaction rule 421 based on the action received by the communication processing unit 480 from the server 200.

Note that, in a case where the action decision unit 440 has not been able to decide an action for the user based on the state of the user 10 recognized by the user state recognition unit 430, the emotion decision unit 442 may change the emotion value indicating the intensity of sorrow to a value indicating a greater intensity of sorrow.

The recording data generation unit 470 generates data to be recorded in the server 200 based on the information detected by the sensor unit 400. The communication processing unit 480 transmits the information generated by the recording data generation unit 470 to an external server and causes the server to record the information.

For example, the recording data generation unit 470 continuously generates skeleton data for recording based on skeleton information continuously detected by the 3D depth sensor 402. In addition, the recording data generation unit 470 generates video data for recording based on the video information captured by the 2D camera 403. For example, the recording data generation unit 470 generates full HD video data. In addition, the recording data generation unit 470 generates audio data for recording based on the audio information continuously detected by the microphone 401.

Here, the video data is full HD video data, for example, and has a larger information volume than the skeleton data. Accordingly, the skeleton data may be regarded as high-compression data and the video data may be regarded as low-compression data. In this manner, the skeleton data is an example of information in the first recording format, while the video data is an example of information in the second recording format having a larger information volume than the information in the first recording format. In this manner, the recording data generation unit 470 continuously processes at least part of the information detected by the sensor that continuously detects the user 10, and generates the information in the first recording format or the information in the second recording format having a larger information volume than the information in the first recording format.

Here, based on at least a part of the information detected by the sensor unit 400, the perception processing unit 416 perceives the number of recognized family members and the number of family members detected to be smiling. As described above, the perception processing unit 416 perceives the smiling user based on at least one of the image of the user 10 and the voice of the user 10 detected by the sensor unit 400. Here, the smile is an example of information indicating the intensity of the emotion of the user 10. Therefore, the number of family members detected to be smiling is an example of the total value of the intensity of emotions of the plurality of users 10. In this manner, the perception processing unit 416 detects the intensity of the emotion of the user based on at least a part of the information detected by the sensor unit 400.

Subsequently, based on the recording format switching rule 471, the perception processing unit 416 perceives whether family members of a certain number or more have been recognized and smiles of family members of a certain number or more have been detected. Subsequently, in response to the recognition of family members of a certain number or more and the detection of the smiles of family members of a certain number or more by the perception processing unit 416 when having the recording data generation unit 470 generate the skeleton data, the switching control unit 477 will have the recording data generation unit 470 start generation of video data. In this manner, in response to an event in which the number of the plurality of users 10 exceeds a predetermined number of people and the total value of the detected emotion intensity exceeds a predetermined threshold when having the recording data generation unit 470 generate the information in the first recording format, the switching control unit 477 switches the recording format of the information to be generated by the recording data generation unit 470 from the first recording format to the second recording format having an information volume larger than that of the information in the first recording format.

The label generation unit 478 generates a label attached to and recorded in the record data. The label is an example of supplementary information attached to the record data. The label generation unit 478 generates a label including words such as "Yoshiko's birthday" and "Yoshiko's birthday party". Other examples of the label can include "school graduation greeting", "Christmas", and "New Year". Based on date and time information and the content of a response recognized by the user reaction recognition unit 432 to a question to the user 10, the label generation unit 478 determines a situation such as being a birthday or having a birthday party and generates a label based on the determined situation. In this manner, the label generation unit 478 generates a label including one or more words indicating the current situation based on at least a part of the information detected by the sensor unit 400. The communication processing unit 480 associates the record data generated by the recording data generation unit 470 with the label generated by the label generation unit 478, transmits the obtained data to the server 200, and causes the server 200 to record the label.

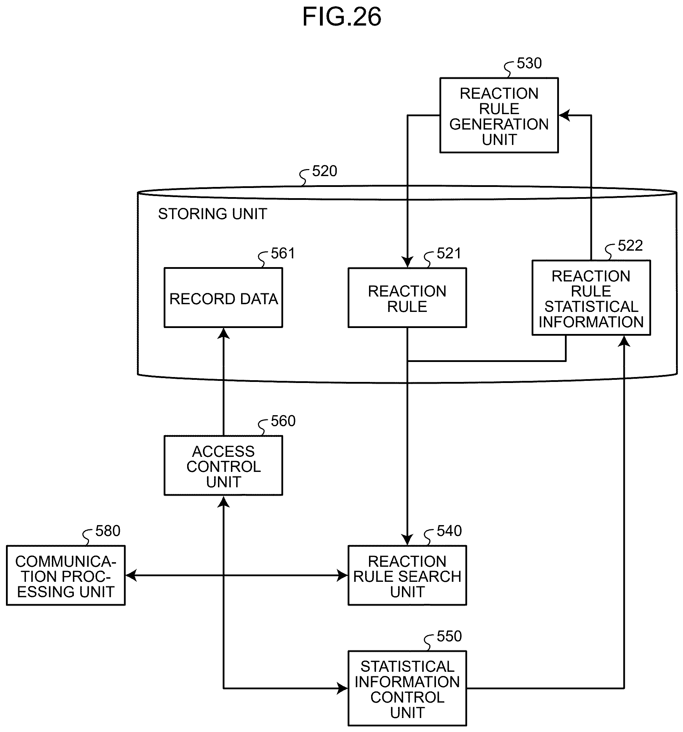

FIG. 26 schematically illustrates a functional configuration of the server 200. The server 200 includes a storing unit 520, a reaction rule generation unit 530, a reaction rule search unit 540, a statistical information control unit 550, an access control unit 560, and a communication processing unit 580.

The storing unit 520 stores a reaction rule 521, reaction rule statistical information 522, and record data 561. The reaction rule 521 includes information similar to that of the reaction rule 421. In addition to information similar to the reaction rule 421, the reaction rule statistical information 522 also includes attribute information of the user 10, the user 11, and the user 12 and information of a ratio at which a positive reaction is obtained. The record data 561 is data for recording such as the skeleton data, the video data, and the audio data described above.

The communication processing unit 580 is responsible for communication between the server 200 and the robots, namely, the robot 100, the robot 101, and the robot 102. The communication processing unit 580 receives the user reaction information transmitted from the robot 100. As described above, the robot 101 and the robot 102 also have functions similar to the functions of the robot 100. Accordingly, for example, the robot 101 transmits, to the server 200, user reaction information including a reaction to the action executed on the user 11. The communication processing unit 580 receives the user reaction information transmitted from the robot 101 and the user reaction information transmitted from the robot 102. In this manner, the communication processing unit 580 receives, from the robot 101, the state of the user 11 recognized in the robot 101, the action decided based on the state of the user 11 in the robot 101, and the reaction of the user 11 to the execution of the action.

The statistical information control unit 550 accumulates the user reaction information received by the communication processing unit 580 as the reaction rule statistical information 522 of the storing unit 520. In this manner, the storing unit 520 stores the state of the user, the action, and the reaction of the user received by the communication processing unit 580 in association with each other. The user reaction information accumulated in the statistical information control unit 550 includes user reaction information related to the user 10, user reaction information related to the user 11, and user reaction information related to the user 12.

Based on the user reaction information accumulated in the reaction rule statistical information 522, the reaction rule generation unit 530 generates a recommended reaction rule and stores the generated reaction rule as the reaction rule 521. Based on the information included in the reaction rule statistical information 522, a reaction rule including the action that has achieved a positive reaction is generated as a recommended reaction rule.

Here, an operation in a case where the robot 100 inquires of the server 200 about a recommended reaction rule will be described. The robot 100 transmits the state of the user 10 recognized in the robot 100 to the server 200 to inquire of the server 200 about the recommended reaction rule. In this case, the reaction rule search unit 540 searches at least one of the reaction rule 521 and the reaction rule statistical information 522 for a reaction rule having a condition satisfied by the state of the user 10 received by the communication processing unit 580. The communication processing unit 580 transmits the reaction rule searched by the reaction rule search unit 540 to the robot 100 as a recommended reaction rule.

In this manner, based on the reaction of the user 10 stored in an action result storage unit in association with the state matching the state of the user received by the communication processing unit 580, the reaction rule search unit 540 selects an action suitable for the state of the user 10 received by the communication processing unit 580 from among the actions stored in the reaction rule statistical information 522 in association with the state matching the state of the user 10 received by the communication processing unit 580, The communication processing unit 580 transmits the action selected by the reaction rule search unit 540 to the robot 100.

The access control unit 560 stores the record data received by the communication processing unit 580 from each of the robot 100, the robot 101, and the robot 102 in the record data 561 of the storing unit 520. In addition, when the communication processing unit 580 has received a record data transmission request, the access control unit 560 reads the requested record data from the record data 561 and causes the communication processing unit 580 to transmit the read data.

Among the components of the robot 100 illustrated in FIG. 26, the functions of the components other than the storing unit 420 can be implemented by the CPU operating based on a program. For example, the functions of these components can be implemented as the operation of the CPU by basic software (OS) and a program operating on the OS.

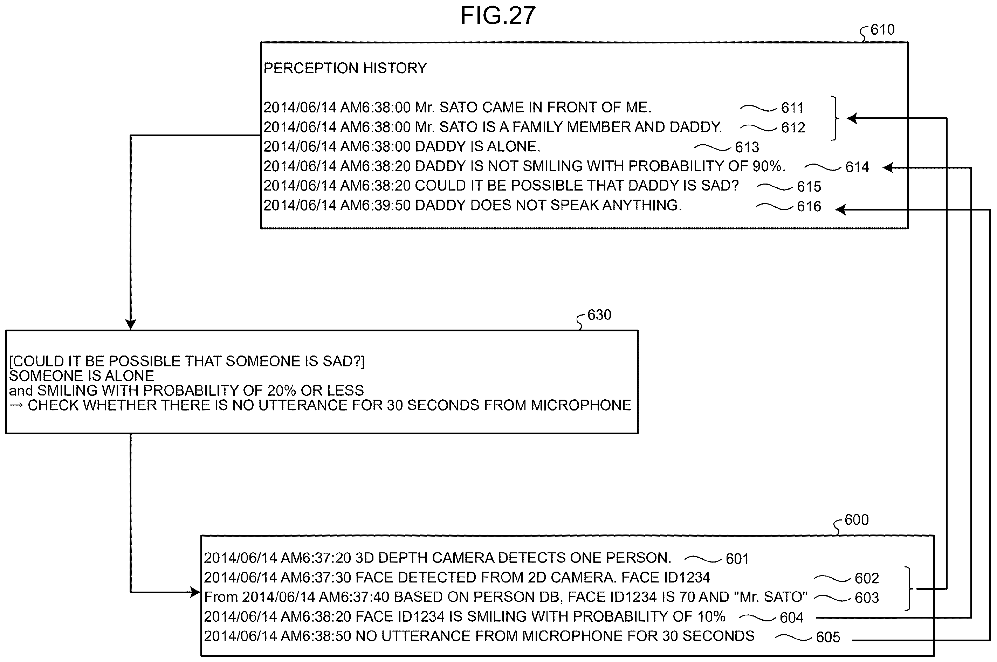

FIG. 27 schematically illustrates information perceived by the perception processing unit 416. When having received input of person detection information 601 obtained by the 3D depth sensor 402, face detection information 602 obtained by the face recognition unit 414, and user recognition information 603, the perception processing unit 416 integrates the person detection information 601, the face detection information 602, and the user recognition information 603 to generate perception information 611, perception information 612, and perception information 613. Subsequently, when smile detection information 604 has been input from the facial expression recognition unit 413, the smile detection information 604 is converted to generate perception information 614. In addition, based on the high probability of not smiling perceived by the perception information 614, the perception processing unit 416 perceives that "Could it be possible that daddy is sad?" (perception information 615).

Here, the perception confirmation rule 417 includes, as a perception confirmation rule in a case where it is perceived that "Could it be possible that a person is sad?", a perception confirmation rule 630 having a condition part that "someone is alone" and "a probability of smiling is 20% or less" and a conclusion part that "Check whether there is no utterance for 30 seconds from microphone". The perception processing unit 416 determines that the condition part of the perception confirmation rule 630 is satisfied from the perception information 613 and the smile detection information 604, and executes confirmation of the detection result by the microphone 401 based on the conclusion part of the perception confirmation rule 630. Specifically, the perception processing unit 416 has the utterance comprehension unit 412 analyze the voice output from the microphone 401.

Here, in a case where the voice has not been detected for 30 seconds by the microphone 401, the utterance comprehension unit 412 outputs timeout information indicating that no utterance has been detected for 30 seconds. When having received input of the timeout information 605 from the utterance comprehension unit 412, the perception processing unit 416 converts timeout information 605 into perception information 616 "Daddy does not say anything".

With this procedure, the perception processing unit 416 generates perception history 610 including the perception information 611, the perception information 612, the perception information 613, the perception information 614, the perception information 615, and the perception information 616. The perception processing unit 416 outputs the generated perception information to the semantic comprehension unit 418.

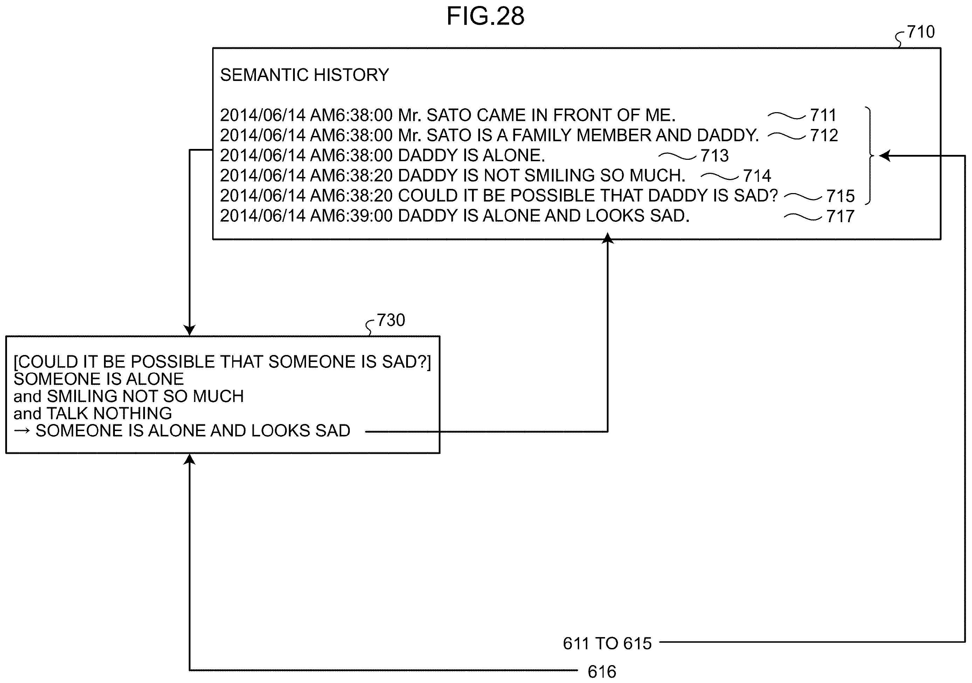

FIG. 28 schematically illustrates information to be a comprehension object of the semantic comprehension unit 418. The semantic comprehension unit 418 receives input of the perception history 610 generated by the perception processing unit 416. Based on the perception information 611, the perception information 612, the perception information 613, the perception information 614, and the perception information 615, the semantic comprehension unit 418 respectively generates semantic information 711, semantic information 712, semantic information 713, semantic information 714, and semantic information 715.

In a case where the semantic information 714 is to be generated from the perception information 614, the semantic comprehension unit 418 applies obscuration to numerical information of "probability 90%" included in the perception information 614 so as to be information of "not (...) very much". This allows the semantic comprehension unit 418 to generate the semantic information 714 in which the perception information 614 is obscured.

Here, the semantic comprehension rule 419 includes, as a semantic confirmation rule in the case of having a comprehension of "Could it be possible that the person is sad?", a semantic comprehension rule 730 having a condition part of "someone is alone", "not so smiling", and "not speaking anything" and a conclusion part of making a comprehension of "Someone is alone and looks sad". When having determined that the semantic information 713, the semantic information 714, and the perception information 616 satisfy the condition part of the semantic comprehension rule 730 based on the semantic comprehension rule 730, the semantic comprehension unit 418 generates semantic information 717 of "Daddy is alone and looks sad". In this manner, the semantic comprehension unit 418 integrates the semantic information 714 and the perception information 616 using the semantic comprehension rule 730 to generate the semantic information 717.

With this procedure, the semantic comprehension unit 418 generates the meaning history 710 including the semantic information 711, the semantic information 712, the semantic information 713, the semantic information 714, the semantic information 715, and the semantic information 717. The semantic information generated by the semantic comprehension unit 418 is output to the condition determination unit 434, the user reaction recognition unit 432, and the label generation unit 478.

As described in relation to FIGS. 27 and 28, etc., the perception processing unit 416 and the semantic comprehension unit 418 store the meaning of the perception result in an obscured manner using patterned language with loss of precision in the perception result.

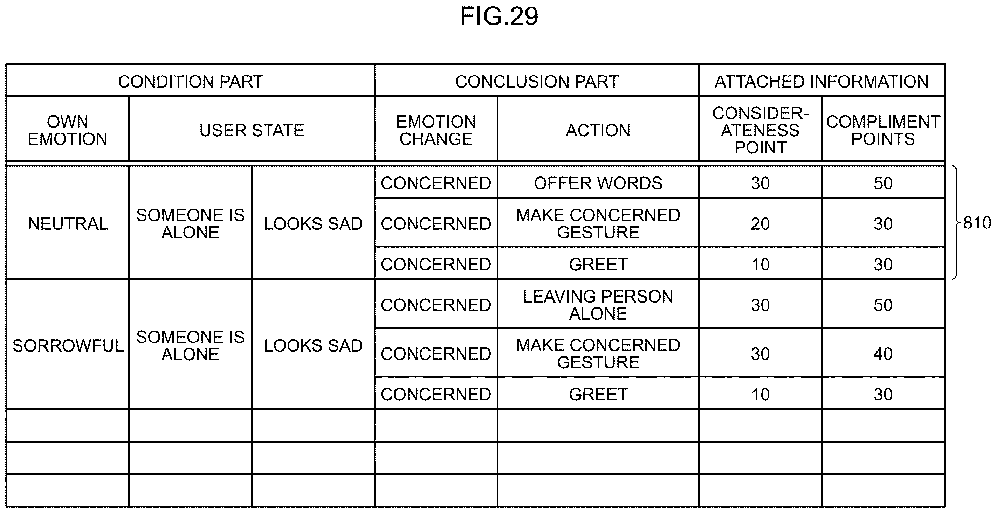

FIG. 29 illustrates information included in the reaction rule 421 in a table format. The reaction rule 421 includes: a condition part including conditions of "own emotion" and "user state"; a conclusion part including "emotion change" and "action"; and "attached information" including "considerateness points" and "compliment points".

The condition of "own emotion" is a condition related to its own emotion, that is, the emotion of the robot 100. The "user state" is a condition related to the state of the user 10. The "emotion change" indicates how to change the emotion of the robot 100. "Action" represents an action that the robot 100 can execute. The "considerateness point" indicates a degree of considerateness toward the user 10. The "considerateness point" is an example of the appropriateness.

As illustrated, the condition part of the reaction rule 421 includes a condition of "own emotion" being "normal" and a "user state" of "Someone is alone and looks sad". The conclusion part corresponding to this condition part includes "emotion change" indicating an emotion change of "concerned". In addition, "actions" indicating actions such as "offering words", "returning only a gesture of being concerned", and "greeting" are included as the conclusion part corresponding to this condition part. In addition, the points associated by the "attached information" with "considerateness points" for the actions of "offering words", "returning only a gesture of being concerned", and "greeting", are 30 points, 20 points, and 10 points, respectively. In addition, the points associated by the "attached information" with "compliment points" for the actions of "offering words", "returning only a gesture of being concerned", and "greeting", are 50 points, 30 points, and 30 points, respectively.

In this manner, the reaction rule 421 includes information indicating the condition indicating the state of the user to be satisfied and the action associated with the condition. In addition, the reaction rule 421 includes information indicating a condition indicating an emotion of the robot 100 to be satisfied and an action associated with the condition. In addition, the reaction rule 421 includes emotion change information for changing the emotion value based on the emotion value of the robot 100 and the state of the user 10. The emotion decision unit 442 updates the emotion value based on the emotion change information stored by the reaction rule 421 in association with the emotion value decided by the emotion decision unit 442 and the state of the user 10 recognized by the user state recognition unit 430.

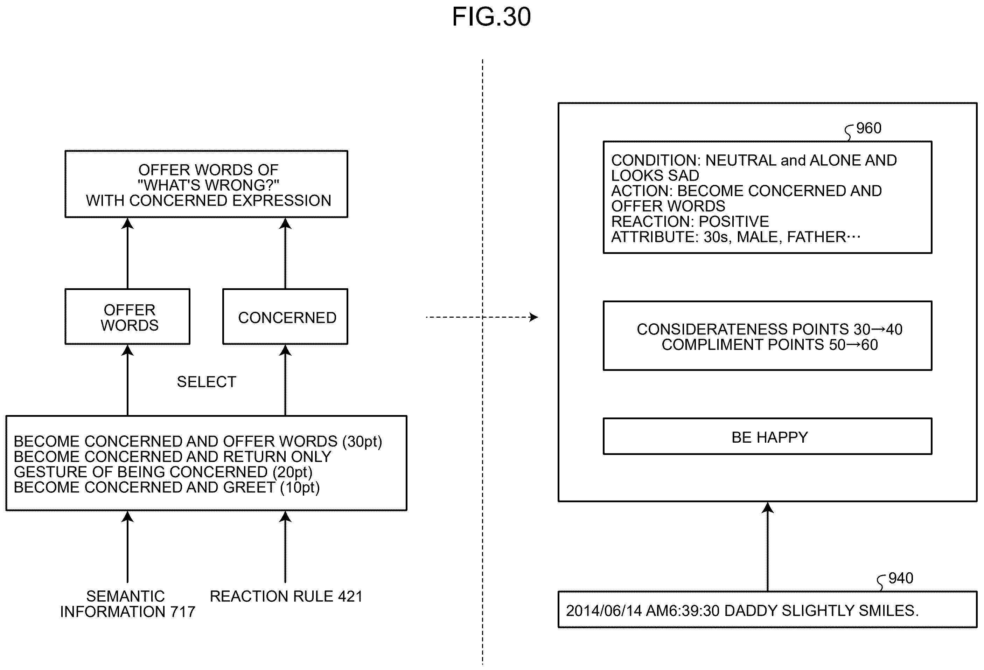

FIG. 30 schematically illustrates processing based on the reaction rule 421. When the semantic information 717 of "Daddy is alone and looks sad" has been input from the semantic comprehension unit 418, the condition determination unit 434 searches the reaction rule 421 for a condition part that is satisfied by the state of the user 10 "Daddy is alone and looks sad" and the "neutral" emotion which is the current emotion of the robot 100.

The condition determination unit 434 determines that the state of the user 10 "Daddy is alone and looks sad" and the emotion of "neutral" satisfy the condition of the reaction rule 421 in a reaction rule 810. This causes the action decision unit 440 to specify "offering words", "returning only a gesture of being concerned", and "greeting" prescribed in the reaction rule 810 as action candidates 910. The action decision unit 440 selects an action to be actually executed from the action candidates 910 specified. For example, the action decision unit 440 selects one action with a selection probability corresponding to the magnitude of the considerateness point. Here, it is assumed that the action decision unit 440 selects an action of "offering words".

In addition, the emotion decision unit 442 updates the emotion value based on the content of the emotion change of becoming "concerned" prescribed in the reaction rule 810. For example, the emotion decision unit 442 increases the emotion value of "concerned" indicating the intensity of concern. In this manner, the emotion decision unit 442 updates the emotion value based on the state of the user 10 recognized by the user state recognition unit 430 based on the reaction rule 421. For example, in a case where the user state recognition unit 430 recognizes that the user 10 is in a state of emotion alone, the emotion decision unit 442 changes the emotion value indicating the intensity of concern to a value indicating a higher intensity of concern.

Subsequently, the action control unit 450 controls to output a voice with utterance content of "What's wrong?" from the speaker of the control target 452. At this time, the action control unit 450 controls to output a voice having a voice characteristic indicating an emotion of being concerned based on the current emotion value. For example, a voice having a relatively slow speed is generated. Note that the action control unit 450 may decide the utterance content of "What's wrong?" based on the emotion of "concerned".

Subsequently, the user reaction recognition unit 432 waits for a reaction of the user 10 to be detected. For example, when there is an output of voice such as "No problem. Thanks!" or semantic information 940 being "He smiles a little" based on the expression of the face of the user 10 at that time, from the semantic comprehension unit 418, the user reaction recognition unit 432 determines that the user 10 has changed from an emotion of "looking sad" to an emotion of "looking joyful". Accordingly, the rule update unit 422 determines that the emotion of the user 10 is improved by the action of "offering words". This causes the considerateness points for the action of "offering words" to increase from 30 points to 40 points. In addition, the rule update unit 422 increases the compliment points from 50 points to 60 points.

In addition, the emotion decision unit 442 increases the emotion value of delight since the emotion of the user 10 is improved by the action executed by the robot 100. In addition, the action control unit 450 expresses an emotion of delight in an operation based on the increased emotion value of delight. For example, the action control unit 450 controls to make a gesture indicating delight.

In addition, the communication processing unit 480 transmits, to the server 200, user reaction information 960 including information other than "considerateness points" and "compliment points" in the information included in the reaction rule 810, information indicating that the reaction of the user 10 is positive, and the attribute of the user 10 recognized as "daddy".

In this manner, the action decision unit 440 decides an action to be executed based on the emotion value decided by the emotion decision unit 442, the state of the user recognized by the user state recognition unit 430, and the reaction rule 421. Specifically, from among a plurality of actions stored by the reaction rule 421 in association with the condition determined to be satisfied by the condition determination unit 434, the action decision unit 440 decides, at a higher frequency, an action having a higher considerateness points stored by the reaction rule 421 in association with the condition determined to be satisfied by the condition determination unit 434, as an action to be executed. Note that the action decision unit 440 may select the action with the largest considerateness points as the action to be actually executed. In this case, when there is a plurality of actions having the largest considerateness point, the action decision unit 440 may randomly select one action to be actually executed from among the plurality of actions having the largest considerateness point. In this case, the action decision unit 440 may select one action to be actually executed with a selection probability corresponding to the compliment points.

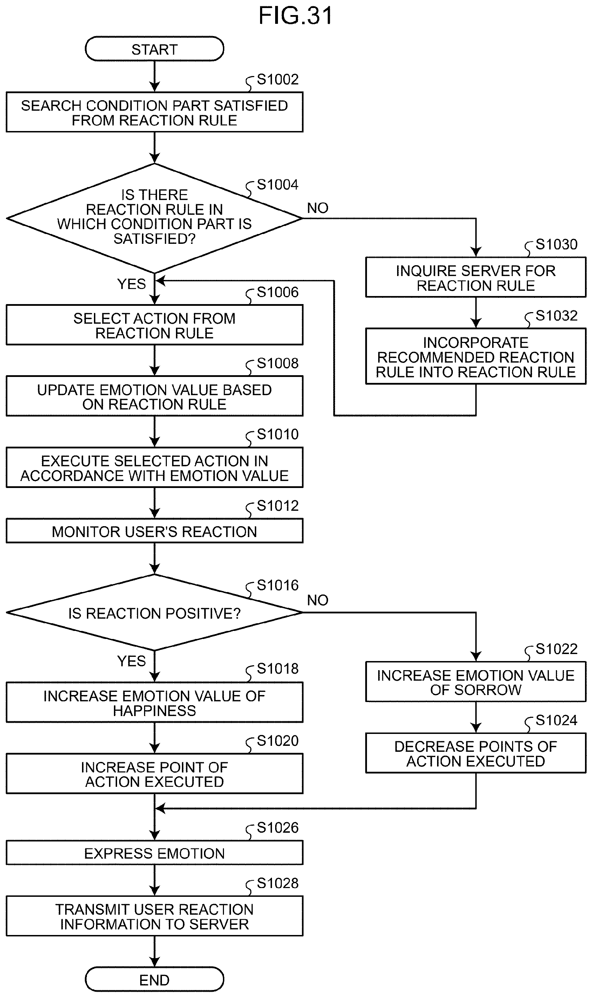

FIG. 31 schematically illustrates an example of an operation flow related to an operation of deciding an action in the robot 100. The operation flow illustrated in FIG. 1124 is started in a case where semantic information including the emotion of the user 10 has been input, for example.

The condition determination unit 434 searches for a condition part satisfied by the emotion of the robot 100 and the input semantic information, among the condition parts included in the reaction rule 421 (S1002). The condition determination unit 434 determines the presence or absence of a reaction rule in which the condition part is satisfied (S1004). In a case where it is decided that there is a reaction rule in which the condition part is satisfied, the action decision unit 440 selects one action to be executed for the user 10 from among actions prescribed by the conclusion part of the searched reaction rule (S1006). In addition, the emotion decision unit 442 updates the emotion value based on the emotion change decided by the conclusion part of the searched reaction rule (S1008).

Subsequently, the action control unit 450 controls the control target 452 to execute the action selected in S1006 (S1010). At this time, the action control unit 450 controls the control target 452 based on the emotion value updated in S1008. For example, in the case of expressing an emotion of "concerned", the action control unit 450 controls the control target 452 so that the robot 100 takes a concerned posture.

Subsequently, the user reaction recognition unit 432 monitors input of semantic information indicating a reaction of the user 10 (S1012). When semantic information indicating a reaction of the user 10 has been input, the user reaction recognition unit 432 determines whether the reaction of the user is positive based on the input semantic information (S1016).

In a case where the emotion decision unit 442 has decided that the reaction is positive in the determination of S1016, the emotion decision unit increases the emotion value of "delighted" (S1018). In addition, the rule update unit 422 increases the considerateness points and the compliment points corresponding to the executed action. On the other hand, in a case where a negative reaction is obtained in the determination of S1016, the emotion decision unit 442 increases the emotion value of "sad" (S1022). In addition, the rule update unit 422 decreases the considerateness points and the compliment points corresponding to the executed action (S1024).

In this manner, in a case where the user's reaction recognized by the user reaction recognition unit 432 is not bad, the rule update unit 422 increases the considerateness points stored by the reaction rule 421 in association with the condition determined to be satisfied by the condition determination unit 434 and the action decided by the action decision unit 440. In contrast, in a case where the user's reaction recognized by the user reaction recognition unit 432 is bad, the rule update unit 422 decreases the considerateness points stored by the reaction rule 421 in association with the condition determined to be satisfied by the condition determination unit 434 and the action decided by the action decision unit 440.

In addition, after the action control unit 450 executes the action decided by the action decision unit 440 in the execution mode decided in accordance with the emotion, the emotion decision unit 442 further changes the emotion value based on the user's reaction to the execution of the action. Specifically, in a case where the user's response to performing the action decided by the action decision unit 440 on the user in the execution mode decided by the action control unit 450 is not bad, the emotion decision unit 442 changes the emotion value indicating intensity of delight to a value indicating greater intensity of delight. In addition, in a case where the user's response to performing the action decided by the action decision unit 440 on the user in the execution mode decided by the action control unit 450 is bad, the emotion decision unit 442 changes the emotion value indicating the intensity of sorrow to a value indicating a greater intensity of sorrow.

The action control unit 450 expresses the emotion of the robot 100 based on the emotion value decided in S1018 or S1022 (S1026). For example, when having increased the emotion value of "delight," the action control unit 450 controls the control target 452 to have the robot 100 make a gesture of being delighted. In addition, when having increased the emotion value of "sorrowful," the action control unit 450 controls the control target 452 so that the posture of the robot 100 is to be a head lowering posture. Subsequently, the communication processing unit 480 transmits the user reaction information to the server 200 (S1028), and ends the operation related to the decision of the operation of the robot 100.

Note that, in a case where it is determined in the determination of S1004 that there is no reaction rule satisfying the condition part, the communication processing unit 480 inquires the server 200 about a recommended reaction rule. For example, information indicating the emotion of the robot 100, information indicating the state of the user represented by the input semantic information, and information indicating the attribute of the user 10 are to be transmitted to the server 200 (S1030). From the server 200, a reaction rule suitable for the information transmitted in the inquiry is transmitted to the robot 100 as a recommended reaction rule. When the communication processing unit 480 receives the recommended reaction rule from the server 200, the rule update unit 422 incorporates the recommended reaction rule into the reaction rule 421 (S1032), and proceeds to S1006. In this case, in S1006 and S1008, selection of an action and update of an emotion value are to be performed based on the reaction rule received from the server 200. In this manner, when the condition determination unit 434 determines that none of the conditions included in the reaction rule 421 is satisfied, the communication processing unit 480 receives, from the server 200, an action suitable for the state of the user recognized by the user state recognition unit 430.

According to the present operation flow, when there is no reaction rule satisfying the condition part, an inquiry about a recommended reaction rule is made. Even in a case where there is a reaction rule in which the condition part is satisfied, if the considerateness points associated with any action is smaller than a predetermined value, the determination may be that the action cannot be decided. In this case, the communication processing unit 480 may make an inquiry about a recommended reaction rule. That is, from among one or more actions associated with the condition determined to be satisfied by the condition determination unit 434 among the information included in the decision information, the action decision unit 440 decides, as an action to be executed, an action for which the considerateness points included in the decision information are higher than a predetermined value. In a case where all of the considerateness points of one or more actions associated with the condition determined to be satisfied by the condition determination unit 434 are a predetermined value or less, the communication processing unit 480 may receive an action suitable for the state of the user 10 recognized by the user state recognition unit 430 from the server 200. The rule update unit 422 may add the action received by the communication processing unit 480 from the server 200 to the reaction rule in association with the condition determined to be satisfied by the condition determination unit 434.

The inquiry about the recommended reaction rule may be periodically performed by processing such as batch processing in addition to the case where the action decision unit 440 cannot decide the action. In addition, the recommended reaction rule may be inquired in a case where it is determined that the user 10 is asleep or in a case where the robot 100 transitions to the idle state or the sleep state. In addition, an inquiry about a recommended reaction rule may be made at any timing when the robot 100 is about to perform action.

In addition, the reaction rule 421 may have a rule prescribing an action in a case where an action to be executed for the user 10 has not been searched. For example, the reaction rule 421 may have a rule including a condition part that defines a condition of "an action to be executed on the user 10 has not been searched" and a conclusion part that defines an action of "inquiring the server 200 about a recommended reaction rule". With this method, the action decision unit 440 may decide to inquire the server 200 about the recommended reaction rule in accordance with the reaction rule 421.

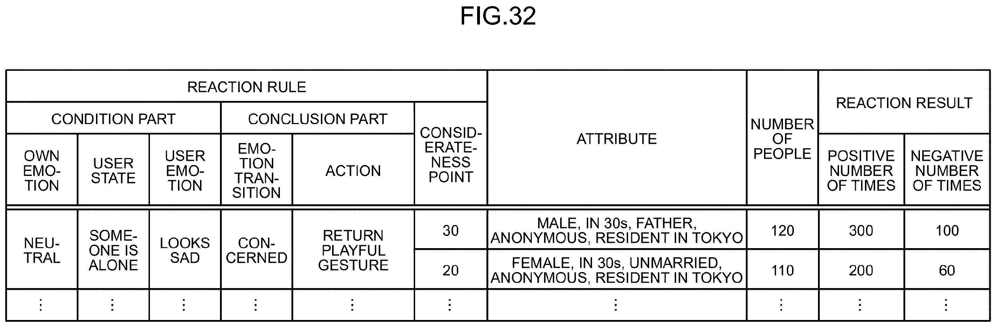

FIG. 32 illustrates an example of the reaction rule statistical information 522 stored in the server 200. The reaction rule statistical information 522 includes "reaction rule", "attribute", "number of people", and "reaction result". The "reaction rule" includes a "condition part", a "conclusion part", and a "considerateness point". The "condition part", the "conclusion part", and the "considerateness point" of the reaction rule statistical information 522 store information corresponding to the "condition part", the "conclusion part", and the "considerateness point" of the reaction rule 421 respectively.

The "attribute" of the reaction rule statistical information 522 stores attributes of the user 10. The attributes of the user 10 include age group, gender, a role in home, information of a region of residence, and the like. The "number of people" stores the number of people who have contributed to the information accumulated in the reaction rule statistical information 522. The "reaction result" stores information indicating the number of times of positive reactions and the number of times of positive negative reactions.

When the communication processing unit 580 has received the user reaction information from the robot 100, the statistical information control unit 550 stores the "condition part" and the "conclusion part" of the reaction rule included in the user reaction information in the reaction rule statistical information 522 in association with the attribute matching the attribute included in the user reaction information. In addition, the statistical information control unit 550 increments the value of the "positive number of times" or the value of the "negative number of times" based on the positive/negative information of the reaction included in the user reaction information. In addition, the statistical information control unit 550 increments the value of the "number of people" as necessary. For example, in a case where the user reaction information received this time is the user reaction information of the user who has reflected the user reaction information in the same record of the reaction rule statistical information 522 in the past, the value of the "number of people" is not to be incremented.

In addition, the statistical information control unit 550 calculates the recommended considerateness points and stores the calculated points in the "considerateness point" of the "reaction rule". For example, the statistical information control unit 550 calculates the value such that the larger the value of the "positive number of times," the larger the value to be calculated as the recommended considerateness point. Specifically, the statistical information control unit 550 may calculate a larger value as the recommended considerateness points as the ratio of the value of the "positive number of times" to the value of the "negative number of times" is larger.

When the communication processing unit 580 has received an inquiry about a recommended reaction rule from the robot 100, the reaction rule search unit 540 searches for a recommended reaction rule from among the reaction rules stored in the reaction rule 521. For example, the reaction rule search unit 540 searches the reaction rule 521 for a reaction rule having a "condition part" matching the "condition part" included in the inquiry. The reaction rule searched for by the reaction rule search unit 540 is transmitted from the communication processing unit 580 to the robot 100 as a response to the inquiry.

Note that the reaction rule search unit 540 may search for a recommended reaction rule from among the reaction rules stored in the reaction rule statistical information 522. Specifically, the reaction rule search unit 540 may search for a reaction rule having a "condition part" matching a "condition part" included in the inquiry and having an "attribute" matching an "attribute" included in the inquiry, among the reaction rules stored in the reaction rule statistical information 522. This makes it possible for the server 200 to provide the robot 100 with an action suitable for the attribute of the user 10.

Note that, in the example of FIG. 32, the reaction rule statistical information 522 includes reaction results aggregated for each attribute of the user. As another example of the reaction rule statistical information, the reaction results may be aggregated for each user.

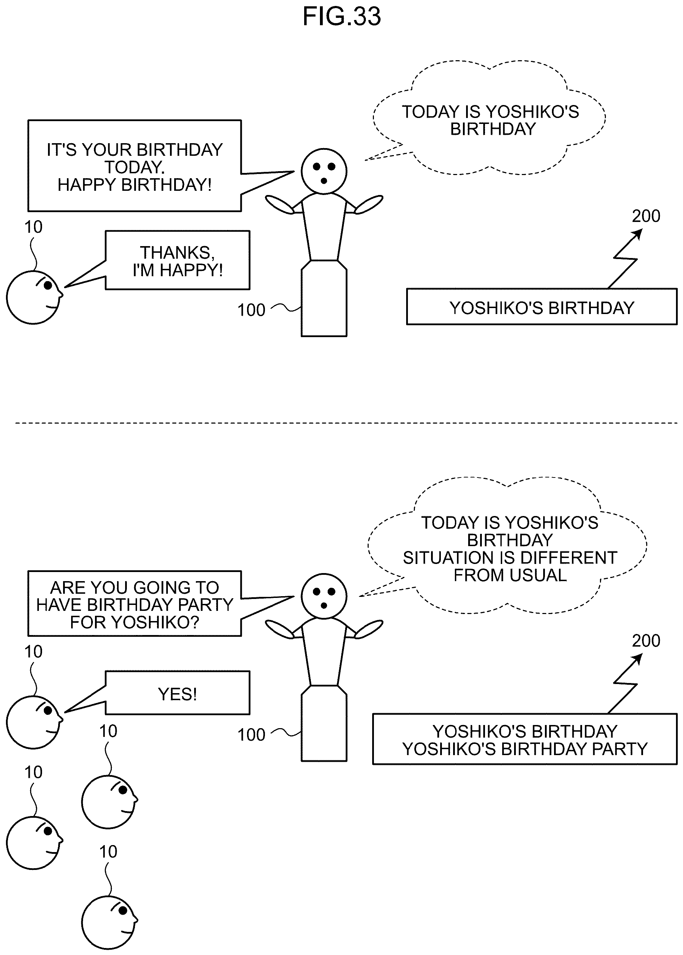

FIG. 33 is a diagram schematically illustrating an action executed by the robot 100 in order to decide a label attached to record data. When it is decided that it is a birthday of the user 10 based on the date and time information and the attribute information of the user 10, the action decision unit 440 decides to ask a question to the user 10 to confirm whether it is the birthday. In this case, the action control unit 450 control to output, for example, a voice having utterance content of "Mr. ∘∘, today is your birthday. Happy birthday!" from the speaker of the control target 452.

Thereafter, the user reaction recognition unit 432 recognizes whether the reaction of the user 10 is positive or negative from the utterance content of the user 10. For example, in a case where the user 10 replies "Thanks, I'm happy!", the user reaction recognition unit 432 recognizes that the reaction of the user 10 is positive. In a case where the recognized name of the user 10 is "Yoshiko Chan", the label generation unit 478 generates a label "Yoshiko's birthday".

The label generation unit 478 generates a label including information indicating the recognized name of the user 10 and information "Yoshiko's birthday", as a label attached to the record data. The communication processing unit 480 continuously transmits, to the server 200, record data in which a label generated by the label generation unit 478 is attached to skeleton data based on skeleton information acquired by the 3D depth sensor 402. The server 200 stores the record data received from the robot 100 in the record data 561 of the storing unit 520.

The semantic comprehension unit 418 calculates the number of people currently recognized by the current skeleton data based on the skeleton information acquired from the 3D depth sensor 402. In addition, skeleton data acquired in the same time zone in the past is acquired from the server 200, and an average value of the number of people recognized in the same room in the same time zone in the past is calculated. Here, in a case where it is recognized that the currently recognized number of people is larger than the average value of the number of people recognized in the same room in the same time zone in the past by a predetermined threshold or more, the semantic comprehension unit 418 recognizes that the situation is different from usual. In addition, the semantic comprehension unit 418 compares a label attached to the skeleton data acquired in the same time zone in the past with the currently recognized user 10. In a case where it is determined that the user 10 who is not always at home is currently recognized, the semantic comprehension unit 418 recognizes that the situation is different from usual. Note that, in a case where the action control unit 450 recognizes that the situation is different from usual, the sensor unit 400 and the sensor module unit 410 may be controlled to perform a more detailed detection operation. For example, the action control unit 450 may control the utterance comprehension unit 412 to recognize utterance content with higher precision. In addition, the voice emotion recognition unit 411 may be controlled to recognize emotions with higher precision. In addition, the facial expression recognition unit 413 may be controlled to recognize the facial expression with higher precision.

In a case where the semantic comprehension unit 418 recognizes that the situation is different from usual, the action decision unit 440 decides to ask the user 10 a question in order to confirm the situation. For example, when it is determined that many people are recognized in a case where the label of "Yoshiko's birthday" has been decided, the action control unit 450 controls to output a voice having utterance content "Are you going to have a birthday party for Yoshiko?" from the speaker of the control target 452.

In this case, the user reaction recognition unit 432 recognizes whether the reaction of the user 10 is positive or negative from the utterance content of the user 10. For example, in a case where the user 10 replies "Yes!", the user reaction recognition unit 432 recognizes that the reaction of the user 10 is positive. In this case, the label generation unit 478 generates a label "Yoshiko's birthday party". Note that the labels such as "Yoshiko's birthday" and "Yoshiko's birthday party" are examples of labels indicating the current situation of the user 10.

In this manner, the robot 100 has a dialogue with the user 10 to confirm the current situation based on at least a part of the information detected by the sensor unit 400. Then, the label generation unit 478 decides the current situation of the user 10 based on the dialogue result with the user 10, and generates a label including one or more pieces of textual information indicating the current situation of the user 10 based on the decided information.

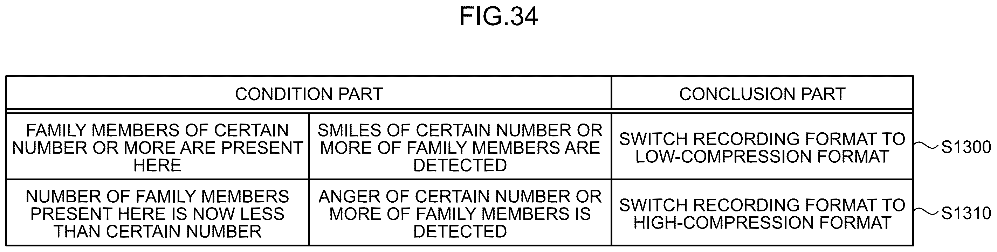

FIG. 34 illustrates an example of the recording format switching rule 471. The recording format switching rule 471 includes a rule 1300 having a condition part that prescribes a condition that "a certain number or more of family members are present" and "Smiles of a certain number or more of family members are detected." and a conclusion part that prescribes an action of "switching to a low-compression recording format". In addition, the recording format switching rule 471 includes a rule having a condition part that prescribes conditions that "the number of family members present here becomes less than a certain number" and "Anger of a certain number or more of family members is detected", and a conclusion part that prescribes an action of "switching to a high-compression recording format".

The value of the "certain number" may be larger as the number of people belonging to one family is larger. For example, in a case of a family of four, the value of "certain number" may be 3. In the case of a family of five, the value of "certain number" may be 4. In addition, the value of the "certain number" may be decided based on the history of the number of users 10 recognized by the semantic comprehension unit 418. For example, in a case where only four people are often recognized by the semantic comprehension unit 418 even in a family of five people, 3 may be decided as the value of the "certain number".

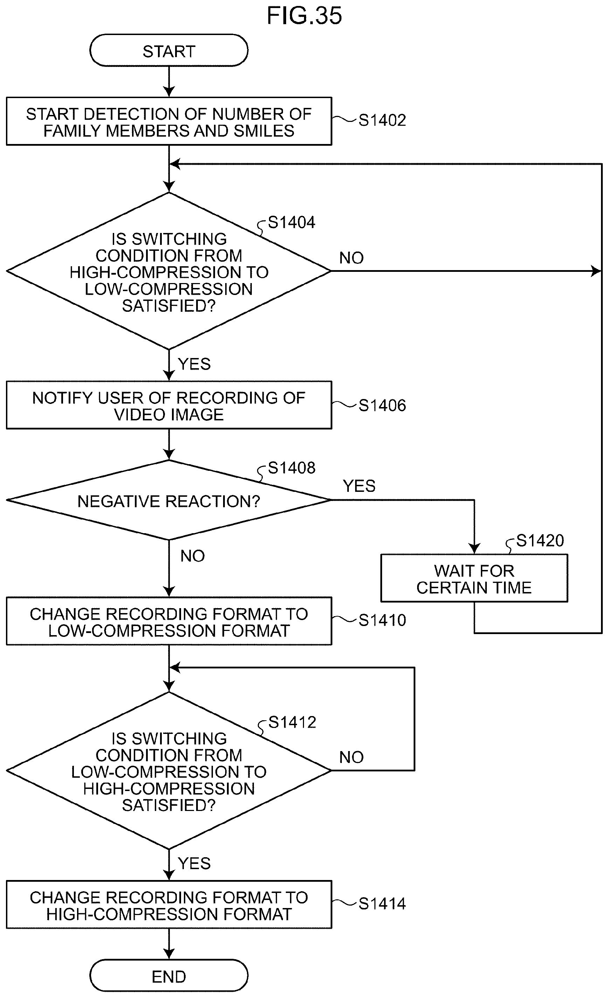

FIG. 35 schematically illustrates an example of an operation flow related to switching of a recording format. This operation flow is started when the recording data generation unit 470 starts generation of record data in a high-compression format.

In S1402, based on the information output from the sensor unit 400 and the sensor module unit 410, the perception processing unit 416 starts detection of the number of users 10 belonging to a specific family and the number of users 10 whose smile level exceeds a predetermined value. Here, based on the information output from the sensor unit 400 and the sensor module unit 410, the perception processing unit 416 counts the number of users 10 registered as a family in the person DB 424 among the users whose presence is recognized. In addition, the perception processing unit 416 counts the number of users 10 registered as a family in the person DB 424 among the users whose smile level exceeds a predetermined value.

In S1404, the switching control unit 477 determines whether the condition part of the rule 1300 that prescribes switching of the recording format to the low-compression format is satisfied. When it is determined that the condition part of the rule 1300 is satisfied, the action control unit 450 controls to output a voice with utterance content of "It looks fun, so I will take a video!" from the speaker of the control target 452 (S1406). This notifies the user 10 of recording a video.

In S1408, the switching control unit 477 determines whether there is a negative reaction from the user 10. For example, in a case where a negative phrase is not recognized from the voice of the user 10, the switching control unit 477 determines that there is no negative reaction from the user 10. When having determined that there is no negative reaction from the user 10, the switching control unit 477 controls the recording data generation unit 470 to start generation of the full HD video data and audio data in addition to the skeleton data (S1410). With this procedure, the switching control unit 477 switches the recording format from the high-compression format to the low-compression format. When it is determined in the determination of S1408 that there is a negative reaction from the user 10, the processing proceeds to S1404 after a predetermined waiting time has elapsed (S1420).

After switching to the low-compression format in S1410, it is determined in S1412 whether the condition part of a rule 1310 defining switching to the high-compression format is satisfied. When it is determined that the condition part of the rule 1310 is satisfied, the switching control unit 477 switches the recording format from the low-compression format to the high-compression format (S1414). When it is determined in the determination in S1412 that the condition part of the rule 1310 is not satisfied, the determination in S1412 is repeated until the condition part of the rule 1310 is satisfied.

In addition to the determination based on the rule 1310 in S1412, the recording format may be switched from the low-compression format to the high-compression format also in a case where an utterance instructing to stop recording in the low-compression format, such as "Finish recording", has been recognized. In addition, the recording format may be switched from the low-compression format to the high-compression format in a case where a predetermined maximum recording time has elapsed after the recording format is switched to the low-compression format.

Note that the switching control unit 477 is not limited to the number of smiles, and may switch the recording format in response to a drastic change in the intensity of the emotion of the user 10. For example, the switching control unit 477 may switch the recording format to the low-compression format when the touch sensor included in the sensor unit 400 has detected an impact stronger than a predetermined value.

[Recording data in recording mode corresponding to user's or robot's emotion]

Hitherto, it has been described that the robot 100 switches the recording format of the data to be recorded in the server 200 based on the user's emotion. For example, the recording format is a high-compression format, a low-compression format, or the like.

On the other hand, the robot 100 may change the data recording mode based on the emotion of the user or the robot 100 itself. For example, the recording mode is a type of data such as text, a still image, audio, or a moving image.

In addition, as described above, the robot 100 records data (for example, audio data, skeleton data, and image data) obtained by processing the information detected by the continuous detection sensor. In addition, the robot 100 may record data obtained by converting information detected by the continuous detection sensor into a text.

As described above, the robot 100 can express the emotion of the robot 100 itself by the emotion value corresponding to each of a plurality of types of emotions such as "delighted", "angry", "sad", and "joyful".

In addition, the robot 100 can detect a change and intensity of the user's emotion. Here, the robot 100 also expresses the user's emotion by an emotion value for each type of emotion.

In other words, the robot 100 can turn the emotions into structural data by the type of emotion and the emotion value for both the user and the robot 100 itself. For example, the emotion decision unit 442 decides an emotion value or an emotion type indicating the intensity of the emotion of the robot or the user based on information detected by a sensor provided in the robot. In addition, the robot 100 specifies the recording mode based on the emotion in the form of structural data (emotion type and emotion value).

As a method of turning the emotions of the user and the robot 100 into structural data, the same method as in this description is disclosed in JP 6058053 B. In addition, the robot 100 may specify the user's emotion or the robot 100's own emotion by a known method such as a method using an emotion map (refer to JP 6273313 B, for example, ) or a method using a neural network (refer to JP 6199927 B, for example).

In addition, the data to be recorded here includes the data described above. That is, the robot 100 can record, as data, information (main information) such as a still image (for example, a face image) obtained by capturing the user, a moving image, recorded audio, and text (for example, the label of the supplementary information). Furthermore, the robot 100 can record, as data, surrounding information such as smell, temperature, humidity, position, and weather of a place where the robot 100 is present, as well as the number and details of nearby users.

For example, in a case where the emotion value of the negative emotion ("angry", "sad", etc.) of the robot 100 increases, there is a possibility that a disadvantage, a danger, or the like is occurring to the robot 100 or the user. For example, in a case where the user is seriously injured, it is conceivable that the emotion value of "sad" of the robot 100 greatly increases. In addition, for example, in a case where a physical impact is applied to the robot 100, it is conceivable that the emotion value of "angry" of the robot 100 greatly increases.

In order to achieve later examination on countermeasures and avoidance measures of an event that causes disadvantages and hazards to such a robot 100 or a user, it is desirable to have data recorded in a (rich) recording mode (for example, long moving image, detailed text) that can provide a larger volume of information related to the event.

In addition, for example, in a case where the emotion value of the positive emotion ("delighted," "joyful," etc.) of the robot 100 increases, there is a possibility that the user will have a desire, at a later time, to remember the situation in detail.

Therefore, in a case where the emotion value of the positive emotion of the user becomes large, it is desirable to have data recorded in a recording mode (for example, audio or high-quality moving image) facilitating recalling of the situation of the place as much as possible. This allows the user to refer to the recorded data and recall the situation when the user had fun, for example.

The relationship between the emotions of the robot 100 and the user and the recording mode is not limited to that described here, and can be preset in any manner. Here, the relationship between the emotion and the recording mode is stored in a pattern table and a recording mode table. It is assumed that the pattern table and the recording mode table are supposed to be stored in the storing unit 520.

The recording data generation unit 470 specifies a recording mode of recording data indicating information related to the user detected by the sensor based on the emotion value. The recording data generation unit 470 is an example of a specifying unit.

The recording data generation unit 470 refers to the pattern table and the recording mode table stored in the storing unit 520, and specifies a recording mode corresponding to the emotion of the robot 100 or the user. The recording data generation unit 470 generates data based on the specified recording mode. Note that the recording data generation unit 470 may specify the recording mode based on both the emotion value and the type of the emotion, or may specify the recording mode based on either one of the emotion value and the type of the emotion.

The communication processing unit 480 controls to record the generated data in the server 200. That is, the communication processing unit 480 records data based on the recording mode specified by the recording data generation unit 470. The communication processing unit 480 is an example of a recording control unit.

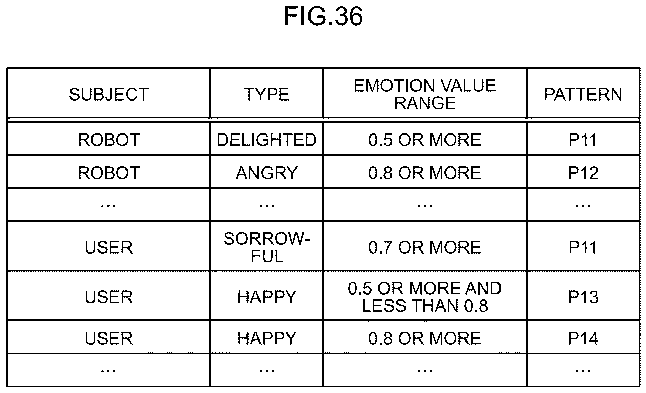

FIG. 36 illustrates an example of the pattern table. As illustrated in FIG. 36, the pattern table includes columns such as "subject", "type", "range of emotion value", and "pattern". "subject", "type", and "range of emotion value" correspond to conditions. The recording data generation unit 470 specifies a pattern that matches the condition based on the emotion value of the user or the robot 100 and the pattern table.

For example, when the emotion value of the emotion of "delighted" of the robot 100 is 0.7 (which is 0.5 or more), the recording data generation unit 470 specifies a pattern "P11" that matches the condition based on the record illustrated in the first row of the pattern table of FIG. 29. Here, it is assumed that the range of the emotion value is 0 to 1.

In addition, for example, when the emotion value of the emotion of "ease" of the user is 0.9 (which is 0.8 or more), the recording data generation unit 470 specifies a pattern "P14" that matches the condition based on the record illustrated in the fourth row of the pattern table of FIG. 29.

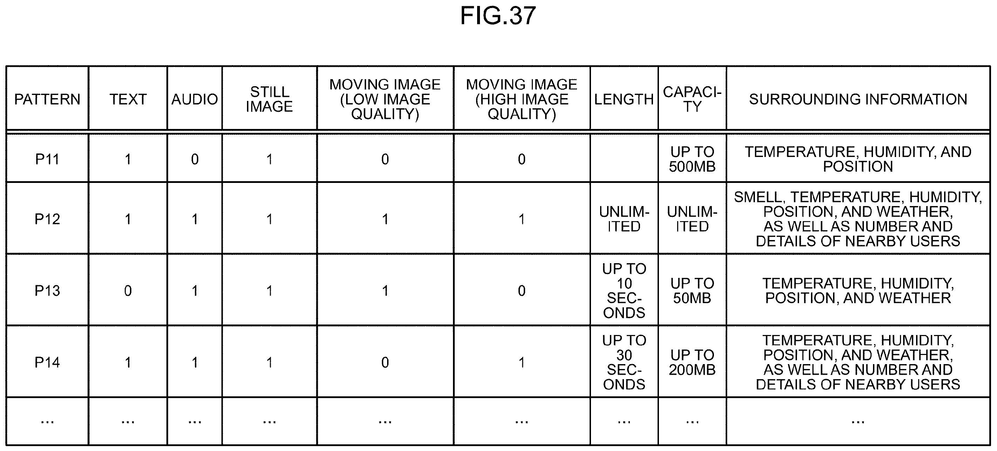

FIG. 37 illustrates an example of the recording mode table. The recording data generation unit 470 specifies the recording mode on the basis of the pattern specified based on the pattern table, and on the basis of the recording mode table.

As illustrated in FIG. 37, the recording mode table has a column of "pattern" and a column indicating a recording mode. The column indicating the recording mode includes "text", "audio", "still image", "moving image (low image quality)", "moving image (high image quality)", "length", "capacity", and "surrounding information".

"Text", "audio", "still image", "moving image (low image quality)", and "moving image (high image quality)" are columns indicating data types. The fact that the value of the column indicating the type of data is 1 means that the corresponding type of data is recorded. The recording data generation unit 470 can specify which one of text, audio, a still image, and a moving image is included in the data, as a recording mode.

The "length" is the maximum length of data that can be defined as a time length (for example, audio and moving image). The "capacity" is the maximum capacity of the data to be recorded. The recording data generation unit 470 can specify the maximum capacity of data as a recording mode. In addition, the recording data generation unit 470 can specify the maximum length of the data that can be defined as time as the recording mode.

The "surrounding information" is information recorded as data together with main information (such as text, audio, and image). The robot 100 uses the sensor unit 400 to acquire surrounding information such as smell, temperature, humidity, position, and weather of a place where the robot 100 is present, as well as the number and details of nearby users. In addition, the details of the nearby user are information (for example, a face image or the like) equivalent to the main information related to users around the user as a target for recording the main information.

The recording data generation unit 470 can specify which one of the odor, temperature, humidity, position, and weather of a place where the robot 100 is present, as well as the number and details of nearby users, is included in the data as a recording mode.

For example, when having specified "P11" as the pattern, the recording data generation unit 470 specifies a recording mode of recording data up to 500 MB including" text" and "still image" together with the temperature, the humidity, and the position (position information of the robot 100).

In addition, when having specified "P12" as the pattern, for example, the recording data generation unit 470 specifies a recording mode of recording "text", "audio", "still image", "moving image (low image quality)", and "moving image (high image quality)" together with odor, temperature, humidity, position, and weather, as well as the number and details of nearby users, without limitation of length and capacity. Note that the recording mode of the pattern "P12" is a recording mode that can include information of a largest volume (richest) among the recording modes expressible in the recording mode table.

The "moving image (low image quality)" and the "moving image (high image quality)" have different resolutions and different frame rates, for example. For example, the "moving image (low image quality)" and the "moving image (high image quality)" are a full HD image of 30 FPS and a 4K image of 60 FPS, respectively.

The recording mode may be different depending on not only the intensity of the emotion (the magnitude of the emotion value) but also the type of the emotion. That is, a deviation occurs in the recorded data depending on the type of emotion felt by the robot 100 or the user. This can be implemented by setting the pattern table and the recording mode table.

For example, for a type of emotion of "delighted", the setting may be performed so as to record a still image without recording a moving image. For the type of emotion "joyful", the setting may be performed to record a moving image.

In addition, a target of data such as an image and a voice may be set for each type of emotion. For example, regarding the type of emotion "joyful", the setting may be performed to record a papermaking image and voice of the face of another user (user as a partner) having a conversation with the target user. In addition, for example, regarding the type of emotion of "angry", the setting may be performed to record a papermaking image of the face of the partner user.

Furthermore, as illustrated in the recording mode table of FIG. 37, the surrounding information to be recorded differs depending on the type of emotion. For example, in a case where the type of the emotion of the robot 100 is "sorrow" (pattern "P11"), "weather" is not to be recorded as the surrounding information, whereas in a case where the type of the emotion of the robot 100 is "anger" (pattern "P12"), "weather" is recorded as the surrounding information.

The robot 100 records data based on the specified recording mode. That is, the recording data generation unit 470 generates data in accordance with the specified recording mode.

The communication processing unit 480 controls to record the generated data in the server 200.

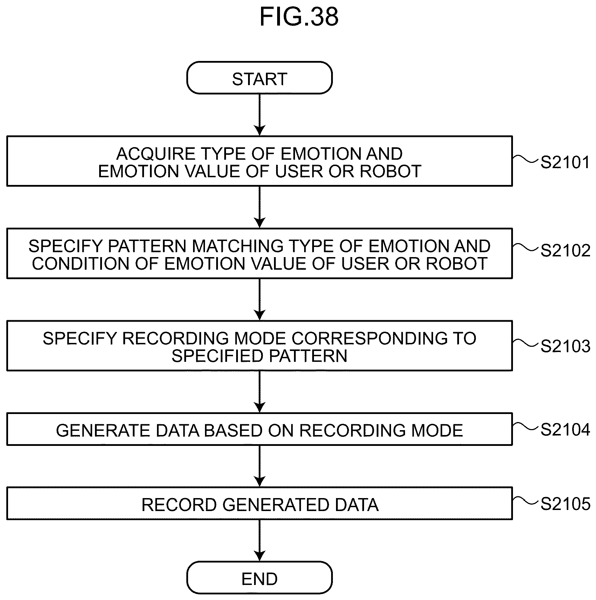

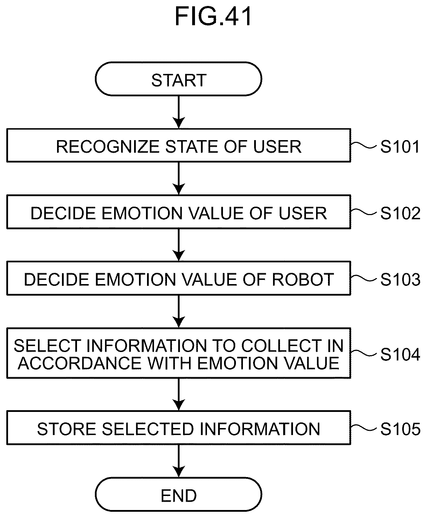

FIG. 38 illustrates an example of a flow of processing of recording data in a recording mode corresponding to an emotion. As illustrated in FIG. 41, first, the robot 100 acquires an emotion type and an emotion value of the user or the robot 100 itself (step S2101).

Next, the robot 100 specifies a pattern that matches the type of emotion and the condition of the emotion value of the user or the robot 100 (step S2102). For example, the robot 100 specifies a pattern with reference to the pattern table.

Subsequently, the robot 100 specifies a recording mode corresponding to the specified pattern (step S2103). For example, the robot 100 specifies a pattern with reference to the recording mode table.

Here, the robot 100 generates data based on the recording mode (step S2104). Subsequently, the robot 100 records the generated data (step S2105). For example, the robot 100 causes the server 200 to record the data.

In this manner, by recording the data in the recording mode in accordance with the emotion, the robot 100 can appropriately record the data in accordance with the emotion of the user or the robot 100. In addition, the robot 100 can support a response to a disadvantage and a danger occurring in the robot 100 or the user. In addition, this enables the robot 100 to assist the user to recall the situation when the user wants to recall.

### (Fifth embodiment)

Next, a fifth embodiment will be described. Here, portions different from the above-described embodiments will be mainly described. Description of configurations and the like similar to those of the above-described embodiments will be omitted.

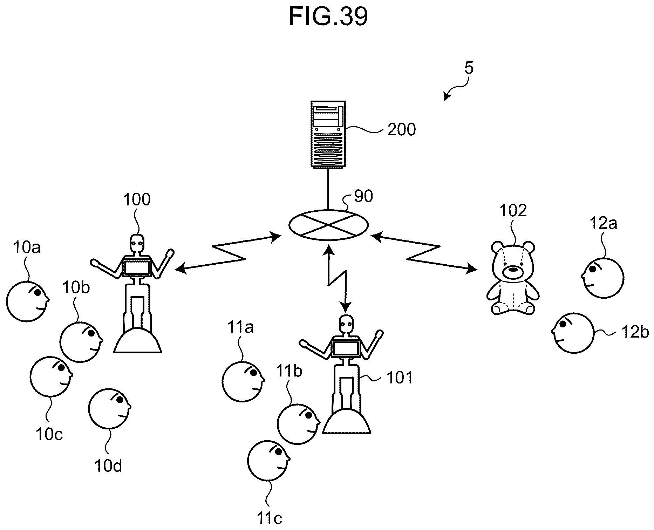

FIG. 39 schematically illustrates an example of a system 5 according to the fifth embodiment. The system 5 includes a robot 100, a robot 101, a robot 102, and a server 200. The user 10a, the user 10b, the user 10c, and the user 10d are users of the robot 100. The user 11a, the user 11b, and the user 11c are users of the robot 101. The user 12a and the user 12b are users of the robot 102.

The appearance of the robot may imitate a figure of a person like the robot 100 and the robot 101, or may be a stuffed toy like the robot 102. The robot 102 has an external appearance of a stuffed toy, and thus is considered to be familiar to children in particular.

The robot 100 has a conversation with the user 10 and provides a video to the user 10. At this time, the robot 100 performs the conversation with the user 10, provides the video, etc. to the user 10 in cooperation with the server 200, etc. capable of communicating via a communication network 90. For example, the robot 100 not only performs self-learning of appropriate conversations, but also performs learning in cooperation with the server 200 so as to achieve more appropriate conversations with the user 10. In addition, the robot 100 causes the server 200 to record the captured video data and the like of the user 10, requests the video data, etc. from the server 200 as necessary, and provides the video data, etc. to the user 10.

Furthermore, the robot 100 may be configured to decide the action of the robot 100 corresponding to the emotion of the user 10 by joining a text generation model (generally referred to as an Artificial Intelligence (AI) chat engine) with an emotion engine. Specifically, the robot 100 may be configured to recognize an action of the user 10, determine an emotion of the user 10 behind the action of the user, and decide an action of the robot 100 corresponding to the determined emotion.

More specifically, when having recognized the action of the user 10, the robot 100 automatically generates action content to be taken by the robot 100 for the action of the user 10 using a preset text generation model. The text generation model may be construed as an algorithm and computation for automatic interaction processing using texts. Since the text generation model is known as disclosed in JP 2018-081444 A, for example, a detailed description thereof will be omitted. Such a text generation model is configured by a Large Language Model (LLM). As described above, in the present embodiment, by combining a Large Language Model and an emotion engine, it is possible to reflect the emotions of the user 10 and the robot 100 and various linguistic information in the action of the robot 100. That is, according to the present embodiment, a synergistic effect can be obtained by combining the text generation model and the emotion engine.

In addition, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides an action to be executed by the robot 100 based on the recognized action of the user 10 or the like.

The robot 100 stores a rule defining an action to be executed by the robot 100 based on the emotion of the user 10, the emotion of the robot 100, and the action of the user 10, and takes various actions in accordance with the rule.

Specifically, the robot 100 has a reaction rule for deciding an action of the robot 100 based on the emotion of the user 10, the emotion of the robot 100, and the action of the user 10. The reaction rule defines, for example, that in a case where the action of the user 10 is "smiling", the action of the robot 100 is to be an action of "smiling". In addition, the reaction rule defines, for example, that in a case where the action of the user 10 is "getting angry", the action of the robot 100 is to be an action of "apologizing". Furthermore, the reaction rule defines, for example, that in a case where the action of the user 10 is "asking a question", the action of the robot 100 is to be an action of "answering the question". The reaction rule defines, for example, that in a case where the action of the user 10 is "expressing sorrow", the action of the robot 100 is to be an action of "offering words".

Based on the reaction rule, having recognized that the action of the user 10 is "getting angry", the robot 100 selects an action of "apologizing" prescribed in the reaction rule, as the action to be executed by the robot 100. For example, when selecting the action of "apologizing", the robot 100 takes an action of "apologizing" and outputs a voice expressing a word of "apologizing".

In addition, it is prescribed that, when a condition that the emotion of the robot 100 is "neutral" (that is, "delighted" =0, "angry" =0, "sad" =0, and "joyful" =0) and the state of the user 10 is "alone and looks sad" is satisfied, it is possible to execute content of an emotional change in which the emotion of the robot 100 changes to "concerned" and an action of "offering words".

When the robot 100 recognizes that the current emotion of the robot 100 is "neutral" and the user 10 is alone and looks sad, the emotion value of "sad" of the robot 100 is increased based on the reaction rule. In addition, the robot 100 selects an action of "offering words" prescribed in the reaction rule as an action to be executed toward the user 10. For example, when having selected the action of "offering words", the robot 100 outputs a word "What's wrong?" indicating a concern and which has been converted into a concerned voice.

In addition, the robot 100 transmits, to the server 200, user reaction information indicating that a positive reaction has been obtained from the user 10 by this action. The user reaction information includes, for example, a user action of "getting angry", an action of the robot 100 of "apologizing", a positive reaction of the user 10, and an attribute of the user 10.

The server 200 stores the user reaction information received from the robot 100. Note that the server 200 receives and stores the user reaction information not only from the robot 100 but also from each of the robot 101 and the robot 102. Then, the server 200 analyzes the user reaction information from the robot 100, the robot 101, and the robot 102, and updates the reaction rule.

The robot 100 inquires the server 200 about the updated reaction rule to receive the updated reaction rule from the server 200. The robot 100 incorporates the updated reaction rule into the reaction rule stored in the robot 100. This makes it possible for the robot 100 to incorporate the reaction rule acquired by the robot 101, the robot 102, or the like into its own reaction rule.

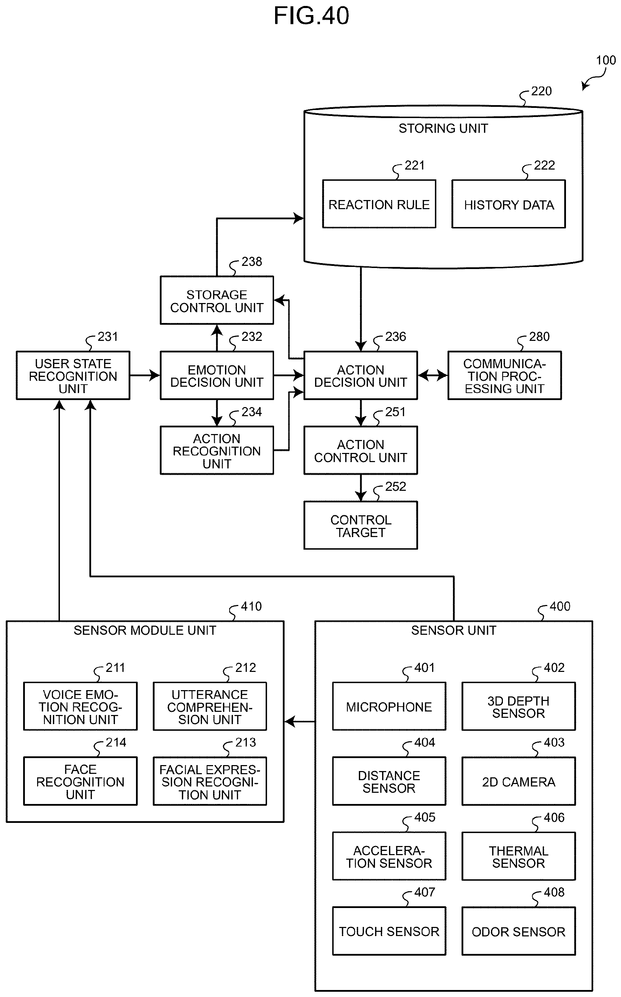

FIG. 40 schematically illustrates a functional configuration of the robot 100. The robot 100 includes a sensor unit 400, a sensor module unit 410, a storing unit 220, a user state recognition unit 231, an emotion decision unit 232, an action recognition unit 234, an action decision unit 236, a storage control unit 238, an action control unit 251, a control target 252, a communication processing unit 280, and an event detection unit 290.

The control target 252 includes a display device 2521, a speaker 2522, a lamp 2523 (for example, LED of the eye portion), motors 2524 that drive arms, hands, legs, etc. The posture and gesture of the robot 100 are controlled by controlling the motors 2524 for the portions such as arms, hands, and legs. Some of the emotions of the robot 100 can be expressed by controlling these motors 2524. In addition, by controlling the light emission state of the LEDs at the eye portions of the robot 100, facial expressions of the robot 100 can be expressed. The posture, gesture, and facial expression of the robot 100 are examples of the attitude of the robot 100.

The sensor unit 400 includes a microphone 401, a 3D depth sensor 402, a 2D camera 403, a distance sensor 404, an acceleration sensor 405, a thermal sensor 406, a touch sensor 407, and an odor sensor 408. Note that the sensor unit 400 may further include a clock, a motor feedback sensor, and the like.

Note that, among the components of the robot 100 illustrated in FIG. 40, the components other than the control target 252 and the sensor unit 400 are examples of the components included in the action control system of the robot 100. The action control system of the robot 100 sets the control target 252 as a target of control.

The storing unit 220 includes a reaction rule 221 and history data 222. The history data 222 includes a history of past emotion values and actions of the user 10. The emotion value and the action history are recorded for each user 10 by being associated with identification information of the user 10, for example. At least a part of the storing unit 220 is implemented by a storage medium such as memory. A person DB that stores a face image of the user 10, attribute information of the user 10, and the like may be included. Among the components of the robot 100 illustrated in FIG. 40, the functions of the components other than the control target 252, the sensor unit 400, and the storing unit 220 can be implemented by the CPU operating based on a program. For example, the functions of these components can be implemented as the operation of the CPU by basic software (OS) and a program operating on the OS.

The sensor module unit 410 includes a voice emotion recognition unit 211, an utterance comprehension unit 212, a facial expression recognition unit 213, and a face recognition unit 214. The sensor module unit 410 receives input of information detected by the sensor unit 400. The sensor module unit 410 analyzes information detected by the sensor unit 400 and outputs an analysis result to the user state recognition unit 231.

The voice emotion recognition unit 211 of the sensor module unit 410 analyzes the voice of the user 10 detected by the microphone 401 to recognize the emotion of the user 10. For example, the voice emotion recognition unit 211 extracts features such as a frequency component of voice and recognizes the emotion of the user 10 based on the extracted features. The utterance comprehension unit 212 analyzes the voice of the user 10 detected by the microphone 401 and outputs textual information indicating utterance content of the user 10.

The expression recognition unit 213 recognizes the facial expression of the user 10 and the emotion of the user 10 from the image of the user 10 captured by the 2D camera 403. For example, the expression recognition unit 213 recognizes the facial expression and emotion of the user 10 based on the shapes, positional relationships, and the like of the eyes and the mouth.

The face recognition unit 214 recognizes the face of the user 10. The face recognition unit 214 recognizes the user 10 by checking the match between the face image stored in the person DB (not illustrated) and the face image of the user 10 captured by the 2D camera 403.

The user state recognition unit 231 recognizes the state of the user 10 based on the information analyzed by the sensor module unit 410. For example, processing mainly related to perception is performed using the analysis result of the sensor module unit 410. For example, perception information such as "Daddy is alone" and "Daddy is not smiling with probability of 90%" is generated. Processing of understanding the meaning of the generated perception information is performed. For example, semantic information such as "Daddy is alone and looks sad" is generated.

The emotion decision unit 232 decides an emotion value indicating the emotion of the user 10 based on the information analyzed by the sensor module unit 410 and the state of the user 10 recognized by the user state recognition unit 231. For example, the information analyzed by the sensor module unit 410 and the recognized state of the user 10 are input to a neural network trained in advance, and an emotion value indicating the emotion of the user 10 is acquired.

Here, the emotion value indicating the emotion of the user 10 is a value indicating whether the emotion of the user is positive/negative. For example, the emotion of the user is a bright emotion accompanied with pleasure or comfort, such as "delighted", "joyful", "pleasant", "secure", "excited" "relieved" and "fulfilled", the emotion value indicates a positive value which becomes larger as the emotion is brighter. When the user's emotion is a negative emotion, such as "angry", "sad", "unpleasant", "anxious", "sorrowful", "concerned", and "empty", the value indicates a negative value, and the absolute value of the negative value is larger as the user feels more unpleasant. In a case where the user's emotion is not any of the above ("neutral"), the value indicates a value of 0.

In addition, the emotion decision unit 232 decides an emotion value indicating the emotion of the robot 100 based on the information analyzed by the sensor module unit 410 and the state of the user 10 recognized by the user state recognition unit 231.

The emotion value of the robot 100 includes the emotion value for each of a plurality of emotion classifications, and is, for example, a value (0 to 5) indicating the intensity of each of items of "delighted", "angry", "sad", and "joyful".

Specifically, the emotion decision unit 232 decides an emotion value indicating the emotion of the robot 100 in accordance with a rule for updating the emotion value of the robot 100 prescribed in association with the information analyzed by the sensor module unit 410 and the state of the user 10 recognized by the user state recognition unit 231.

For example, in a case where the user state recognition unit 231 recognizes that the user 10 looks sad, the emotion decision unit 232 increases the emotion value of "sad" of the robot 100. In a case where the user state recognition unit 231 recognizes that the user 10 is now smiling, the emotion value of "delighted" of the robot 100 is increased.

The emotion decision unit 232 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user 10 who desires to continue the dialog even though the remaining battery level is low, the emotion value of "angry" may be increased.

The action recognition unit 234 recognizes an action of the user 10 based on the information analyzed by the sensor module unit 410 and the state of the user 10 recognized by the user state recognition unit 231. For example, the information analyzed by the sensor module unit 410 and the recognized state of the user 10 are input to a neural network trained in advance to acquire the probability of each of a plurality of predetermined action classifications (for example, "smile", "get angry", "ask a question", and "expressing sorrow"), and the action classification having the highest probability is to be recognized as the action of the user 10.

As described above, in the present embodiment, the robot 100 acquires the utterance content of the user 10 after identifying the user 10, but in acquiring and using the utterance content, the action control system of the robot 100 according to the present embodiment considers protection of personal information and privacy of the user 10 in addition to acquiring necessary consent according to laws and regulations from the user 10.

The action decision unit 236 decides an action corresponding to the action of the user 10 recognized by the action recognition unit 234 based on the current emotion value of the user 10 decided by the emotion decision unit 232, the history data 222 of the past emotion values decided by the emotion decision unit 232 before decision of the current emotion value of the user 10, and the emotion value of the robot 100. While the present embodiment will describe a case where the action decision unit 236 uses one most recent emotion value included in the history data 222 as the past emotion value of the user 10, the disclosed technology is not limited to this aspect. For example, the action decision unit 236 may use a plurality of most recent emotion values as the past emotion values of the user 10, or may use emotion values that are earlier by a unit period such as a day before. Furthermore, the action decision unit 236 may decide an action corresponding to the action of the user 10 in further consideration of the history of the past emotion values of the robot 100 in addition to the current emotion value of the robot 100. The action decided by the action decision unit 236 includes a gesture performed by the robot 100 or utterance content of the robot 100.

The action decision unit 236 according to the present embodiment decides the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action decision unit 236 decides an action for changing the emotion value of the user 10 to a positive value as the action corresponding to the action of the user 10.

The action decision unit 236 may decide an action corresponding to the action of the user 10 based on the emotion of the robot 100. For example, when the emotion value of "angry" or "sad" of the robot 100 has increased in a case where the robot 100 is abused by the user 10, in a case where the user 10 takes an arrogant attitude (that is, in a case where the user's reaction is unfavorable), in a case where the voice of the user 10 cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user 10. In addition, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user 10. In addition, the action decision unit 236 may decide an action different from the action toward the user 10 that has increased the emotion values of "angry" and "sad" of the robot 100, as an action toward the user 10 that has increased the emotion values of "delighted" and "joyful" of the robot 100. In this manner, the action decision unit 236 may decide various actions depending on the emotion itself of the robot 100 itself or how the user 10 has changed the emotion of the robot 100 by the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns that is the fourth power of six values, namely, values "0" to "5" of "delighted", "angry", "sad", and "joyful"), the pattern of the combination of the past emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

The reaction rule 221 may prescribe at least one of a gesture and statement content as an action of the robot 100 for each of patterns (1296 patterns) of the emotion value of the robot 100 at the maximum. Alternatively, the reaction rule 221 may prescribe at least one of a gesture and statement content as an action of the robot 100 for each of the groups of the patterns of the emotion values of the robot 100.

The strength of a gesture is prescribed for each gesture included in the action of the robot 100 prescribed in the reaction rule 221 The strength of utterance content is prescribed for each utterance content included in the action of the robot 100 prescribed in the reaction rule 221

The storage control unit 238 decides whether to store data including the action of the user 10 in the history data 222 based on the strength of the action predetermined for the action decided by the action decision unit 236 and the emotion value of the robot 100 decided by the emotion decision unit 232.

Specifically, in a case where the total value of the sum of the emotion values for each of the plurality of emotion classifications of the robot 100 and the strength that is the sum of the strength predetermined for the gesture included in the action decided by the action decision unit 236 and the strength predetermined for the utterance content included in the action decided by the action decision unit 236 is a threshold or more, it is decided to store data including the action of the user 10 in the history data 222.

Having decided to store the data including the action of the user 10 in the history data 222, the storage control unit 238 stores the action decided by the action decision unit 236, the information (for example, any surrounding information including data such as a voice, an image, and a smell of the place) analyzed by the sensor module unit 410 from the current time point to a certain period before, and the state of the user 10 (for example, the facial expression and emotion of the user 10) recognized by the user state recognition unit 231 in the history data 222.

In addition, in the present embodiment, the storage control unit 238 switches the information to be recorded in accordance with the intensity of the emotion of the user 10 decided by the emotion decision unit 232. Specifically, in a case where the intensity of the emotion of the user 10 exceeds a threshold, the storage control unit 238 generates information with a smaller information volume than in a case where the intensity of the emotion does not exceed the threshold, and stores the generated information in the history data 222. In other words, in a case where the emotion of the user 10 exceeds a predetermined intensity, the storage control unit 238 restricts the type and capacity of information to be stored as compared with the normal time.

For example, in a case where the emotion of the user 10 is very sorrowful, the storage control unit 238 controls not to record detailed information but to record only points in the history data 222. That is, in this case, the storage control unit 238 restricts information to be recorded in the history data 222 to important information alone.

In addition, in a case where the intensity of the emotion of the user 10 exceeds a threshold, the storage control unit 238 excludes information of the event that occurred within a predetermined period from the recording target. For example, in a case where the emotion of the user 10 is very joyful, the storage control unit 238 erases, from the history data 222, an event that has made the most recently generated emotion negative, and in a case where the emotion of the user 10 has become very sorrowful, the storage control unit erases, from the history data 222, an event that has made the most recently generated emotion positive.

Through these processes, the storage control unit 238 can record only information memorable for the user 10 in the history data 222, and information not memorable for the user 10 is excluded from the history data 222.

In this manner, since the storage control unit 238 can record only the event or the information that is memorable for the user 10 in the history data 222, the data can be appropriately recorded in accordance with the increase in the intensity of the user's emotion.

The storage control unit 238 may record, in the history data 222, information with suppressed information volume in a case where the intensity of the emotion of the user 10 is lower than the threshold, as compared with a case where the intensity of the emotion exceeds the threshold. In this case, in a case where the intensity of the emotion of the user 10 exceeds the threshold, the storage control unit 238 would record more detailed data in the history data 222. That is, in this case, it is possible to record data in more detail when the emotion of the user 10 has increased.

In addition, the storage control unit 238 may temporarily store the information in the history data 222, and may delete (release) the information after adjusting the holding period in accordance with the later emotional change of the user 10. For example, in a case where an event that intensifies the emotion of the user 10 occurs, the storage control unit 238 may record the information immediately before the event in the history data 222 and delete the information after the lapse of a certain period of time.

The action control unit 251 controls the control target 252 based on the action decided by the action decision unit 236. For example, when the action decision unit 236 has determined an action including utterance, the action control unit 251 controls to output a voice from a speaker included in the control target 252. At this time, the action control unit 251 may decide the speaking speed of the voice based on the emotion value of the robot 100. For example, the action control unit 251 decides the speaking speed such that the larger the emotion value of the robot 100, the higher the utterance speed will be. In this manner, the action control unit 251 decides the execution mode of the action decided by the action decision unit 236 based on the emotion value decided by the emotion decision unit 232.

The action control unit 251 may recognize a change in emotion of the user 10 about the execution of the action decided by the action decision unit 236. For example, the change in emotion may be recognized based on the voice or facial expression of the user 10. In addition, a change in emotion of the user 10 may be recognized based on detection of an impact by the touch sensor included in the sensor unit 400. In a case where an impact is detected by the touch sensor included in the sensor unit 400, it is allowable to recognize that the emotion of the user 10 has worsened, or in a case where it is determined that the reaction of the user 10 is smiling or delighted from the detection result of the touch sensor included in the sensor unit 400, it is allowable to recognize that the emotion of the user 10 is improved. Information indicating the reaction of the user 10 is output to the communication processing unit 280.

In addition, after the action control unit 251 executes the action decided by the action decision unit 236 in the execution mode decided in accordance with the emotion of the robot 100, the emotion decision unit 232 further changes the emotion value of the robot 100 based on the user's reaction to the execution of the action. Specifically, in a case where the user's reaction to the action decided by the action decision unit 236 performed on the user in the execution mode decided by the action control unit 251 is not bad, the emotion decision unit 232 increases the emotion value of "delighted" of the robot 100; in a case where the user's reaction to the action decided by the action decision unit 236 performed on the user in the execution mode decided by the action control unit 251 is bad, the emotion decision unit 232 increases the emotion value of "sad" of the robot 100.

Furthermore, the action control unit 251 expresses the emotion of the robot 100 based on the decided emotion value of the robot 100. For example, when having increased the emotion value of "delighted" of the robot 100, the action control unit 251 controls the control target 252 to cause the robot 100 to make a gesture of delight. Furthermore, when having increased the emotion value of "sad" of the robot 100, the action control unit 251 controls the control target 252 so that the posture of the robot 100 is to be a head lowering posture.

The communication processing unit 280 is responsible for communication with the server 200. As described above, the communication processing unit 280 transmits the user reaction information to the server 200. In addition, the communication processing unit 280 receives the updated reaction rule from the server 200. When having received the updated reaction rule from the server 200, the communication processing unit 280 updates the reaction rule 221.

The event detection unit 290 implements the above-described output function. Details of the event detection unit 290 will be described below.

The server 200 performs communication between the robot 100, the robot 101, and the robot 102 and the server 200, receives the user reaction information transmitted from the robot 100, and updates the reaction rule based on the reaction rule including the action for which a positive reaction has been obtained.

FIG. 41 is a diagram schematically illustrating an example of an operation flow related to an operation of deciding information to be recorded in the robot 100. The operation flow illustrated in FIG. 41 is repeatedly executed. At this time, it is assumed that information analyzed by the sensor module unit 410 is input.

First, in step S101, the user state recognition unit 231 recognizes the state of the user 10 based on the information analyzed by the sensor module unit 410.

In step S102, the emotion decision unit 232 decides an emotion value indicating the emotion of the user 10 based on the information analyzed by the sensor module unit 410 and the state of the user 10 recognized by the user state recognition unit 231.

In step S103, the emotion decision unit 232 decides an emotion value indicating the emotion of the robot 100 based on the information analyzed by the sensor module unit 410 and the state of the user 10 recognized by the user state recognition unit 231.

In step S104, the storage control unit 238 selects information to be collected (stored) in accordance with the emotion value of the user 10 decided by the emotion decision unit 232.

In step S105, the storage control unit 238 stores the selected information in the history data 222.

As described above, according to the robot 100, the emotion value indicating the emotion of the robot 100 is decided based on the user state, and whether to store data including the action of the user 10 in the history data 222 is decided based on the emotion value of the robot 100. This makes it possible to suppress the capacity of the history data 222 that stores data including the action of the user 10. In addition, for example, when the robot 100 determines, after ten years, that the user state is the same as the user state at ten years before, the robot 100 reads the history data 222 of ten years before, and thus, can present, to the user 10, the state of the user 10 at ten years before (for example, the facial expression, emotion, and the like of the user 10), and can further present any surrounding information such as data of a voice, an image, a smell, and the like at the situation.

In addition, according to the robot 100, it is possible to cause the robot 100 to execute an appropriate action with respect to the action of the user 10. In known technologies, an action of the user is classified to determine an action of the robot including the facial expression or appearance of the robot. In contrast, the robot 100 decides the current emotion value of the user 10, and executes an action on the user 10 based on the past emotion value and the current emotion value. Therefore, for example, in a case where the user 10 who looked happy the day before is depressed next day, the robot 100 can perform utterance "You looked happy yesterday. What's wrong with you today?". In addition, the robot 100 can also perform an utterance with a gesture. In addition, for example, in a case where the user 10 who was depressed yesterday is fine today, the robot 100 can utter, "You were depressed yesterday, but you look fine today?" Furthermore, for example, in a case where the user 10 who looked happy yesterday looks happier at next day than the day before, the robot 100 can perform utterance such as "You looks happier today than yesterday. Did something good happen to you more than yesterday?" In addition, when the user 10 has an emotion value of 0 or more and is continuously in a state where the fluctuation range of the emotion value is within a certain range, for example, the robot 100 can make an utterance such as "Recently, you are stably in good mood." to the user 10.

Furthermore, for example, in a case where the robot 100 asks the user 10 a question "Have you finished the homework you mentioned yesterday?" and an answer of "I have finished it" is obtained from the user 10, the robot 100 can make a positive utterance such as "Good for you!" and make a positive gesture such as applause or thumbs-up. In addition, for example, when the user 10 utters "The presentation we discussed the day before yesterday went well", the robot 100 can make a positive utterance such as "Good job!" and also make the above positive gesture. In this manner, by the action taken by the robot 100 based on the history of the state of the user 10, the user 10 can be expected to feel a sense of closeness to the robot 100.

While the above embodiment is a case where the robot 100 recognizes the user 10 using the face image of the user 10, the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

Note that the robot 100 is an example of an electronic device including an action control system. The application target of the action control system is not limited to the robot 100, and the action control system can be applied to various electronic devices. In addition, the function of the server 200 may be implemented by one or more computers. At least some functions of the server 200 may be implemented by a virtual machine. In addition, at least a part of the functions of the server 200 may be implemented by a cloud.

### (Another embodiment)

The robot 100 described above may be mounted on a stuffed toy, or may be applied to a control device connected by a wireless or wired link to a control target device (speaker or camera) mounted on the stuffed toy.

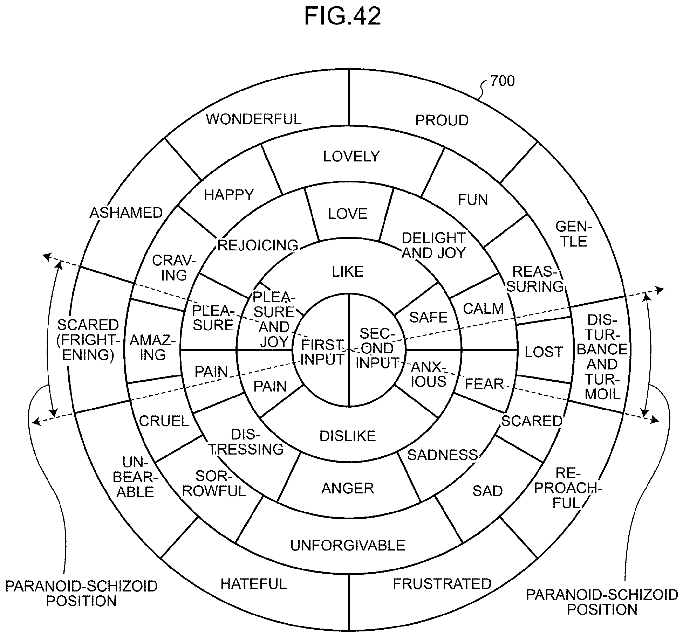

The emotion decision unit 232 may decide the user's emotion in accordance with a specific mapping. Specifically, the emotion decision unit 232 may decide the user's emotion based on an emotion map (refer to FIG. 42) being a specific mapping.

FIG. 42 is a diagram illustrating an emotion map 400 on which a plurality of emotions is mapped. In the emotion map 400, emotions are arranged concentrically radially from the center. The closer to the center of the concentric circle, the more the emotion disposed is toward a primitive state. Emotions indicating states and actions generated from the state of mind are disposed toward the outer side of the concentric circle. The emotion is a concept including an affect and a mental state. The left side of the concentric circle generally includes emotions generated from reactions occurring in the brain. The right side of the concentric circle generally includes emotions induced by situational judgment. The upper and lower directions of the concentric circle generally include emotions generated from reactions occurring in the brain and induced by situational judgment. In addition, the upper side of the concentric circle includes "pleasant" emotions while the lower side of the concentric circle includes "unpleasant" emotions. In this manner, the emotion map 400 is a map on which a plurality of emotions is mapped based on a structure of generating emotions, and emotions that are likely to occur at the same time are mapped close to each other.
(1) For example, in a case where the emotion engine, which is the emotion decision unit 232 of the robot 100, detects an emotion at about 100 msec, the decision of the reaction operation (for example, affirmative interjection) of the robot 100 may be performed at a timing at which the frequency is at least similar to the detection frequency (100 msec) of the emotion engine, or may be performed at a timing earlier than this. The detection frequency of the emotion engine may be construed as a sampling rate.

The emotion is detected in about 100 msec, and the reacting operation (for example, affirmative interjection) is immediately performed in conjunction with the detection, making it possible to achieve a dialogue reading the situation instead of giving a strange affirmative interjection. The robot 100 performs a reacting operation (affirmative interjection or the like) in accordance with the directionality and the degree (intensity) of the mandala-like chart of the emotion map 400. The detection frequency (sampling rate) of the emotion engine is not limited to 100 ms, and may be changed depending on the situation (such as when playing sports), the age of the user, or the like.

(2) With reference to the emotion map 400, the directionality and the degree of intensity of the emotion may be set in advance to set the motion of the affirmative interjection and the magnitude of the affirmative interjection. For example, in a case where the robot 100 feels a sense of stability, security, or the like, the robot 100 continues listening to the speech while nodding. When the robot 100 feels anxious, lost, or suspicious, the robot 100 may tilt its head or stop nodding.

These emotions are distributed in the 3 o'clock direction of the emotion map 400, and usually wander between being secure and anxious. In the right half of the emotion map 400, situational awareness is stronger than internal sensation, and thus gives a calm impression.

(3) When the robot 100 feels good after being complimented, a filler "Wow" may come before the words; when the robot feels pain after receiving harsh words, a filler "Ohh!" may come before the words. Furthermore, a physical reaction such as a gesture of the robot 100 crouching while saying "Ohh!" may be included. These emotions are distributed around 9 o'clock on the emotion map 400.

(4) In the left half of the emotion map 400, internal sensation (reaction) is stronger than situational awareness. Therefore, an impression of unintentional reaction can be given.

In a case where the robot 100 has a favorable feeling in situational awareness while having an internal feeling (reaction) of satisfaction, the robot 100 may nod deeply while looking at the other party, or may utter "Yeah". In this manner, the robot 100 may generate a balanced favorable feeling to the other party, that is, an action such as tolerance or generosity to the other party. Such emotions are distributed around 12 o'clock on the emotion map 400.

On the contrary, when the robot 100 has an internal feeling (reaction) of unpleasantness and also has negative feelings as situational awareness, the robot 100 may shake its head when feeling antipathy, and may stare at the other party with LED eyes turned into red when the robot 100 has a feeling close to hatred. Such emotions are distributed around 6 o'clock on the emotion map 400.

(5) Since the inner side of the emotion map 400 represents the inside of the mind and the outer side of the emotion map 400 represents an action, the emotion is more visible (appears in the action) toward the outer side of the emotion map 400.

(6) In a case where the robot 100 listens to a person's speech while feeling the sense of security distributed around 3 o'clock on the emotion map 400, the robot slightly nods with a sound "uh-huh". However, in the direction of love around 12 o'clock, the robot may perform strong and deep nodding.

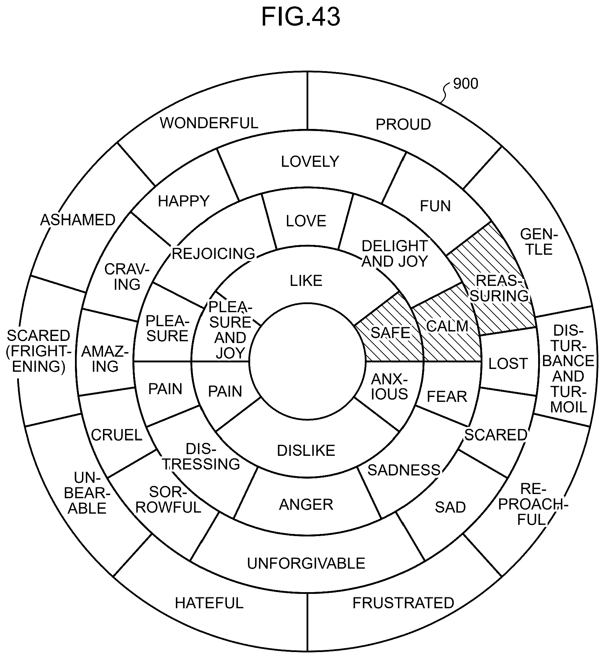

The emotion decision unit 232 inputs the information analyzed by the sensor module unit 410 and the recognized state of the user 10 to a neural network trained in advance, acquires an emotion value indicating each emotion illustrated on the emotion map 400, and decides the emotion of the user 10. This neural network is trained in advance based on a plurality of pieces of learning data including a combination of the information analyzed by the sensor module unit 410 and the recognized state of the user 10 and the emotion value indicating each emotion illustrated on the emotion map 400. In addition, as in an emotion map 900 illustrated in FIG. 43, this neural network is trained to allow emotions disposed close to each other to have close values. FIG. 43 is a diagram illustrating another example of the emotion map. FIG. 43 illustrates an example in which a plurality of emotions such as "secure", "calm", and "reassuring" have emotion values close to each other.

Furthermore, the emotion decision unit 232 may decide the emotion of the robot 100 in accordance with a specific mapping. Specifically, the emotion decision unit 232 inputs the information analyzed by the sensor module unit 410, the state of the user 10 recognized by the user state recognition unit 231, and the state of the robot 100 to a neural network trained in advance, acquires an emotion value indicating each emotion illustrated on the emotion map 400, and decides the emotion of the robot 100. This neural network is trained in advance based on a plurality of pieces of learning data including a combination of the information analyzed by the sensor module unit 410, the recognized state of the user 10, and the state of the robot 100, and the emotion value indicating each emotion illustrated on the emotion map 400. For example, the neural network is trained based on learning data indicating that the emotion value "3" of "happy" is obtained in a case where the robot 100 is recognized as being stroked by the user 10 from the output of the touch sensor 407, and learning data indicating that the emotion value "3" of "angry" is obtained in a case where the robot 100 is recognized as being hit by the user 10 from the output of the acceleration sensor 405. In addition, as in an emotion map 900 illustrated in FIG. 43, this neural network is trained to allow emotions disposed close to each other to have close values.

In addition, the emotion decision unit 232 may decide the emotion of the robot 100 based on the action content of the robot 100 generated by the text generation model. Specifically, the emotion decision unit 232 inputs the action content of the robot 100 generated by the text generation model to the neural network trained in advance, acquires the emotion value indicating each emotion illustrated on the emotion map 400, integrates the acquired emotion value indicating each emotion and the emotion value indicating each emotion of the current robot 100, and updates the emotion of the robot 100. For example, the acquired emotion value indicating each emotion and the emotion value indicating each emotion of the current robot 100 are averaged and integrated. This neural network is trained in advance based on a plurality of pieces of learning data that is a combination of text representing the action content of the robot 100 generated by the text generation model and the emotion value indicating each emotion illustrated on the emotion map 400.

For example, there is a case where utterance content of the robot 100 "Good for you. Lucky you." is obtained as the action content of the robot 100 generated by the text generation model. In this case, the emotion of the robot 100 is updated such that, when the text representing the utterance content is input to the neural network, a high value is obtained as the emotion value of the emotion "happy" to increase the emotion value of the emotion "happy".

The action decision unit 236 adds a fixed sentence for asking a question about the action content of the robot corresponding to the user's action to the text representing the user's action, the user's emotion, and the robot's emotion, and inputs the obtained text to the text generation model having a dialog function, thereby generating the action content of the robot.

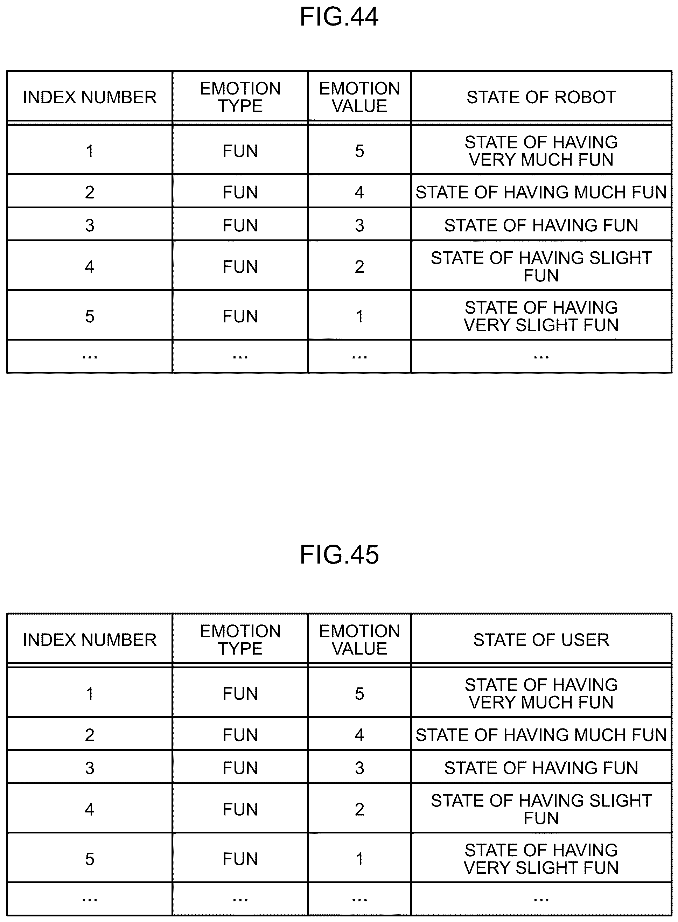

For example, the action decision unit 236 uses an emotion table as illustrated in FIG. 44 to acquire a text indicating the state of the robot 100 from the emotion of the robot 100 decided by the emotion decision unit 232. FIG. 44 is a diagram illustrating an example of the emotion table. Here, in the emotion table, an index number is assigned to each emotion value for each type of emotion, and a text indicating the state of the robot 100 is stored for each index number.

In a case where the emotion of the robot 100 decided by the emotion decision unit 232 corresponds to the index number "2", a text "state of having much fun" is obtained. Note that, in a case where the emotion of the robot 100 corresponds to a plurality of index numbers, a plurality of texts indicating the state of the robot 100 is obtained.

In addition, an emotion table as illustrated in FIG. 45 is prepared also for the emotion of the user 10. FIG. 45 is a diagram illustrating an example of the emotion table. Here, in a case where the user's action is to say "AAA", the emotion of the robot 100 corresponds to the index number "2 ", and the emotion of the user 10 corresponds to the index number "3", the sentences "The robot is in a state of having much fun. The user is having fun. The user said "AAA" to the robot. What will be an answer as a robot?" are input to the text generation model to acquire the action content of the robot. The action decision unit 236 decides an action of the robot from the action content.

In this manner, since the robot 100 can change the action of the robot in accordance with the index number corresponding to the emotion of the robot, the user has an impression of the robot 100 having a heart, and is prompted to take an action such as talking to the robot.

Furthermore, the action decision unit 236 may generate the action content of the robot by adding not only the text indicating the action of the user, the emotion of the user, and the emotion of the robot but also the text indicating the content of the history data 222, and then adding a fixed sentence for asking a question about the action content of the robot corresponding to the action of the user and inputting the obtained text to the dialog function. With this method, since the robot 100 can change the action of the robot in accordance with the history data representing the emotion and action of the user, the user has an impression of the robot having an individual personality, and is prompted to take an action such as talking to the robot. In addition, the history data may further include the emotion and action of the robot.

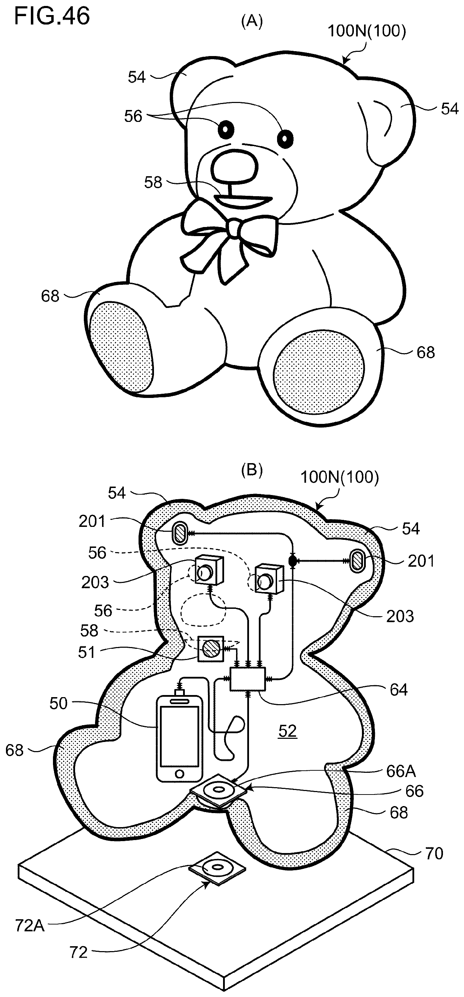

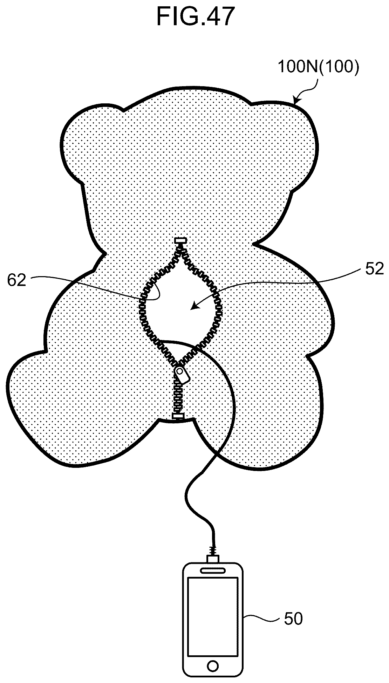

Specifically, the stuffed toy is configured as follows. For example, the robot 100 may be applied to a cohabitant (specifically, a stuffed toy 100N illustrated in FIGS. 46 and 47) who spends daily life with the user 10 and has a dialogue with the user 10 based on information related to daily life, and provides information matching the tastes and preferences of the user 10. In the present embodiment (another embodiment), an example in which the control part of the robot 100 is applied to the smartphone 50 will be described.

The stuffed toy 100N is equipped with a function as an input/output device of the robot 100. The smartphone 50 functioning as a control section of the robot 100 is detachable from the robot 100. Inside the stuffed toy 100N, an input/output device and the smartphone 50 which is accommodated in the stuffed toy 100N are connected to each other.

As illustrated in FIG. 46(A), the stuffed toy 100N has a shape of a bear an external appearance of which is covered with a soft fabric in the present embodiment (another embodiment). As illustrated in FIG. 46(B), The input/output devices disposed in a space 52 formed inside the stuffed toy 100N include: a microphone 401 of the sensor unit 400 disposed at a portion corresponding to each ear 54; a 2D camera 403 of the sensor unit 400 disposed at a portion corresponding to an eye 56; and a speaker 51 constituting a part of the control target 252 disposed at a portion corresponding to a mouth 58. Note that the microphone 401 and the speaker 51 are not necessarily separated from each other, and may be an integrated unit. In the case of the unit, it is preferable to arrange the unit at a position where the utterance can be heard naturally, such as the position of the nose of the stuffed toy 100N. Although the case where the stuffed toy 100N has an animal shape has been described as an example, the present invention is not limited thereto. The stuffed toy 100N may have a shape of a specific character.

The smartphone 50 has a function as the sensor module unit 410, a function as the storing unit 220, a function as the user state recognition unit 231, a function as the emotion decision unit 232, a function as the action recognition unit 234, a function as the action decision unit 236, a function as the storage control unit 238, a function as the action control unit 251, and a function as the communication processing unit 280 and the event detection unit 290, illustrated in FIG. 40.

As illustrated in FIG. 47, a fastener 62 is attached to a part (for example, the back portion) of the stuffed toy 100N. By opening the fastener 62, the outside and the space 52 communicate with each other.

Here, the smartphone 50 is accommodated in the space 52 from the outside and is connected in USB connection to each input/output device via a USB hub 64 (refer to FIG. 46(B)), so as to have a function equivalent to that of the robot 100 illustrated in FIG. 39.

The USB hub 64 is connected to a non-contact power receiving plate 66. The power receiving plate 66 incorporates a power receiving coil 66A. The power receiving plate 66 is an example of a wireless power receiving unit that receives power supply wirelessly.

The power receiving plate 66 is disposed near a root 68 of both legs of the stuffed toy 100N, and is located closest to a mounting base 70 when the stuffed toy 100N is placed on the mounting base 70. The mounting base 70 is an example of an external wireless power transmitter.

The stuffed toy 100N placed on the mounting base 70 can be viewed as an ornament in a natural state.

In addition, this root is formed to be thinner than the surface layer thickness of the stuffed toy 100N in other parts, and thus is held in a state closer to the mounting base 70.

The mounting base 70 includes a charging pad 72. The charging pad 72 incorporates a power transmitting coil 72A. When the power transmitting coil 72A transmits a signal to search the power receiving coil 66A of the power receiving plate 66 and the power receiving coil 66A is found, a current flows through the power transmitting coil 72A to generate a magnetic field, and the power receiving coil 66A reacts to the magnetic field to start electromagnetic induction. This allows current to flow through the power receiving coil 66A, and power is stored in a battery (not illustrated) of the smartphone 50 via the USB hub 64.

That is, the smartphone 50 is automatically charged by placing the stuffed toy 100N as a statuette on the mounting base 70, making it unnecessary to take out the smartphone 50 from the space 52 of the stuffed toy 100N for charging.

In the present embodiment (another embodiment), the smartphone 50 is accommodated in the space 52 of the stuffed toy 100N and connected by wired link (USB connection), but the connection is not limited thereto. For example, a control device having a wireless function (for example, "Bluetooth (registered trademark)") may be accommodated in the space 52 of the stuffed toy 100N, and the control device may be connected to the USB hub 64. In this case, the smartphone 50 and the control device wirelessly communicate with each other without inserting the smartphone 50 into the space 52, and the external smartphone 50 is connected to each input/output device via the control device, making it possible to have a function equivalent to that of the robot 100. Alternatively, the control device in which the control device is accommodated in the space 52 of the stuffed toy 100N and the external smartphone 50 may be connected by wired link.

While the present embodiment (another embodiment) has exemplified a toy bear as the stuffed toy 100N, the stuffed toy 100N may be another stuffed animal, a doll, or may have a shape of a specific character. In addition, the stuffed toy may have interchangeable outfits. The material of the skin is not limited to a fabric, and may be other materials such as soft vinyl, but is preferably to be a soft material.

Furthermore, a monitor may be attached to the skin of the stuffed toy 100N to add the control target 252 that provides information to the user 10 through vision. For example, the eyes 56 may be used as a monitor to express delight, anger, sadness, and joy by the image on the eyes, or it is also allowable to provide, on a belly portion, a window through which the monitor of the built-in smartphone 50 is visible. Furthermore, the eyes 56 may be used as a projector to express delight, anger, sadness, and joy by an image projected on a wall surface.

According to the another embodiment, the existing smartphone 50 is placed in the stuffed toy 100N, and a camera 203, the microphone 401, the speaker 51, etc. are extended from the smartphone 50 to appropriate positions via the USB connection.

Furthermore, for wireless charging, the smartphone 50 and the power receiving plate 66 are connected via USB, and the power receiving plate 66 is disposed so as to be as outermost as possible from the inside of the stuffed toy 100N.

In order to use the wireless charging of the smartphone 50, it is necessary to dispose the smartphone 50 as outermost as possible when viewed from the inside of the stuffed toy 100N, which would give a rough feeling when the stuffed toy 100N is touched from the outside.

To avoid this, the smartphone 50 is disposed at the center of the stuffed toy 100N as much as possible, while the wireless charging function (power receiving plate 66) is disposed as outermost as possible as viewed from the inside of the stuffed toy 100N. The camera 203, the microphone 401, the speaker 51, and the smartphone 50 receive wireless power supply via the power receiving plate 66.

### (Sixth embodiment)

Next, a sixth embodiment will be described. Here, portions different from the above-described embodiments will be mainly described. Description of configurations and the like similar to those of the above-described embodiments will be omitted.

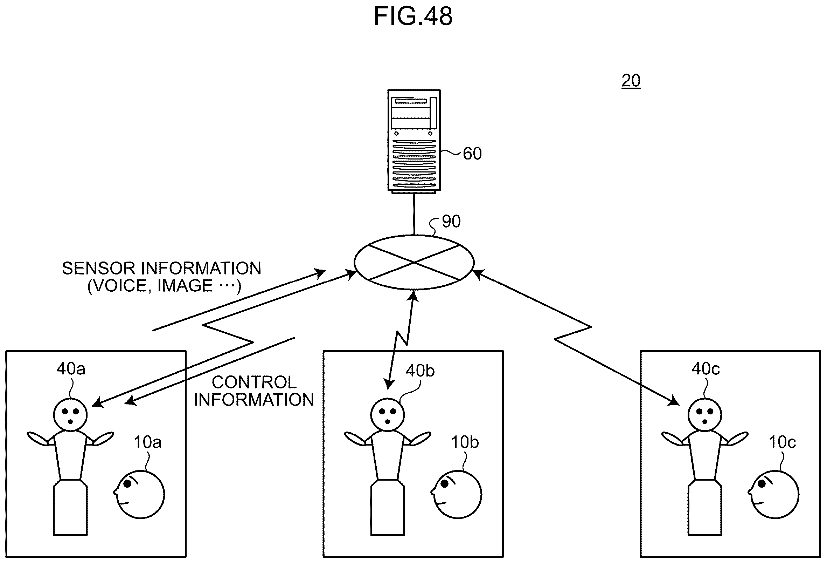

FIG. 48 is a diagram schematically illustrating an example of an overall configuration of a system 20 according to the sixth embodiment. The system 20 includes a server 60, a robot 40a, a robot 40b, and a robot 40c. Note that the server 60 can function as a storage control system. Each of the robot 40a, the robot 40b, and the robot 40c is an example of a target object being a control target of storage by the storage control system.

The robot 40a, the robot 40b, and the robot 40c are disposed at home, for example. The user 10a is a user of the robot 40a. The user 10a is a family member of a home where the robot 40a is arranged or another person who has visited the home. The robot 40a performs interactions such as conversation with the user 10a. Similarly, the robot 40b and the robot 40c perform interaction such as having conversations with the user 10b and the user 10c, individually. Note that the robot 40a, the robot 40b, and the robot 40c can also be used in a use mode in which they are arranged at reception of a store or an office and respond to a visiting customer. The use modes of the robot 40a, the robot 40b, and the robot 40c are not limited to these use modes.

The server 60 is provided remotely from the robot 40a, the robot 40b, and the robot 40c. The server 60 can control the robot 40a, the robot 40b, and the robot 40c through the communication network 90. For example, the server 60 acquires the sensor information detected by the robot 40a through the communication network 90, decides the emotion of the robot 40a and the operation to be performed by the robot 40a based on the acquired sensor information, and transmits control information through the communication network 90 to instruct the robot 40a.

The robot 40b and the robot 40c have substantially the same function as the robot 40a. In the description of the system 20, the robot 40a, the robot 40b, and the robot 40c may be collectively referred to as a robot 40. In addition, in the system 20, the server 60 executes processing of deciding the emotion and operation of the robot 40. However, the robot 40 may execute a part or all of the processing of deciding the emotion or operation of the robot 40.

The robot 40 acquires various types of information detected by the sensor, such as a voice and an image of the user 10 and information regarding an external force received by the robot 40, and transmits the information to the server 60. Based on the information acquired from the robot 40, the server 60 generates control information for controlling the robot 40 using a neural network (NN).

Specifically, the server 60 recognizes the presence of the user 10a from the voice or image of the user 10a, recognizes that the user 10a is "A", and generates event information of "A is present". In addition, event information such as "stroked" is generated from the external force information acquired from the robot 40. In addition, based on the information acquired from the robot 40, the server 60 generates input information to the neural network.

The server 60 decides the emotion from the generated input information using information corresponding to the amount of internally secreted substances in the living body as effect information having an effect on the decision of the emotion. For example, the server 60 decides the emotion using a neural network that uses the secretion amount of internally secreted substances such as the dopamine amount, the noradrenaline amount, and the serotonin amount, as parameters. In a neural network, an increase in the dopamine amount has an effect on generation of an emotion analogous to "happy". In addition, an increase in the noradrenaline amount has an effect on generation of emotions analogous to "angry". In addition, an increase in the serotonin amount has an effect in a direction of suppressing the intensity of emotions such as "happy" and "angry". The neural network determines what type of emotion is likely to be generated by the sum of the secretion amounts of these internally secreted substances.

Here, when the total value of the dopamine amount and the noradrenaline amount exceeds a threshold, the server 60 determines that the intensity of emotion exceeds the threshold. In this case, the server 60 stores secretion information indicating the amount of the internally secreted substance together with memorization information based on the information acquired from the robot 40. Examples of the memorization information include predetermined types of information such as the event information of "A is present" and "stroked" described above and the image and video information acquired from the robot 40.

Here, it is assumed that the server 60 generates event information of "A is present" from information newly acquired after storing the memorization information. In this case, the server 60 compares the current secretion amount of the internally secreted substance of the robot 40 with the secretion amount of the internally secreted substance stored together with the memorization information of "A is present" and "stroked". Having determined that the secretion amounts of the internally secreted substances are analogous to each other, the server 60 selects the memorization information of "stroked" stored together with the memorization information of "A is present" as information to be evoked.

Thereafter, when information of "stroked" is actually generated from the information newly acquired from the robot 40, the server 60 reflects the secretion amount of the internally secreted substance stored together with the memorization information of "A is present" and "stroked" on the processing of the neural network, and decides the emotion of the robot 40. With this mechanism, in case where an emotion of "happy" occurred when the user was stroked in the past, it is possible to suppress a strong manifestation of an emotion completely opposite to the emotion of "happy" that occurred in the past.

On the other hand, when the information of "stroked" is not generated from the information newly acquired from the robot 40, the emotion of the robot 40 is decided by reflecting the secretion amount opposite to the secretion amount of the internally secreted substance stored together with the memorization information of "A is present" and "stroked", in the processing of the neural network. This makes it possible to easily obtain an emotion different from "happy". This sometimes leads to occurrence of an emotion of being unfortunate.

In this manner, according to the system 20, the impressive memorization information acquired by the robot 40 in the past can be extracted in consideration of the secretion amount of the internally secreted substance. Therefore, it is possible to extract appropriate memorization information corresponding to the information acquired from the robot 40. In addition, the extracted memorization information is not to be uniformly determined from the information acquired from the robot 40, and various emotions can be generated in accordance with the information learned in the past and the current situation.

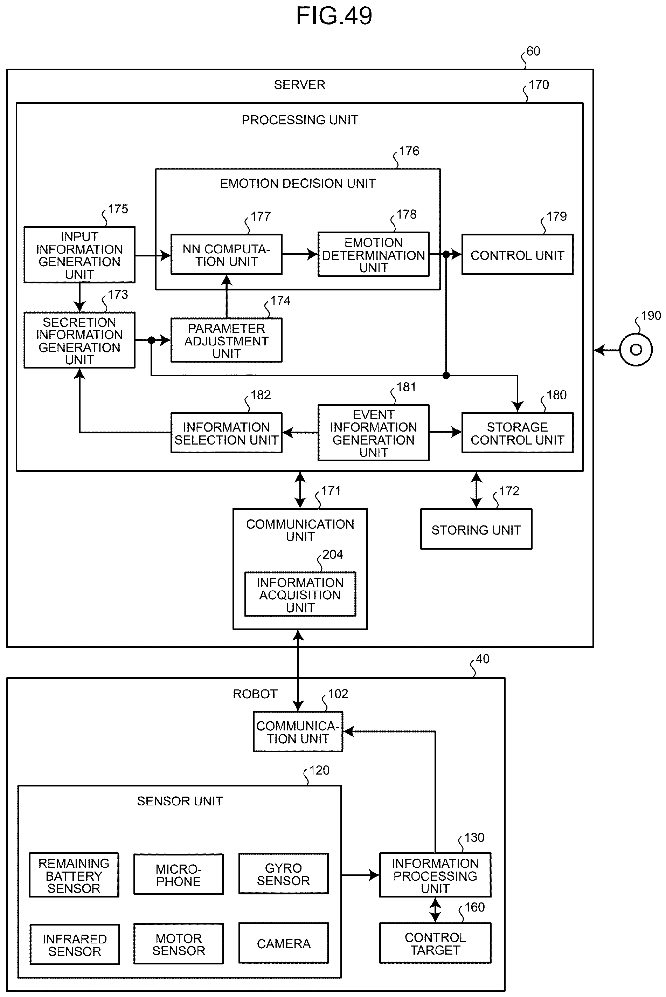

FIG. 49 is a diagram schematically illustrating functional block configurations of the robot 40 and the server 60. First, a functional block configuration of the robot 40 will be described. The robot 40 includes a sensor unit 120, an information processing unit 130, a control target 160, and a communication unit 102. The information processing unit 130 may be a processor such as an MPU. The communication unit 102 is responsible for communication with the server 60. The communication unit 102 may be a communication device such as a network IF.

The control target 160 is a control target of the operation of the robot 40 and includes a speaker. The control target 160 also includes motors etc. that drive movable portions such as limbs or the head of the robot 40.

The sensor unit 120 includes various sensors such as a microphone, a gyro sensor, a motor sensor, a camera, a remaining battery level sensor, and an infrared sensor.

The sensor unit 120 outputs, to the information processing unit 130, various types of sensor data such as audio data acquired by a microphone, an image captured by a camera, an angular velocity detected by a gyro sensor, a rotation angle detected by a motor sensor, a remaining capacity detected by a remaining battery level sensor, and object information detected by an infrared sensor. The information processing unit 130 supplies the acquired sensor signal to the communication unit 102 so as to be transmitted to the server 60. In addition, based on control information acquired from the server 60, the information processing unit 130 controls to perform utterance from a speaker of the robot 40 or controls to operate limbs of the robot 40.

Next, a functional block configuration of the server 60 will be described. The server 60 includes a processing unit 170, a communication unit 171, and a storing unit 172. The processing unit 170 includes a secretion information generation unit 173, an input information generation unit 175, a parameter adjustment unit 174, an emotion decision unit 176, a control unit 179, an information selection unit 182, an event information generation unit 181, and a storage control unit 180. The emotion decision unit 176 includes an NN computation unit 177 and an emotion determination unit 178. The communication unit 171 includes an information acquisition unit 204.

The communication unit 171 is responsible for communication with the robot 40. The communication unit 171 may be a communication device such as a network IF. The storing unit 172 includes a storage medium such as a hard disk device or flash memory. The storing unit 172 includes a volatile storage device such as RAM. The storing unit 172 stores data and the like necessary for execution of processing of the processing unit 170 in addition to a program code and various temporary data read by the processing unit 170 at the time of execution.

The information acquisition unit 204 acquires event information related to an event experienced by a target object being a control target of storage. For example, the information acquisition unit 204 acquires the event information detected by the sensor unit 120 of the robot 40 through the communication network 90. In addition, the information acquisition unit 204 acquires information for deciding the emotion of the robot 40. For example, the information acquisition unit 204 acquires information detected by the sensor unit 120 of the robot 40 through the communication network 90. While the information acquisition unit 204 in the above example directly acquires the event information, the event information may be acquired indirectly. In this case, the event information generation unit 181 generates event information based on the information for deciding the emotion of the robot 40 acquired by the information acquisition unit 204. For example, the event information generation unit 181 generates event information such as "A is present" and "stroked". The information acquisition unit 204 acquires the event information generated by the event information generation unit 181. The event information can be stored in the storing unit 172 as memorization information.

Based on the information acquired by the information acquisition unit 204, the secretion information generation unit 173 generates secretion information indicating the secretion amount of internally secreted substances having an effect on the decision of emotions of the robot 40. When the intensity of the emotion of the robot 40 decided based on the information acquired by the information acquisition unit 204 exceeds a predetermined value, the storage control unit 180 controls to store the secretion information and the memorization information based on the information acquired by the information acquisition unit 204 in association with each other. Specifically, the storage control unit 180 controls to store the secretion information and the memorization information based on the information acquired by the information acquisition unit 204 in the storing unit 172. Based on the secretion information, the information selection unit 182 selects the memorization information evoked by the robot 40 among the memorization information stored in association with the secretion information.

In a case where the intensity of the emotion of the robot 40 decided based on the first information acquired by the information acquisition unit 204 exceeds a predetermined value, the storage control unit 180 controls to store: first memorization information based on first information; a set of the first memorization information and second memorization information which is based on second information acquired by the information acquisition unit 204 before acquisition of the first information; and the secretion information, in association with each other. When the information acquisition unit 204 has acquired new information that is in agreement with the second memorization information, the information selection unit 182 selects the first memorization information and a set of the second memorization information and the first memorization information, as the memorization information to be evoked by the robot 40 on condition that the secretion information generated by the secretion information generation unit 173 is in agreement with the secretion information stored in association with the set of the second memorization information and the first memorization information. This makes it possible to implement storage control such as a method referred to as associative learning.

When the first memorization information is selected by the information selection unit 182, the storage control unit 180 controls to store the secretion information in which the secretion amount of the internally secreted substance having an effect of suppressing emotional ups and downs has been increased in association with a set of the second memorization information and the first memorization information on condition that the information acquisition unit 204 has further acquired new information that is in agreement with the first memorization information. This makes it possible to produce habituation to an event that occurs at a high frequency.

When the first memorization information is selected by the information selection unit 182, the secretion information generation unit 173 reflects the secretion amount of the internally secreted substance indicated by the secretion information stored in association with the set of the second memorization information and the first memorization information, in the secretion information indicating the current secretion amount of the internally secreted substance, on condition that the information acquisition unit 204 has further acquired new information that is in agreement with the first memorization information. This makes it possible to suppress generation of an emotion far away from the emotion generated in the past.

In a case where the intensity of the emotion of the robot 40 decided based on the first information acquired by the information acquisition unit 204 exceeds a predetermined value, the storage control unit 180 controls to store: first memorization information based on first information; a set of the first memorization information and each of arbitrary combinations of a plurality of pieces of second memorization information which is based on a plurality of pieces of second information acquired by the information acquisition unit 204 before acquisition of the first information; and the secretion information, in association with each other. When the information acquisition unit 204 has acquired new information that is in agreement with a first combination of the plurality of pieces of second memorization information, the information selection unit 182 selects the first memorization information and a set of the first combination of the plurality of pieces of second memorization information and the first memorization information, as the memorization information to be evoked by the target object, on condition that the secretion information generated by the secretion information generation unit 173 is in agreement with the secretion information stored in association with the set of the first combination of the plurality of pieces of second memorization information and the first memorization information.

In a case where the intensity of the emotion of the robot 40 decided based on the first information acquired by the information acquisition unit 204 exceeds a predetermined value, the storage control unit 180 controls to store: the first memorization information; a set of a sequence of each of arbitrary combinations of the plurality of pieces of second memorization information, the first memorization information, and third memorization information based on third information acquired subsequently to the first information by the information acquisition unit 204; and the secretion information, in association with each other. When the information acquisition unit 204 has acquired new information that is in agreement with the first combination of the plurality of pieces of second memorization information, the information selection unit 182 selects: the first memorization information; and a set of the first combination of the plurality of pieces of second memorization information, the first memorization information, and the third memorization information, as the memorization information to be evoked by the robot 40, on condition that the secretion information generated by the secretion information generation unit 173 is in agreement with the secretion information stored in association with the set of the sequence of the first combination of the plurality of pieces of second memorization information, the first memorization information, and the third memorization information.

When information that is in agreement with one or more pieces of determination information has been acquired, the storing unit 172 stores one or more pieces of memorization information that are allowed to be selected as information to be evoked by the robot 40 in association with the one or more pieces of determination information. Subsequently, in a case where the information acquisition unit 204 has acquired information that is in agreement with the determination information stored in a tolerance information storing unit in association with the set of the second memorization information and the first memorization information, and the information that is in agreement with the second memorization information, within a predetermined time, the information selection unit 182 selects the first memorization information as the memorization information to be evoked by the robot 40. This makes it possible to suppress an operation to be performed based on information learned in completely different scenes in the past.

When the information acquisition unit 204 has acquired new information that denies the first memorization information in a case where the first memorization information has been selected by the information selection unit 182, the secretion information generation unit 173 reflects the internally secreted substance of the secretion amount having an effect opposite to the effect of the secretion amount indicated by the secretion information stored in association with the set of the second memorization information and the first memorization information, on the secretion information stored in association with the set of the second memorization information and third memorization information based on the new information. In this case, the secretion information generation unit 173 may reflect the secretion information stored in association with the set of the second memorization information and the third memorization information reflecting the secretion amount of the internally secreted substance having the opposite effect, on the secretion information indicating the current secretion amount of the internally secreted substance. With this configuration, in a case where an event different from the evoked memorization information occurs, it is possible to generate an emotion opposite to the emotion that arises in a case where the event close to the evoked memorization information occurs.

The emotion decision unit 176 decides the intensity of the emotion of the target object based on the event information acquired by the information acquisition unit 204. For example, the emotion decision unit 176 decides the intensity of the emotion of the robot 40 based on at least one of the number, content, and acquisition interval of the event information acquired by the information acquisition unit 204. As an example, the emotion decision unit 176 decides the value of the intensity of the emotion in a case where the content of the event information is the content of "stroked" to be a higher value than the value of the intensity of the emotion in a case where the content of the event information is the content of "not stroked". In this manner, based on more detailed event information such as the number of pieces of event information, content, and acquisition intervals, the emotion decision unit 176 can appropriately decide the intensity of the emotion of the robot 40 by an algorithm close to the mechanism of determining the intensity of human emotions.

In addition, the emotion decision unit 176 decides the emotion of the robot 40 based on the secretion amount of the internally secreted substance indicated by the secretion information and the information acquired by the information acquisition unit 204. The emotion decision unit 176 decides the emotion of the robot 40 using a neural network having input information based on the information acquired by the information acquisition unit 204 as an input. Specifically, the NN computation unit 177 calculates the neural network, and the emotion determination unit 178 determines the emotion based on the computation result of the neural network obtained by the NN computation unit 177, thereby deciding the emotion.

The storage control unit 180 controls to store the intensity of the emotion decided by the emotion decision unit 176 and the event information in association with each other. For example, the storage control unit 180 controls to store information in which the intensity of emotion is associated with event information in the storing unit 172 as memorization information of the robot 40.

The storage control unit 180 may decide the retention amount of memory based on at least one of the intensity of the emotion decided by the emotion decision unit 176, the attentiveness and personality of the target object, the number of attention targets to which attention is paid by the target object, and the number, content, and acquisition interval of the event information acquired by the information acquisition unit 204. For example, the storage control unit 180 decides the retention amount of the memory to be retained as the memorization information of the robot 40 based on at least one of the intensity of the emotion, the attentiveness, and the personality of the robot 40, the number of attention targets, and the number, content, and acquisition interval of the event information. This makes it possible for the storage control unit 180 to appropriately decide the retention amount of memory by an algorithm close to the mechanism of determining the retention amount of memory of a person. Note that the "retention amount of memory" refers to a value related to the amount of memory recalled by the target object. The "retention amount of memory" may also include a "retention rate of memory" which is a rate of memory recalled by the target object.

The storage control unit 180 may change at least either one of the initial value of the retention amount of the memory or the change amount with the lapse of time in accordance with at least one of the intensity of the emotion, the attentiveness and personality of the target object, the number of attention targets, and the number, content, and acquisition interval of the event information. For example, the storage control unit 180 changes the initial value of the retention rate of memory to be retained as memorization information of the robot 40 (the ratio of the memory initially memorized by the robot 40) and the manner of falling of the retention rate of memory with the lapse of time (forgetting curve) in accordance with the intensity of the emotion, the attentiveness, and the personality of the robot 40, the number of attention targets, and the number, content (quality), and acquisition interval of the event information. This makes it possible for the storage control unit 180 to more appropriately decide the retention amount of memory by an algorithm closer to the mechanism of determining the retention amount of memory of a person.

As an example, in a case where the personality of the robot 40 is meticulous, the storage control unit 180 decides the retention amount of memory to be a high value as compared with a case where the personality is rough. Specifically, in a case where the personality of the robot 40 is meticulous, the storage control unit 180 decides to set the initial value of the memory retention rate to be a high value and decides to set the memory retention rate to be gradually decreased with the lapse of time, as compared with a case where the personality is rough. Here, with a person with a rough personality, there is a tendency that, even with repeated experiences of an event (an experience of which will give low intensity of emotion), the event will be forgotten soon as a non-significant event if the interval of repetition is long, as compared with a person with a meticulous personality. Therefore, in a case where the personality of the robot 40 is meticulous, by deciding the retention amount of memory to be a high value as compared with a case where the character of the robot 40 is rough, the storage control unit 180 can decide the retention amount of memory by following a pattern in which the robot 40 has a rough character, and even with repeated experiences of an event, the event will be forgotten soon as a non-significant event if the interval of repetition is long, similarly to a person with a rough personality. This makes it possible for the storage control unit 180 to more appropriately decide the retention amount of memory by an algorithm closer to the mechanism of determining the retention amount of memory of a person.

In addition, based on the intensity of the emotion, the attentiveness, and the personality of the robot 40, the number of attention targets, and the number, content, and acquisition intervals of the event information, the storage control unit 180 decides the memorization information to be retained and the memorization information not to be retained among the memorization information of the robot 40 stored in the storing unit 172. As an example, the storage control unit 180 decides the memorization information related to at least one of the event and the attention target in which at least one of the emotion and the attentiveness of the robot 40 is strong as the memorization information to be retained, and decides the memorization information other than this as the memorization information not to be retained. Subsequently, the storage control unit 180 gradually deletes the memorization information that is not to be retained from the memorization information stored in the storing unit 172 with the lapse of time. As an example, the storage control unit 180 deletes the memorization information that is not to be retained from the memorization information stored in the storing unit 172 along the forgetting curve so that the amount of the memorization information stored in the storing unit 172 decreases logarithmically to the lower limit value. Here, human memories tend to be gradually forgotten (deleted) with the lapse of time. Therefore, by deciding the memorization information to be retained and the memorization information not to be retained as described above, the storage control unit 180 can more appropriately decide the retention amount of memory by an algorithm closer to the mechanism of determining the retention amount of memory of a person.

The storage control unit 180 may further associate and store supplementary memorization information related to the environment around the target object. For example, the storage control unit 180 controls to store, in the storing unit 172, information further associated with supplementary memorization information related to the environment around the robot 40, as memorization information of the robot 40. This makes it possible for the storage control unit 180 to appropriately perform the memorization by an algorithm close to the mechanism of determining the retention amount of memory of a person.

The storage control unit 180 may further associate and store supplementary memorization information related to at least one of a smell, a temperature, humidity around the target object, the position, the weather, and the number of people, facial expressions, and emotions of the people. For example, the storage control unit 180 controls to store, in the storing unit 172, information further associated with supplementary memorization information related to the smell, temperature, humidity around the robot 40, the position by GPS, the weather, the number of people, facial expression, and emotion of the people, as the memorization information of the robot 40. This makes it possible for the storage control unit 180 to more appropriately perform the memorization by an algorithm closer to the mechanism of determining the retention amount of memory of a person.

Based on the secretion amount of the internally secreted substance indicated by the secretion information generated by the secretion information generation unit 173, the parameter adjustment unit 174 adjusts the computation parameter for deciding the emotion from the input information. The emotion decision unit 176 decides an emotion from the input information using the computation parameter. Here, the secretion amount of the internally secreted substance indicated by the secretion information has an effect on the coupling coefficient of the artificial synapse included in the neural network.

The neural network includes a plurality of emotion artificial neurons being artificial neurons in which emotions are defined. The emotion decision unit 176 decides the current emotion based on the current firing state of each of the plurality of emotion artificial neurons. For example, the emotion decision unit 176 may decide an emotion assigned to the emotion artificial neuron that has fired, as the emotion of the robot 40.

The control unit 179 controls the robot 40 in accordance with the emotion decided by the emotion decision unit 176. For example, when the emotion decision unit 176 decides the emotion of "happy", the control unit 179 generates control information for executing an action expressing the happiness and transmits the control information to the robot 40. In addition, the control unit 179 may generate control information of outputting a voice of a bright tone of speech from the speaker of the robot 40 and may cause the robot 40 to have a conversation with the user.

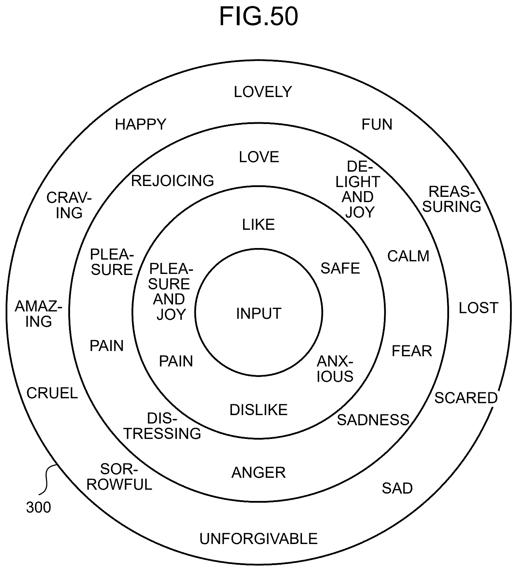

FIG. 50 is a diagram schematically illustrating the emotion map 300. In the emotion map 300, emotions are arranged concentrically radially from the center. The closer to the center of the concentric circle, the more the emotion disposed is toward a primitive state. Emotions indicating states and actions generated from the state of mind are disposed toward the outer side of the concentric circle. The emotion is a concept including an affect and a mental state. The left side of the concentric circle generally includes emotions generated from reactions occurring in the brain. The right side of the concentric circle generally includes emotions induced by situational judgment.

The neural network to be a computation target of the NN computation unit 177 includes an artificial neuron assigned to each emotion illustrated in the emotion map 300. In the neural network, a plurality of artificial neurons for input is also assigned to the input located on the innermost side of the concentric circle of the emotion map 300. The plurality of artificial neurons for input receives input of the input information generated by the input information generation unit 175 from the information acquired by the information acquisition unit 204. The artificial neurons are generally connected from the inside to the outside by an artificial synapse to form a neural network.

The NN computation unit 177 repeatedly performs neural network computation based on the input information, thereby deciding the firing state of each artificial neuron. The emotion determination unit 178 determines the emotion of the robot 40 from the firing state of each artificial neuron. For example, the emotion determination unit 178 determines the emotion to which the fired artificial neuron is assigned, as one emotion to be held by the robot 40.

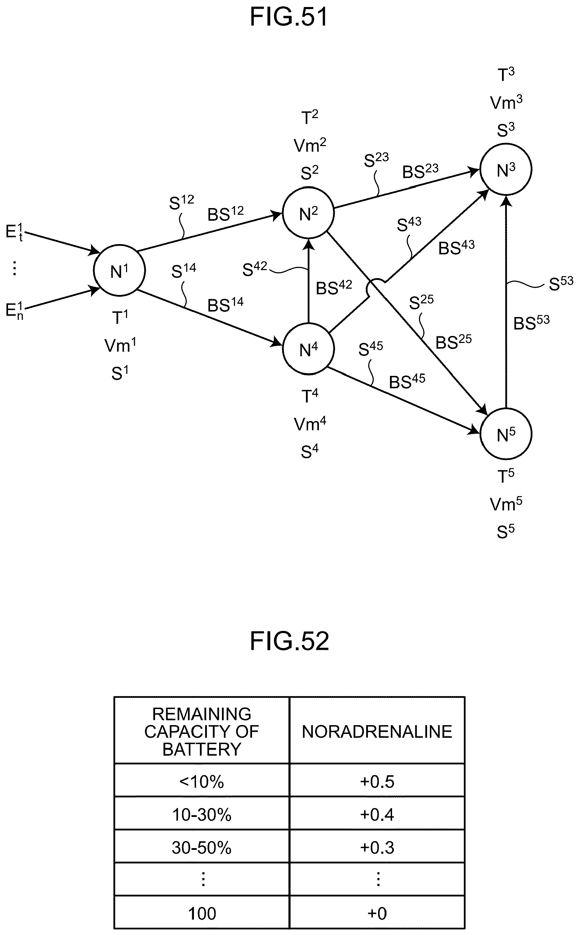

FIG. 51 is a diagram schematically illustrating a part of a neural network used by the system 20. A part of the illustrated neural network includes: artificial neurons N¹, N², N³, N⁴ and N⁵ and artificial synapses S¹², S¹⁴, S²³, S²⁵, S⁴², S⁴³, S⁴⁵ and S⁵³. The artificial neuron corresponds to a neuron in a living body. The artificial synapse corresponds to a synapse in a living body.

E¹ represents input information based on the detection signal. The artificial neuron N¹ is an artificial neuron for input. The artificial neuron N¹ receives input of n pieces of input information E₁¹ ··· input information Eₙ¹ generated based on detection signals of sensors.

The artificial synapse S¹² is an artificial synapse that connects the artificial neuron N¹ and the artificial neuron N² to each other. In particular, the artificial synapse S¹² is an artificial synapse that inputs the output of the artificial neuron N¹ to the artificial neuron N². The artificial synapse S¹⁴ is an artificial synapse that connects the artificial neuron N¹ and the artificial neuron N⁴ to each other. In particular, the artificial synapse S¹⁴ is an artificial synapse that inputs the output of the artificial neuron N¹ to the artificial neuron N⁴. Note that, when j and k are integers, an artificial synapse that inputs the output of the artificial neuron N^{j} to the artificial neuron N^{k} is denoted as an artificial synapse S^{jk}.

Here, when i is an integer, each artificial neuron is denoted as Nⁱ. Nⁱ has parameters, namely, Sⁱ representing the status of Nⁱ, Vⁱm representing the internal state of the artificial neuron represented by Nⁱ, and Tⁱ representing the threshold of firing of Nⁱ. In addition, the artificial synapse S^{jk} has a coupling coefficient BS^{jk} as a parameter. In the present embodiment, an artificial neuron may be collectively referred to as an artificial neuron N with its suffix omitted. In addition, an artificial synapse may be collectively referred to as an artificial synapse S with its suffix omitted. Similarly, the parameters of the artificial neuron may also be collectively referred to as an internal state Vm and a threshold T with their suffixes omitted.

The status S, the internal state Vm, and the threshold T of the artificial neuron N are parameters that can be updated with the progress of time. The status S is information related to the firing state of the neuron, and at least indicates whether the artificial neuron is in the firing state or the non-firing state. The internal state Vm is information related to the membrane potential of the neuron, and is an example of a parameter representing the internal state or output of the artificial neuron N.

In addition, the coupling coefficient BS, which is a parameter of the artificial synapse S, is a parameter that can be updated with the progress of time. The coupling coefficient BS is information related to the plasticity of the synapse, and indicates the coupling strength between the artificial neurons N coupled to each other by the artificial synapse S.

Based on the input information, the NN computation unit 177 updates the above-described parameters in the neural network and calculates the internal state Vm of each artificial neuron N. In the present embodiment, when the internal state Vm exceeds the threshold T, the artificial neuron N has the status S in the "firing" state. In the firing state, the artificial neuron N outputs a predetermined signal for a predetermined time. When a predetermined time elapses, the status S of N returns to non-firing.

Here, the operation content by the NN computation unit 177 will be described more specifically by taking N² as an example. The NN computation unit 177 calculates an input I² to N² by BS¹²×Vm¹×f(S¹)+BS⁴²×Vm⁴×f(S⁴). Here, f (S) is a function that returns 0 when S is a value indicating non-firing, and returns 1 when S is a value indicating a rising phase or a falling phase. This f(S) corresponds to a model in which a synapse transmits an action potential only when a neuron has fired. Note that f(S) may be 1. This corresponds to a model that transmits the membrane potential regardless of the firing state of the neuron. f(S) may be implemented by adopting a function corresponding to another transfer model of the membrane potential.

Typically, the NN computation unit 177 calculates an input Iⁱ to Nⁱ by ΣⱼBS^{ji}×Vm^{j}×f(S^{j})+ΣⱼEⱼⁱ. The NN computation unit 177 calculates inputs Iⁱ, Sⁱ, and the like to Nⁱ at the next time using BS^{ji}, Vm^{j}, S^{j}, and E^{j} at the current time. The NN computation unit 177 temporally repeats this to decide the status S of each artificial neuron N in real time. Then, the emotion determination unit 178 determines the emotion of the robot 40 based on the status S of each artificial neuron N. For example, in a case where an artificial neuron to which the emotion of "happy" is assigned in FIG. 3 has fired, the emotion determination unit 178 can determine that the robot 40 has an emotion of "happy".

Here, the parameter adjustment unit 174 adjusts the BS based on the information acquired from the robot 40. For example, when it is detected that the remaining capacity that is the remaining amount of the storage battery of the robot 40 is 50% or less, the secretion information generation unit 173 increases the secretion amount of "noradrenaline" as an internal variable. Subsequently, based on the secretion amount of "noradrenaline," the parameter adjustment unit 174 adjusts the coupling coefficient BS of the artificial synapse S associated with "noradrenaline". As will be described below, the generation of "noradrenaline" is set to enhance the coupling coefficient BS of the artificial synapse S on the path in which the artificial emotion neuron corresponding to the emotion such as "anxious" and "angry" fires, for example. This makes "noradrenaline" have an effect in a direction of promoting generation of emotions such as "anxious" and "angry".

The secretion amount of the internal secretion substance is associated with the coupling coefficient BS of a specific artificial synapse S. This makes it possible, by the information acquired by the robot 40, to change the ease of transmission of the signal at each artificial synapse S in the neural network via the secretion amount of the internal secretion substance. Therefore, various emotions can be generated from the information acquired by the robot 40.

FIG. 52 is a diagram illustrating an example of association information for associating a remaining capacity of a storage battery with an internally secreted substance. The storing unit 172 stores information indicating noradrenaline in association with a plurality of values of the remaining capacity of the storage battery. More specifically, the storing unit 172 stores information indicating the increase amount of the noradrenaline secretion amount in association with each remaining capacity of the storage battery. Note that the increase amount of the secretion amount is indicated by a ratio of the secretion amount indicated by the internal variable used by the NN computation unit 177 to the upper limit value 1. With this configuration, the secretion amount of noradrenaline increases with the decrease in the remaining capacity of the storage battery, promoting generation of emotions of "anxious" and "angry".

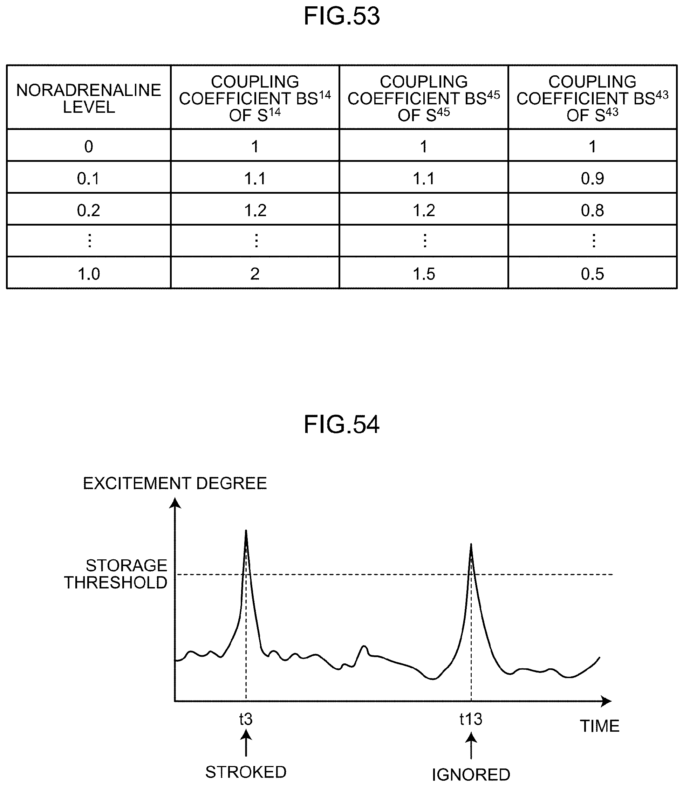

FIG. 53 is a diagram illustrating an example of coupling coefficient association information for associating a noradrenaline secretion amount with the coupling coefficient BS. The storing unit 172 stores information that associates the increase coefficient of the coupling coefficient BS¹⁴ of the artificial synapse S14, the increase coefficient of the coupling coefficient BS⁴⁵ of the artificial synapse S⁴⁵, and the increase coefficient of the coupling coefficient BS⁴³ of the artificial synapse S⁴³ with each other in association with the total secretion amount of noradrenaline. Note that the artificial synapse S taken here is assumed to connect the artificial neurons N with each other by strong coupling.

As illustrated, the larger the noradrenaline amount is, the larger the value is to be associated with the increase coefficient of the coupling coefficient BS¹⁴ and the increase coefficient of the coupling coefficient BS⁴⁵. On the other hand, the larger the noradrenaline amount is, the smaller the value is to be associated with the increase coefficient of the coupling coefficient BS⁴³. This makes it easier, in the neural network illustrated in FIG. 51, to transmit the signal generated by the input information in the direction from N¹ to N⁵ than in the direction from N¹ to N³. Accordingly, the artificial neuron arranged in the direction from N¹ to N⁵ is more likely to fire. Therefore, for example, the more the noradrenaline amount in the emotion map illustrated in FIG. 50, the more the emotion arranged in a specific direction with respect to the central portion of the concentric circle, for example, the emotion such as "anxious" or "scared" is likely to fire. Therefore, it is possible to make it easier for the robot 40 to generate an emotion similar to the emotion generated when a human is hungry.

Note that the description here is a case where the coupling coefficient BS of the artificial synapse S is adjusted in a direction of promoting firing of the artificial neuron N of the output destination. However, the increase coefficient may be set to allow adjustment of the coupling coefficient BS of the artificial synapse S in a direction of suppressing firing of the artificial neuron N of the output destination. For example, in a case where the artificial synapse S is strongly coupled, it is possible to suppress firing the artificial neuron N of the output destination by decreasing the increase coefficient. On the other hand, in a case where the artificial synapse S connects the artificial neuron N by the inhibitory coupling, it is possible to suppress firing of the artificial neuron N of the output destination by increasing the increase coefficient, while it is possible to promote firing the artificial neuron N of the output destination by decreasing the increase coefficient.

The parameter adjustment unit 174 refers to the coupling coefficient association information and adjusts the associated coupling coefficient BS by an amount corresponding to the total secretion amount of each internal secretion substance. This makes it possible to perform complicated adjustment of the adjustment amount of the coupling coefficient BS based on the information acquired by the robot 40, and further possible to allow the emotion artificial neurons to fire in various combinations. Moreover, by associating the relationship between the information acquired by the robot 40 and the internally secreted substance and the relationship between each internally secreted substance and the coupling coefficient BS with each other with a meaning making emulating humans, it is possible to generate natural emotions with no occurrence of strange feelings in humans.

Note that, in relation to FIG. 52, the correspondence relationship between the remaining capacity of the storage battery and noradrenaline as the information acquired from the robot 40 is exemplified. In addition, in relation to FIG. 53, the correspondence relationship between noradrenaline and the coupling coefficient BS is illustrated. However, the correspondence relationship between these pieces of information has been just exemplified to easily explain the effects of the internally secreted substances in the neural network.

FIG. 54 is a diagram schematically illustrating a temporal change of an excitement degree in the robot 40. For example, the emotion decision unit 176 calculates the sum of the secretion amount of dopamine and the secretion amount of noradrenaline as the excitement degree. The excitement degree is an example of the intensity of emotion of the robot 40. In a case where the calculated excitement degree exceeds a storage threshold, the event information generated by the event information generation unit 181 at the corresponding timing is to be stored in the storing unit 172.

For example, as illustrated in FIG. 54, as a result of computation performed by the NN computation unit 177 based on the input information based on the information at time t3, when the excitement degree exceeds the storage threshold, the event information of "stroked" generated from the information at time t3 is to be stored in the storing unit 172. In addition, as a result of the computation performed by the NN computation unit 177 based on the input information based on the information at time t13, when the excitement degree exceeds the storage threshold, event information of "ignored" generated from the information at time t13 is to be stored in the storing unit 172.

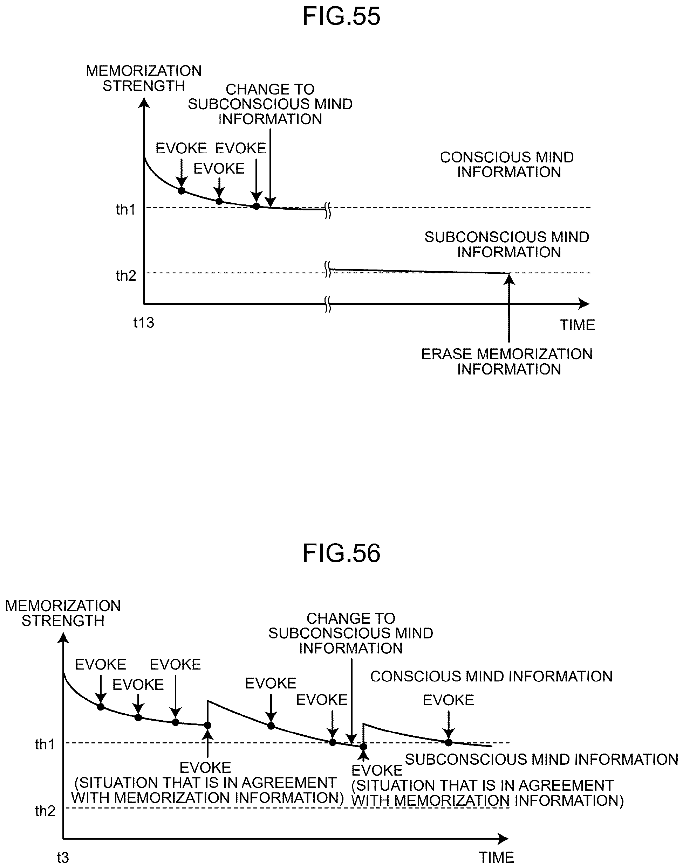

FIG. 55 is a diagram schematically illustrating an example of a temporal change in memorization strength of memorization information stored in the storing unit 172. Here, the memorization information of "ignored" obtained from the information at time t13 will be described. The memorization strength at time t13 is a strength corresponding to the excitement degree obtained from the input information based on the information at time t13. The storing unit 172 stores the memorization strength in association with the memorization information. Here, the storing unit 172 gradually decreases the memorization strength stored in association with the memorization information with the lapse of time. As illustrated in FIG. 55, the decrease rate of the memorization strength per unit time may decrease with the lapse of time. The decrease in the memorization strength indicates forgetting. A forgetting curve may be applied as a curve indicating a relationship between time and memorization strength. On the other hand, the decrease rate of the memorization strength per unit time may be constant regardless of time.

The memorization information is stored in a mode corresponding to the memorization strength. Specifically, the memorization information whose memorization strength exceeds a memorization level threshold th1 is to be stored in the storing unit 172 as conscious mind information. The memorization information stored in the storing unit 172 as the conscious mind information is spontaneously evoked at a predetermined frequency. Specifically, the information selection unit 182 selects information of "ignored" as the evoke information at a predetermined frequency. In FIG. 55, it is evoked 3 times.

FIG. 55 illustrates a case where it is determined that a situation of "ignored" has not occurred from the information acquired from the robot 40 when the memorization information of "ignored" is evoked. In this case, the memorization strength stored in the storing unit 172 is not increased and gradually decreases with time.

The memorization information in which the memorization strength is the memorization level threshold th1 or less and the memorization strength exceeds a memorization level threshold th2 is to be stored in the storing unit 172 as subconscious mind information. The memorization information stored in the storing unit 172 as the subconscious mind information is not spontaneously evoked. When the memorization strength falls to a memorization level threshold th2 or below, the memorization information is erased from the storing unit 172.

In this manner, in a case where information that is in agreement with the evoked memorization information has not been acquired from the robot 40 when the memorization information is evoked, the memorization strength of the memorization information gradually decreases. As a result, the information will be erased from the storing unit 172 at the end. In this manner, the memorization information generated in a situation that does not occur frequently in the robot 40 is to be erased. Therefore, the memorization region of the storing unit 172 can be effectively used.

FIG. 56 is a diagram schematically illustrating another example of the temporal change of the memorization strength of the memorization information stored in the storing unit 172. Here, the memorization information of "stroked" obtained from the information at time t3 will be described. The memorization strength at time t3 is a strength corresponding to the excitement degree obtained from the input information based on the information at time t3. As described in relation to FIG. 55, the storing unit 172 gradually decreases the memorization strength stored in association with the memorization information with the lapse of time.

FIG. 56 illustrates a case where it is determined that an event of "stroked" has occurred from the information acquired from the robot 40 in a case where the evoking is performed at the fourth time among the four times of spontaneous evoking since time t3. For example, here is an assumable case where it is determined that an event of "stroked" has occurred from the information acquired from the robot 40 within a predetermined time after the memorization information of "stroked" is evoked for the fourth time. In this case, the storing unit 172 increases the memorization strength stored in association with the memorization information of "stroked" by a predetermined strength. The amount of increase in the memorization strength may be variable. In addition, the storing unit 172 then reduces the decrease rate per unit time of the memorization strength. As illustrated in FIG. 56, the decrease rate of the memorization strength per time from the evoking time point is lower than the decrease rate of the memorization strength per time from the time point of memorization at time t3. In addition, the information selection unit 182 reduces the frequency of evoking the information of "stroked". Details of the parameter for reducing the evoking frequency will be described below.

In FIG. 56, the memorization information of "stroked" undergoes the fourth spontaneous evoking, then, undergoes spontaneous evoking twice at a low evoking frequency, and then becomes the subconscious mind information. After the memorization information becomes subconscious mind information, when there is an occurrence of an event that is in agreement with the event at the time when the memorization information of "stroked" is generated, the memorization information will be evoked even after the becoming the subconscious mind information. For example, the memorization information "stroked" is associated with the supplementary memorization information "A is present". Here, when information that is in agreement with the event of "A is present" is obtained from the robot 40, the memorization information of "stroked" associated with the supplementary memorization information of "A is present" can be evoked. Note that specific examples of the memorization processing and evoke processing will be described below.

FIG. 56 illustrates a case where it is determined that an event of "stroked" has occurred from the information acquired from the robot 40, similarly to the above-described fourth spontaneous evoking. In this case, the storing unit 172 increases the memorization strength stored in association with the memorization information of "stroked" by a predetermined strength. In addition, the storing unit 172 then reduces the decrease rate per unit time of the memorization strength. As illustrated in FIG. 56, the decrease rate of the memorization strength per time from the time point of the current evoking is lower than the decrease rate of the memorization strength per time from the time point of the previous evoking. In this manner, the decrease rate of the memorization strength per unit time is reduced each time the memory is evoked, and the memorization strength gradually decreases. In addition, the information selection unit 182 reduces the frequency of evoking the information of "stroked". In this manner, in a case where the event that is in agreement with the memorization information frequently occurs, the memorization strength increases and the decrease rate of the memorization strength per unit time is reduced, lowering the evoking frequency of the memorization information. Therefore, when there is frequent occurrence of an event that is in agreement with the memorization information, the memorization information is stored as more firmly retained and common memory. In this manner, according to the system 20, the memorization information can be stored in a manner similar to the mechanism in which the human memory is retained by repeated learning.

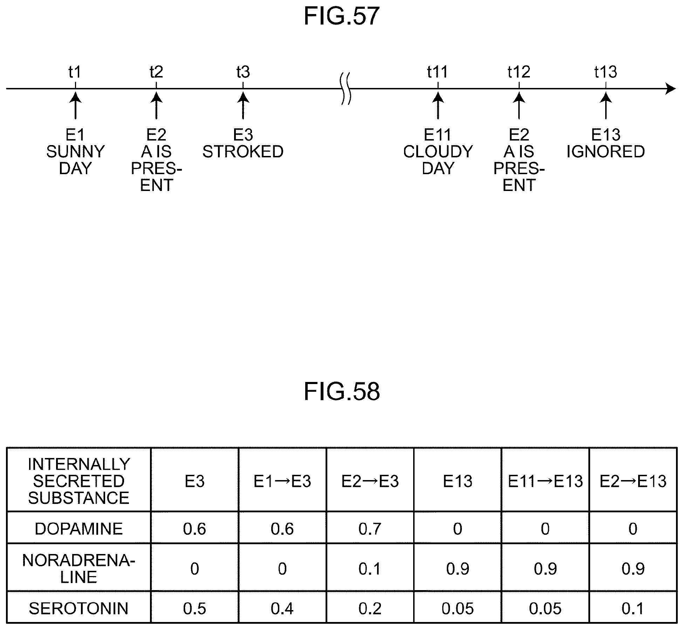

FIG. 57 is a diagram for explaining an acquisition sequence of information acquired from the robot 40. As described above, the memorization information of "stroked" is the event information generated based on the information at time t3. It is assumed that supplementary memorization information of "sunny day" is generated from the information at time t1 which is a predetermined time before time t3, and supplementary memorization information of "A is present" is generated from the information at time t2. Each supplementary information is stored in the storing unit 172 in association with the memorization information of "stroked".

In addition, it is assumed that supplementary memorization information of "cloudy day" is generated from the information at time t11 which is a predetermined time before the time t13, and supplementary memorization information of "A is present" is generated from the information at time t12. Each of generated supplementary information is stored in the storing unit 172 in association with memorization information of "ignored".

In the following description, for the purpose of simplification, "stroked" will be represented by E3, "sunny day" will be represented by E1, and "A is present" will be represented by E2. In addition, "ignored" will be represented by E13, and "cloudy day" will be represented by E11.

FIG. 58 is a diagram illustrating an example of information stored in the storing unit 172. Each memorization information of E3, E1 → E3, E2 → E3, E13, E11 → E13, and E2 → E13 is stored in the storing unit 172 in association with the secretion amount of a plurality of internally secreted substances. The secretion amount of the internally secreted substance associated with the memorization information indicates intensity that calls up an emotion affected by each internally secreted substance at the occurrence of an event that is in agreement with the memorization information.

For example, the secretion amount of dopamine indicates intensity of calling up an emotion of "happy" at the occurrence of an event that is in agreement with the memorization information. The secretion amount of noradrenaline indicates intensity of calling up an emotion of "anxious" at the occurrence of an event that is in agreement with the memorization information. In addition, the secretion amount of serotonin indicates intensity of suppressing the emotional ups and downs at the occurrence of an event that is in agreement with the memorization information.

The secretion amount of serotonin indicates the retention degree of the corresponding memorization information. For example, the higher the secretion amount of serotonin is, it is indicated that the more firmly the memory is retained. Therefore, the higher the secretion amount of serotonin, the lower the frequency of spontaneous evoking will be, and the lower the decrease rate per unit time of the memorization strength will be. That is, the storing unit 172 reduces the decrease rate per unit time of the memorization strength of the memorization information having a larger secretion amount of serotonin. In addition, the information selection unit 182 selects memorization information stored in the storing unit 172 in association with a larger secretion amount of serotonin, as evoke information at a lower frequency. In addition, the information selection unit 182 selects only the memorization information whose memorization strength exceeds the memorization level threshold th1 among the memorization information stored in the storing unit 172, as spontaneous evoke information.

As illustrated in FIG. 58, the storing unit 172 stores a dopamine secretion amount of 0.6, a noradrenaline secretion amount of 0, and a serotonin secretion amount of 0.5 in association with the memorization information of E3. Accordingly, the event indicated by E3 means that the event occurs relatively frequently compared to the event corresponding to other memorization information. In addition, the storing unit 172 stores a dopamine secretion amount of 0, a noradrenaline secretion amount of 0.9, and a serotonin secretion amount of 0.05 in association with the memorization information of E13. Accordingly, this means that, in a case where the memorization information of E13 is evoked and an event that actually is in agreement with E13 occurs, an emotion of "anxious" is greatly called up.

E1 → E3 indicates that E1 occurs followed by E3. Similarly, E2 → E3 indicates that E2 occurs followed by E3. The information illustrated in FIG. 58 indicates that the robot 40 is less accustomed to being stroked in a situation where A is present than being stroked on a sunny day, and that being stroked in a situation where A is present calls up the emotion of "happy" more greatly.

E11 → E13 indicates that E11 occurs followed by E13. Similarly, E2 → E13 indicates that E2 occurs followed by E13. The secretion amount of the internally secreted substance illustrated in FIG. 58 indicates that the robot 40 is not so accustomed to being ignored, and that occurrence of an event of being ignored in a case of having evoked being ignored strongly calls up an emotion of "anxious".

Not only the memorization information of E3 and E13 but also the memorization information of E1 → E3, E2 → E3, E11 → E13, and E2 → E13 are evoked at a frequency corresponding to the associated secretion amount of serotonin. When the associated event occurs, the secretion amount of the corresponding internally secreted substance is reflected in the calculation of the emotion of the robot 40 in the NN computation unit 177. For example, using the memorization information of E1 → E3 as an example, when being stroked on a sunny day, the secretion amount of dopamine 0.6, the secretion amount of noradrenaline 0, and the secretion amount of serotonin 0.4 are reflected in the current secretion amount of internally secreted substances. For example, the secretion amount of dopamine is adjusted to an average value of 0.6 with the current secretion amount of dopamine, the secretion amount of noradrenaline is adjusted to an average value of 0 with the current secretion amount of noradrenaline, and the secretion amount of serotonin is adjusted to an average value of 0.4 with the current secretion amount of serotonin. The internal secretion information to be reflected in the current secretion amount of the internally secreted substance is not limited to the secretion amount of the internally secreted substance associated with E1 → E3. For example, the secretion amount of dopamine 0.6, the secretion amount of noradrenaline 0, and the secretion amount of serotonin 0.5, which are associated with E3, which is the memorization information later in chronological order in the memorization information of E1 → E3, may be reflected in the current secretion amount of the internally secreted substance. In addition, the secretion amount of the internally secreted substance associated with E1, which is the memorization information later in chronological order in the memorization information of E1 → E3, may be reflected in the current secretion amount of the internally secreted substance.

In addition, the memorization information of E3 may be selected as the evoke information when an event that is in agreement with the event of E1 or E2 occurs based on the memorization information of E1 → E3 or E2 → E3. For example, at the occurrence of an event that is in agreement with the event of E1, the information selection unit 182 selects the memorization information of E3 as evoke information on the condition that the matching degree between the current distribution of the secretion amount of the internally secreted substance and the distribution of the secretion amount of the internally secreted substance associated with E1 → E3 in the storing unit 172 exceeds a predetermined threshold. Note that the matching degree between the secretion amounts of the internally secreted substances may be determined by a shortness of a distance of a vector having the secretion amount of each internally secreted substance as a component, as an index. For example, in a case where i is an identification symbol of the internally secreted substance, and when the current secretion amount of the internally secreted substance is qᵢₜ, and the secretion amount of the internally secreted substance associated with the memorization information in the storing unit 172 is q_{ic}, the reciprocal of {Σᵢ(qᵢₜ-q_{ic})²}^{1/2} may be used as the matching degree of the secretion amount of the internally secreted substance. Here, Σᵢ represents taking the sum of i. In a case where the memorization information of E3 is selected as the evoke information, when the input information that is in agreement with E3 is input and the same event as E3 or the event that is in agreement with E3 occurs, the serotonin secretion amount is to be increased by a predetermined amount among the secretion amount information associated with the memorization information of E1 → E3.

Similarly, the memorization information of E13 may be selected as the evoke information when an event that is in agreement with the event of E11 or E2 occurs based on the memorization information of E11 → E13 or E2 → E13. When an event that is in agreement with the event of E2 occurs, both E3 and E13 may be selected as the evoke information. In this case, the information selection unit 182 may select only one of E3 and E13 as the evoke information. For example, the information selection unit 182 may evoke only the memorization information associated with the distribution of the secretion amount of the internally secreted substance closer to the current distribution of the secretion amount of the internally secreted substance. For example, the information selection unit 182 may compare the matching degree between the distribution of the secretion amount of the internally secreted substance associated with E2 → E3 and the current distribution of the secretion amount of the internally secreted substance with the matching degree between the distribution of the secretion amount of the internally secreted substance associated with E2 → E13 and the current distribution of the secretion amount of the internally secreted substance, and may select only the memorization information that has achieved a higher matching degree as the evoke information. Also in this case, the information selection unit 182 does not need to select the memorization information as the evoke information when the matching degree with the distribution of the secretion amount of the internally secreted substance is smaller than a predetermined value.

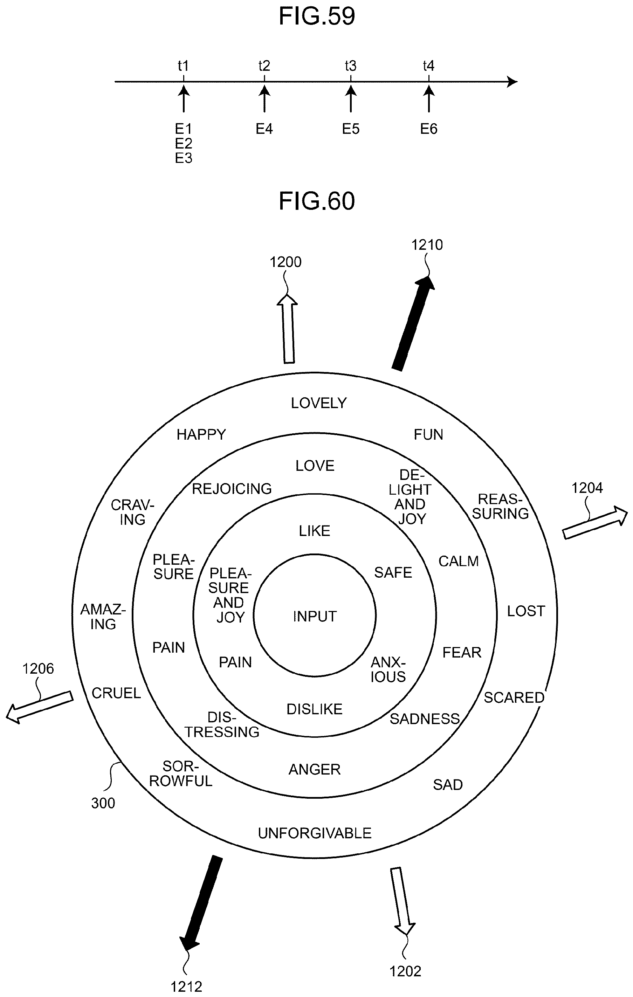

FIG. 59 is a diagram for describing an acquisition sequence of supplementary memorization information attached to memorization information. FIG. 58 has described a case of a pair of pieces of memorization information on a one-to-one basis, such as E1 → E3, E2 → E3, E11 → E13, and E2 → E13. However, the set of memorization information may include two or more pieces of memorization information as former memorization information in chronological order. For example, in the information acquisition sequence illustrated in FIG. 59, when E1, E2, and E3 occur at the same time step followed by occurrence of E4, the storing unit 172 may define a certain combination of E1, E2, and E3 as Ec and store a set of memorization information of Ec → E4 for each of Ec in association with the secretion amount of the internally secreted substance. Here, Ec includes seven patterns of [E1, E2, E3], [E1, E2], [E1, E3], [E2, E3], [E1], [E2], and [E3]. That is, seven sets of pieces of memorization information [E1, E2, E3] → E4, [E1, E2] → E4, [E1, E3] → E4, [E2, E3] → E4, [E1] → E4, [E2] → E4, and [E3] → E4 are stored in association with the secretion amount of the internally secreted substance. The individuals sets Ec → 4 of the memorization information are also evoked at a predetermined time interval. In a case where an event that is in agreement with E4 occurs subsequent to Ec, the memorization strength of the corresponding Ec → E4 is to be increased. In addition, among the secretion amount information associated with the corresponding Ec → E4, the secretion amount of serotonin is to be increased. This allows a set of frequently generated memorization information to become retained memorization information. In contrast, a set of memorization information that does not occur frequently transitions from the conscious mind information to the subconscious mind information relatively early. A set of memorization information that rarely occurs is to be erased as being forgotten at the end.

In addition, the set of memorization information may include two or more pieces of memorization information as later memorization information in chronological order. For example, in a case where the event E4 occurs followed by the events of E5 and E6 in chronological order in the information acquisition sequence illustrated in FIG. 59, sets of the memorization information, [E1, E2, E3] → [E4 → E5 → E6], [E1, E2] → [E4 → E5 → E6], [E1, E3] → [E4 → E5 → E6], [E2, E3] → [E4 → E5 → E6], and [E1] → [E4 → E5 → E6] may be stored in association with the secretion amount information. Here, the evoke processing will be described by using a set of memorization information of [E1, E2, E3] → [E4 → E5 → E6], as an example. When events of E1, E2 and E3 occur in the same time step, a sequence of memorization information E4, E5 and E6 can be selected. That is, the occurrence of events in the order of E4, E5, and E6 is evoked in accordance with the events of E1, E2, and E3. In addition, in a case where the events E1, E2, and E3 have occurred at the same time step and then E4, E5, and E6 continuously have occurred in this sequence, the memorization strength is increased. In addition, among the secretion amount information associated, the secretion amount of serotonin is to be increased. Note that whether it is in agreement with [E4 → E5 → E6], it is determined to be true only in a case where it occurs in the sequence of E4, E5, and E6. For example, in a case where it occurs in the sequence of E4, E6, and E5, it is determined that it is not in agreement with [E4 → E5 → E6]. This makes a set of memorization information having a sequence that does not occur frequently transition to the subconscious mind information earlier than a set of memorization information having a sequence that occurs frequently. In addition the set of memorization information having a rarely occurring sequence is to be erased as being forgotten at the end. This makes it possible to achieve memory processing in consideration of the sequence principle.

FIG. 60 is a diagram illustrating an internally secreted substance reflected in a case of occurrence of an event different from evoke information or an event denying evoke information. A vector 1200 indicates a vector of emotions induced by the effect of dopamine in the emotion map 300. That is, it is indicated that, when input information is input to the input artificial neuron, information transmission is promoted in a direction indicated by the vector 1200 from the central input portion by the effect of dopamine. The vector 1200 indicates an average direction of a path in which dopamine promotes information transmission. This does not mean that dopamine promotes information transfer only in the direction of the vector 1200.

A vector 1202 and a vector 1204 indicate representative directions of emotions that can be induced by the effects of noradrenaline and serotonin, respectively, in the emotion map 300. A vector 1210 indicates a representative direction of the emotion induced by the effect of the internally secreted substance of the secretion amount associated with E2 → E3. The vector 1210 is obtained by weighting and adding the vector 1200, the vector 1202, and the vector 1204 in accordance with the secretion amount associated with E2 → E3. That is, in a case where the memorization information of E3 is selected as the evoke information based on the memorization information of E2 → E3, when an event that is the same as E3 or is in agreement with E3 occurs, the amount of secretion of the internally secreted substance in the direction indicated by the vector 1210 is reflected in the current secretion amount of the internally secreted substance.

Here, the following will describe a case where, when the memorization information of E3 is selected as the evoke information based on the memorization information of E2 → E3, the input information negating E3 is input, and E4 that is an event different from E3 or that denies E3 occurs from the input information. Note that, in a case where E3 is "stroked", the event of E4 may be an event of "not stroked" or an event of "hit," which is determined to have a predetermined negative relationship. In this case, the secretion information generation unit 173 reflects the internally secreted substance affecting in the direction of a vector 1212 which is opposite to the vector 1210 and the secretion amount thereof on the secretion amount of the internally secreted substance associated with E2 → E4. In addition, the secretion information generation unit 173 reflects the amount of secretion of the internally secreted substance associated with E2 → E4 in which the internally secreted substance affecting in the direction of the vector 1212 and the amount of secretion thereof are reflected, on the current secretion amount of the internally secreted substance. For example, regarding the vector 1212, when it is assumed that a vector 1206 in FIG. 60 is a representative direction of the emotion induced by the effect of vasopressin, the secretion information generation unit 173 generates secretion information indicating the secretion amount of noradrenaline 0.7 and the secretion amount of vasopressin 0.3 and reflects the generated secretion information on the current secretion amount of internally secreted substances. This makes it easier to induce emotions in opposite directions in the emotion map 300 in a case where the evoked event does not occur, as compared with a case where the evoked event occurs. This makes it possible to appropriately reflect the operation of emotion that is expected to arise in a case where the evoked event was wrong, in the robot 40.

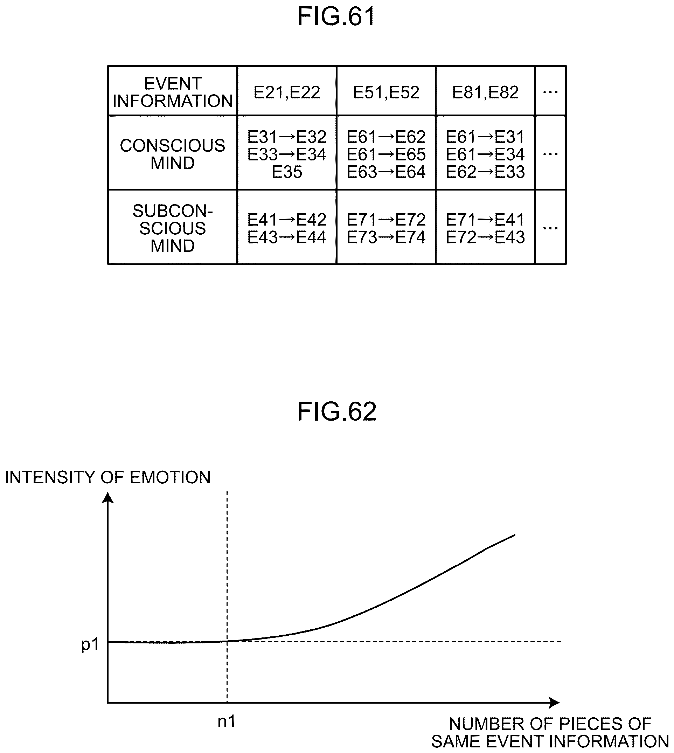

FIG. 61 is a diagram illustrating selection tolerance information indicating evoke information that is allowed to be selected as evoke information. The storing unit 172 stores, as first selection tolerance information, E31 → E32, E33 → E34, and E35 stored as conscious mind information, and E41 → E42 and E43 → E44 stored as subconscious mind information, in association with the event information of E21 and E22. In addition, the storing unit 172 stores, as second selection tolerance information, E61 → E62, E61 → E65, and E63 → E64 stored as conscious mind information and E71 → E72 and E73 → E74 stored as subconscious mind information, in association with the event information of E51 and E52. In addition, the storing unit 172 stores, as third selection tolerance information, E61 → E31, E61 → E34, and E62 → E33 stored as conscious mind information and E71 → E41 and E72 → E43 stored as subconscious mind information, in association with the event information of E81 and E82.

In a case where the memorization information of E31 → E32 is stored as conscious mind information, when E31 occurs following E21 and E22, the first selection tolerance information indicates that E32 can be selected as evoke information. Similarly, in a case where the memorization information of E33 → E34 is stored as conscious mind information and the memorization information of E41 → E42 and E43 → E44 is stored as subconscious mind information, the information indicates selectable items as evoke information such that, E34 can be selected when E33 occurs following E21 and E22, E42 can be selected when E41 occurs following E21 and E22, and E44 can be selected when E43 occurs following E21 and E22. This also indicates that, in a case where the memorization information of E35 is stored as conscious mind information, E35 can be selected as the evoke information when E21 and E22 occur.

Similarly, in a case where the memorization information of E61 → E62 is stored as the conscious mind information, when E61 occurs following E51 and E52, the second selection tolerance information indicates that E62 or E64 can be selected as the evoke information. Similarly, in a case where the memorization information of E63 → E64 is stored as conscious mind information and the memorization information of E71 → E72 and E73 → E74 is stored as subconscious mind information, the information indicates selectable items as evoke information such that, E64 can be selected when E63 occurs following E51 and E52, E72 can be selected when E71 occurs following E51 and E52, and E74 can be selected when E73 occurs following E51 and E52.

In the second selection tolerance information, the memorization information of E61 → E62 and 61 → E65 is stored as conscious mind information. These sets of memorization information have the same E61 as former memorization information in chronological order. In this case, among the memorization information of E61 → E62 and 61 → E65, the memorization information to be preferentially selected as evoke information may be selected based on the current secretion amount of the internally secreted substance or the secretion amount of a specific internally secreted substance. For example, as described above with reference to FIG. 58, the memorization information having the highest matching degree may be selected more preferentially as the evoke information by comparing each of the secretion amount of the internally secreted substance associated with the memorization information of E61 → E62 in the storing unit 172 and each of the secretion amount of the internally secreted substance associated with the memorization information of E61 → E65 in the storing unit 172, with the current secretion amount of the internally secreted substance. Here, as described above, the matching degree between the secretion amounts of the internally secreted substances may be determined by a shortness of a distance of a vector having the secretion amount of each internally secreted substance as a component, as an index. For example, when the matching degree between the secretion amount of the internally secreted substance associated with the memorization information of E61 → E65 and the current secretion amount of the internally secreted substance is higher than the matching degree between the secretion amount of the internally secreted substance associated with the memorization information of E61 → E62 and the current secretion amount of the internally secreted substance, the memorization information of E61 → E65 and the memorization information of E65 may be selected as the evoke information.

When selecting the memorization information to be preferentially selected as the evoke information among the memorization information of E61 → E62 and 61 → E65 based on the secretion amount of the specific internally secreted substance, the secretion amount of the secreted substance associated with the memorization information selected by the user may be applied as the secretion amount of the specific internally secreted substance. For example, a plurality of pieces of memorization information is presented, and the user is requested to rearrange these in a predetermined order. Specifically, the request is made to rearrange the pieces of memorization information in the descending order from the most enjoyable memory. The amount of secretion of an internally secreted substance associated with the highest-order memorization information by the user may be applied as the secretion amount of a specific internally secreted substance.

Similarly, in a case where the memorization information of E61 → E31 is stored as the conscious mind information, when E61 occurs following E81 and E82, the third selection tolerance information indicates that E31 or E34 can be selected as the evoke information. Similarly, in a case where the memorization information of E62 → E33 is stored as conscious mind information and the memorization information of E71 → E41 and E72 → E43 is stored as subconscious mind information, the information indicates selectable items as evoke information such that, E33 can be selected when E62 occurs following E81 and E82, E41 can be selected when E71 occurs following E81 and E82, and E74 can be selected when E72 occurs following E81 and E82. In the third selection tolerance information, memorization information of E61 → E31 and 61 → E34 is stored as conscious mind information. These sets of memorization information have the same E61 as former memorization information in chronological order. In this case, among the memorization information of E61 → E31 and 61 → E34, the memorization information to be preferentially selected as evoke information may be selected based on the current secretion amount of the internally secreted substance or the secretion amount of a specific internally secreted substance. Since the processing similar to the selection processing of E61 → E62 and 61 → E65 in the second selection tolerance information can be applied to this selection processing, the description thereof will be omitted.

Therefore, for example, in a case where E31 occurs following E51 and E52, the selection of E32 as the evoke information is prohibited. In addition, in a case where E61 occurs following E51 and E52, E62 can be selected as the evoke information. On the other hand, in a case where E61 occurs subsequent to E81 and E82 different from E51 and E52, E31 can be considered as evoke information. In this manner, the information tolerated to be selected as the evoke information can be restricted or switched in accordance with the sequence of the immediately preceding event. With this configuration, for example, in a case where the robot 40 enjoys playing Othello with the child, the robot 40 can be caused to take an action based on information learned in Othello in the past. Therefore, for example, in a case where the robot 40 enjoys Othello with the child, it is possible to suppress the robot 40 from erroneously taking an action that has been learned when playing shogi with the father.

FIG. 62 is a diagram schematically illustrating an example of a relationship between the number of pieces of the same event information and intensity of an emotion. The emotion decision unit 176 may decide the intensity of the emotion such that the larger the number of pieces of the same event information acquired within a predetermined acquisition interval by the information acquisition unit 204, the higher the value indicating the intensity of the emotion. For example, as illustrated in FIG. 62, the emotion decision unit 176 decides the value of the intensity of the emotion of the robot 40 to be a lower limit value p1 until the number of pieces of the same event information acquired within a predetermined acquisition interval by the information acquisition unit 204 exceeds a predetermined value n1. In a case where the number of pieces of the same event information acquired within a predetermined acquisition interval by the information acquisition unit 204 exceeds n1, the emotion decision unit 176 decides the intensity of the emotion such that the larger the number of pieces of the same event information, the higher the value of the intensity of emotion, and exponentially increases the intensity of the emotion. In other words, in a case where the same event has been repeatedly experienced by the robot 40 within a predetermined interval, the emotion decision unit 176 decides the intensity of the emotion to be a high value even if the emotion held by the robot 40 through individual experiences of the event is not a strong emotion.

Here, the more the same event is repeated within a predetermined interval, the more the event comes to have a higher significance and thus the higher the intensity of human emotion tends to be. Therefore, the emotion decision unit 176 can more appropriately decide the intensity of emotions of the robot 40 by an algorithm closer to the mechanism of determining the intensity of human emotions.

In the above example, when the number of pieces of the same event information exceeds n1, the emotion decision unit 176 exponentially increases the intensity of the emotion of the robot 40 in accordance with the increase in the number of pieces of the same event information. However, the increasing method is not limited to the above example, and the intensity of the emotion may be increased in any manner in accordance with the mechanism of determining the intensity of human emotion. For example, the emotion decision unit 176 may linearly increase the intensity of an emotion of the robot 40 in accordance with an increase in the number of pieces of the same event information. Also in this case, the emotion decision unit 176 can more appropriately decide the intensity of the emotion of the robot 40 by an algorithm closer to the mechanism of determining the intensity of human emotions.

In addition, the above example has described the case where the acquisition interval at which the same event information is acquired by the information acquisition unit 204 is within a predetermined acquisition interval. However, in a case where the acquisition interval is outside the predetermined acquisition interval, the emotion decision unit 176 need not decide the intensity of the emotion to be a high value even when there is a large number of pieces of the same event information acquired by the information acquisition unit 204. That is, in a case where the emotion held by the robot 40 through the individual experience of the event is not a strong emotion and the acquisition interval is long, the emotion decision unit 176 need not decide the intensity of the emotion to be a high value even when the event has been repeatedly experienced by the robot 40.

Here, when a person with a rough personality repeatedly experiences an event (having a weak intensity of emotions held by the experience), if the interval is long, the person considers that the event is insignificant and is unlikely to have strong emotions about the event. Accordingly, in a case where the acquisition interval at which the same event information is acquired by the information acquisition unit 204 is outside a predetermined acquisition interval, the emotion decision unit 176 does not decide the intensity of the emotion to be a high value even where there is a large number of pieces of the same event information acquired by the information acquisition unit 204, making it possible to more appropriately decide the intensity of the emotion of the robot 40 by an algorithm closer to the mechanism of determining the intensity of human emotions.

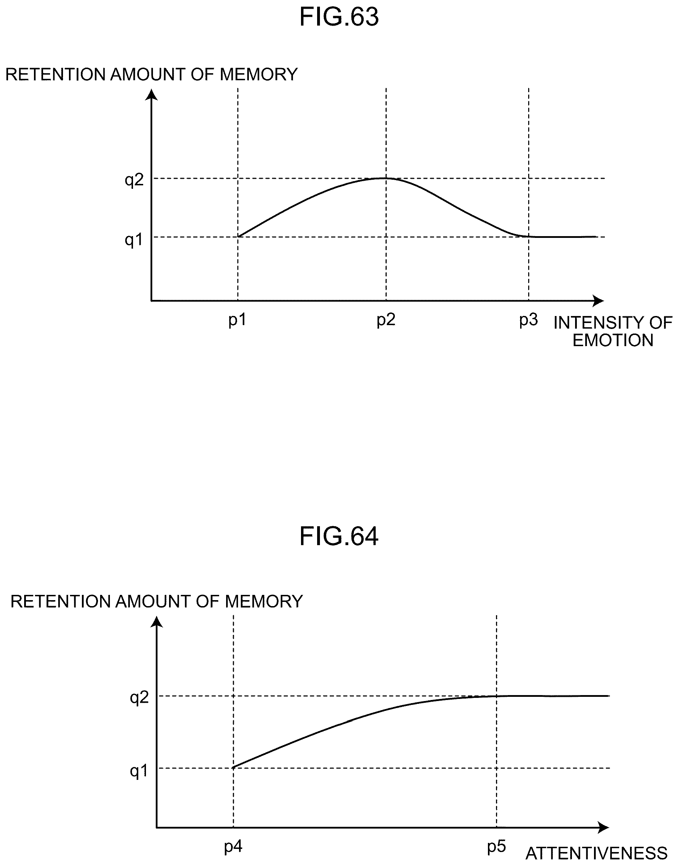

FIG. 63 is a diagram schematically illustrating an example of a relationship between intensity of an emotion and a retention amount of memory. The storage control unit 180 may decide the retention amount of the memory such that, the higher the intensity of the emotion, the higher the value of the retention amount of memory to be decided until the intensity of the emotion decided by the emotion decision unit 176 exceeds a predetermined value. For example, as illustrated in FIG. 63, the storage control unit 180 decides the value of the retention amount of memory of the robot 40 to a value ranging from q1 being a lower limit value to q2 being an upper limit value and is directly proportional to the intensity of the emotion until the intensity of the emotion, starting from p1, exceeds p2 which is a predetermined value, and decides the value of the retention amount of memory to a value ranging from q1 to q2 which is inversely proportional to the intensity of the emotion when the intensity of the emotion exceeds p2 which is a predetermined value. Specifically, the storage control unit 180 increases the retention amount of memory from q1 to q2 quadratically in an upward convex shape until the intensity of the emotion increases from p1 to p2, and decreases the retention amount of memory from q2 to q1 quadratically in an upward convex shape until the intensity of the emotion increases from p2 to p3 which is a predetermined value. Note that the storage control unit 180 stores the intensity of the emotion and the event information in association with each other in both the case where the intensity of the emotion is strong and the case where the intensity of the emotion is weak.

Here, the retention amount of the human memory varies depending on the intensity of the emotion, and tends to increase as the intensity of the emotion gets stronger to some extent and decrease when the intensity exceeds a certain extent. For example, emotional arousal can be stressful, which can cause distraction of attentiveness, reduced processing power, and hindrance of memory retention. This makes it possible for the storage control unit 180 to more appropriately decide the retention amount of memory by an algorithm closer to the mechanism of determining the retention amount of memory of a person.

In the example described above, the storage control unit 180 increases the retention amount of memory from q1 to q2 quadratically in an upward convex shape until the intensity of the emotion increases from p1 to p2, and decreases the retention amount of memory from q2 to q1 quadratically in an upward convex shape until the intensity of the emotion increases from p2 to p3. However, the storage control unit 180 is not limited to the above example, and may increase or decrease the retention amount of memory in accordance with a certain mode in accordance with the mechanism of determining the retention amount of memory of a person. For example, the storage control unit 180 may increase the retention amount of memory from q1 to q2 linearly until the intensity of the emotion increases from p1 to p2, and may decrease the retention amount of memory from q2 to q1 linearly until the intensity of the emotion increases from p2 to p3. This also makes it possible for the storage control unit 180 to more appropriately decide the retention amount of memory by an algorithm closer to the mechanism of determining the retention amount of memory of a person.

FIG. 64 is a diagram schematically illustrating an example of a relationship between attentiveness and a retention amount of memory. The storage control unit 180 may make a decision such that, the higher the attentiveness, the higher the value of the retention amount of memory will be. For example, as illustrated in FIG. 64, the storage control unit 180 logarithmically increases the retention amount of memory from q1 being the lower limit value to q2 being the upper limit value until the attentiveness of the robot 40 increases from p4 being a predetermined value to p5 being a predetermined value, and when the attentiveness of the robot 40 exceeds p5, the storage control unit decides the retention amount of memory to stay at q2. Note that the storage control unit 180 stores the intensity of the emotion and the event information in association with each other in both the case where the attentiveness is high and the case where the attentiveness is low.

Here, the retention amount of memory tends to increase by careful observation or concentration, but on the other hand, the human brain can have only a limited capacity of memory, and the retention amount of memory is limited. This makes it possible for the storage control unit 180 to more appropriately decide the retention amount of memory by an algorithm closer to the mechanism of determining the retention amount of memory of a person.

In the above example, the storage control unit 180 logarithmically increases the retention amount of memory from q1 to q2 until the attentiveness is increased from p4 to p5. However, the increase method is not limited to the above example, and the retention amount of memory may be increased by a certain mode in accordance with the mechanism of determining the retention amount of memory of a person. For example, the storage control unit 180 may linearly increase the retention amount of memory from q1 to q2 until the attentiveness increases from p4 to p5. This also makes it possible for the storage control unit 180 to more appropriately decide the retention amount of memory by an algorithm closer to the mechanism of determining the retention amount of memory of a person.

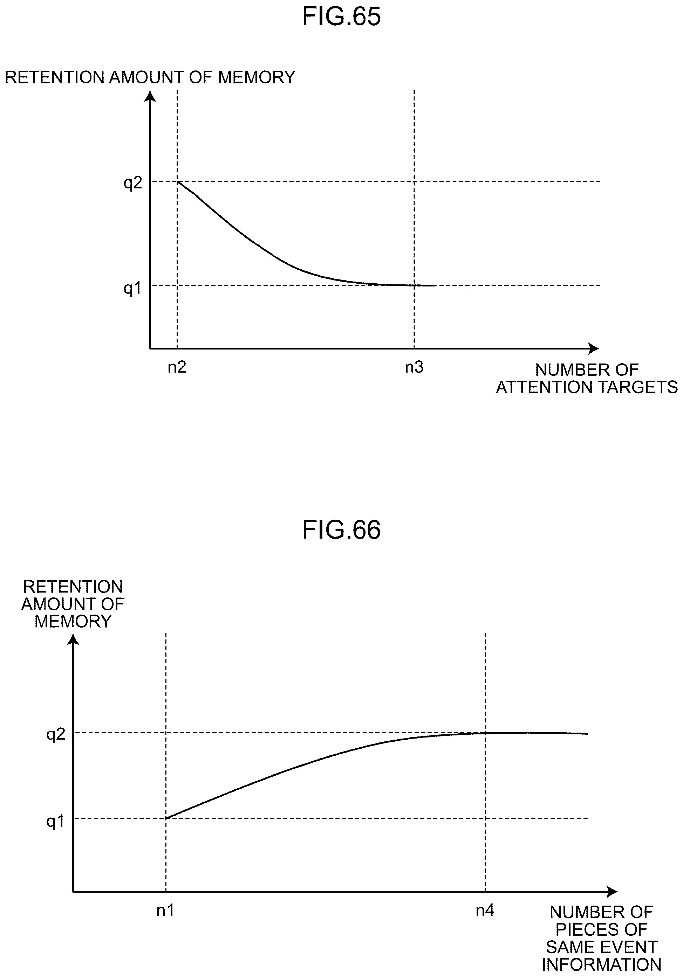

FIG. 65 is a diagram schematically illustrating an example of a relationship between the number of attention targets and the retention amount of memory. The storage control unit 180 may make a decision such that, the fewer the number of attention targets, the higher the value of the retention amount of memory will be. For example, as illustrated in FIG. 65, the storage control unit 180 logarithmically decreases the retention amount of memory from q2 being the upper limit value to q1 being the lower limit value along the forgetting curve until the number of attention targets by the robot 40 increases from n2 being a predetermined value to n3 being a predetermined value. When the number of attention targets is large, the storage control unit 180 decides the retention amount of memory to be a low value so as not to cause the robot 40 to store a large amount even if there is an instruction from the user 10 to pay attention to something. In addition, when the number of attention targets is small, if there is an instruction from the user 10 to pay attention to something, the storage control unit 180 decides the retention amount of memory to be a high value so as to cause the robot 40 to clearly store a large amount. Note that the storage control unit 180 stores the intensity of emotion and the event information in association with each other in both the case where the number of attention targets is large and the case where the number of attention targets is small.

Here, when there is a plurality of attention targets, a person tends to be able to store only a small amount of content for each attention target due to a limit in the retention amount of memory in the human brain, a decrease in the overall memory power due to the dispersion of attentiveness, etc. For this reason, the storage control unit 180 can more appropriately decide the retention amount of memory by an algorithm closer to the mechanism of determining the retention amount of memory of a person.

In the above example, the storage control unit 180 logarithmically decreases the retention amount of memory from q2 to q1 along the forgetting curve until the number of attention targets increases from n2 to n3. However, the decrease method is not limited to the above example, and the retention amount of memory may be decreased by a certain mode in accordance with a mechanism of determining the retention amount of memory of a person. For example, the storage control unit 180 may linearly decrease the retention amount of memory from q2 to q1 until the attentiveness increases from p4 to p5. Also in this case, the storage control unit 180 can more appropriately decide the retention amount of memory by an algorithm closer to the mechanism of determining the retention amount of memory of a person.

FIG. 66 is a diagram schematically illustrating an example of a relationship between the number of pieces of the same event information and the retention amount of memory. The storage control unit 180 may decide the retention amount of memory such that the larger the number of pieces of the same event information acquired within a predetermined acquisition interval by the information acquisition unit 204, the higher the value indicating the retention amount of memory. For example, as illustrated in FIG. 66, the storage control unit 180 logarithmically increases the retention amount of memory from the lower limit value q1 to an upper limit value q2 until the number of pieces of the same event information acquired within a predetermined acquisition interval by the information acquisition unit 204 increases from the predetermined value n1 to the predetermined value n4, and when the number of pieces of the same event information exceeds n4, the storage control unit 180 decides the retention amount of memory to stay at q2. The storage control unit 180 stores the intensity of emotion and the event information in association with each other in both the case where the number of pieces of the same event information acquired within a predetermined acquisition interval by the information acquisition unit 204 is large and the case where the number is small.

Here, the more the same event is repeated within a predetermined interval, the more the event comes to have a higher significance and thus the higher the retention amount of memory of a person tends to be. This makes it possible for the storage control unit 180 to more appropriately decide the retention amount of memory by an algorithm closer to the mechanism of determining the retention amount of memory of a person.

In the above example, the storage control unit 180 logarithmically increases the retention amount of memory from q1 to q2 until the number of pieces of the same event information acquired within the predetermined acquisition interval by the information acquisition unit 204 increases from n1 to n4. However, the increase method is not limited to the above example, and the retention amount of memory may be increased by a certain mode in accordance with a mechanism of determining the retention amount of memory of a person. For example, the storage control unit 180 may linearly increase the retention amount of memory from q1 to q2 until the number of pieces of the same event information acquired within a predetermined acquisition interval by the information acquisition unit 204 increases from n1 to n4. Also in this case, the storage control unit 180 can more appropriately decide the retention amount of memory by an algorithm closer to the mechanism of determining the retention amount of memory of a person.

In addition, the above example has described the case where the acquisition interval at which the same event information is acquired by the information acquisition unit 204 is within a predetermined acquisition interval. However, in a case where the acquisition interval is outside the predetermined acquisition interval, the storage control unit 180 need not decide the retention amount of memory to be a high value even when there is a large number of pieces of the same event information acquired by the information acquisition unit 204. That is, in a case where the acquisition interval is long, the storage control unit 180 need not decide the retention amount of memory to be a high value even when the event has been repeatedly experienced by the robot 40.

Here, with a person with a rough personality, there is a tendency that, even with repeated experiences of an event (an experience of which will give low intensity of emotion), the event will be forgotten soon as a non-significant event if the interval of repetition is long, leading to a low retention rate of memory. Accordingly, in a case where the acquisition interval at which the same event information is acquired by the information acquisition unit 204 is outside a predetermined acquisition interval, the storage control unit 180 does not decide the intensity of the emotion to be a high value even where there is a large number of pieces of the same event information acquired by the information acquisition unit 204, making it possible to more appropriately decide the intensity of the emotion of the robot 40 by an algorithm closer to the mechanism of determining the intensity of human emotions.

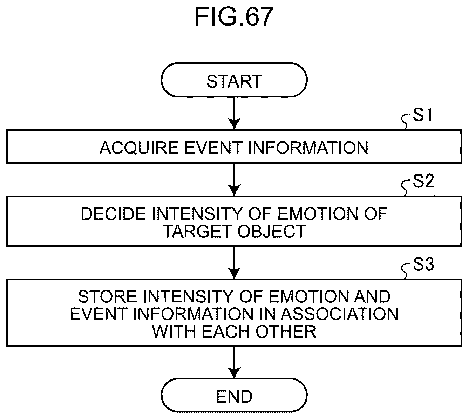

FIG. 67 is a diagram schematically illustrating an example of an operation flow of the server 60. In step S1, the information acquisition unit 204 acquires event information related to an event experienced by a target object being a control target of storage. For example, the information acquisition unit 204 acquires event information in a case where an event has been experienced by the robot 40.

In step S2, the emotion decision unit 176 decides the intensity of the emotion of the target object based on the event information acquired by the information acquisition unit 204. For example, the emotion decision unit 176 decides the intensity of the emotion such that the larger the number of pieces of the same event information acquired within a predetermined acquisition interval by the information acquisition unit 204, the higher the value indicating the intensity of the emotion of the robot 40. In other words, in a case where the same event has been repeatedly experienced by the robot 40 within a predetermined interval, the emotion decision unit 176 decides the intensity of the emotion of the robot 40 to be a high value even if the emotion held by the robot 40 through individual experiences of the event is not a strong emotion.

In step S3, the storage control unit 180 controls to store the intensity of the emotion decided by the emotion decision unit 176 and the event information in association with each other. For example, the storage control unit 180 controls to store information in which the intensity of emotion is associated with event information in the storing unit 172 as memorization information of the robot 40.

While the present invention has been described using the embodiments, the technical scope of the present invention is not limited to the scope described in the above embodiments. It is apparent to those skilled in the art that various modifications or improvements can be made to the above embodiments. It is apparent from the description of the claims that modes to which such changes or improvements have been added can also be included in the technical scope of the present invention.

It should be noted that the order of execution of each processing such as operations, procedures, steps, and stages in the devices, systems, programs, and methods illustrated in the claims, the specification, and the drawings can be implemented in any order unless "before", "prior to", or the like is explicitly stated, and unless the output of the previous processing is to be used in the subsequent processing. Descriptions using "First,", "Next,", and the like used for convenience in the operation flows in the claims, specification, and the drawings are not intended to indicate that it is essential to perform operations in the order described.

### Reference Signs List

- 5, 20: SYSTEM

- 10, 11, 12, 12a, 12b, 30: USER
- 40, 100: ROBOT
- 120, 156, 400: SENSOR UNIT
- 152: PROCESSING UNIT
- 155: CONTROL TARGET
- 156: SENSOR UNIT
- 158: COMMUNICATION UNIT
- 200: SERVER
- 202: PROCESSING UNIT
- 208: COMMUNICATION UNIT
- 210: INITIAL VALUE SETTING UNIT
- 230: EXTERNAL INPUT DATA GENERATION UNIT
- 240: PARAMETER PROCESSING UNIT
- 250: OPERATION DECISION UNIT
- 260: SWITCHING CONTROL UNIT
- 270: RECORDING CONTROL UNIT

## Claims

1. A control system that controls an action of an electronic device, the control system comprising:
a recording control unit that processes at least part of information continuously detected by a sensor to generate and record information in a first recording format or information in a second recording format having an information volume larger than an information volume of the information in the first recording format; and
a switching control unit that switches the recording format of the recording control unit from the first recording format to the second recording format in a case where an emotion of the electronic device or a user exceeds a threshold when the information of the first recording format is being generated.

2. The control system according to claim 1,
wherein the switching control unit
switches the recording format from the first recording format to the second recording format in a case where the emotion of the user exceeding the threshold has been propagated to the electronic device.

3. The control system according to claim 1,
wherein the switching control unit
switches the recording format from the first recording format to the second recording format in a case where the emotion of the electronic device exceeding the threshold has been propagated to the user.

4. The control system in accordance with claim 1,
wherein the recording control unit
switches a trigger for switching from the first recording format to the second recording format in accordance with a situation.

5. The control system according to claim 1,
wherein the recording control unit controls to
tag and record the information in the second recording format.

6. The control system according to claim 5,
wherein the information to be tagged includes:
at least one piece of information related to surrounding information, smell, temperature, humidity, position information, weather, the number of people in surroundings, a facial expression, and emotion.

7. The control system according to claim 1, further comprising
a video generation unit that receives information in the second recording format including video data from a server and generates a video to be presented to the user based on the video data included in the received information in the second recording format.

8. A system comprising:
a control system that controls an action of an electronic device, the control system including:
a recording control unit that processes at least part of information continuously detected by a sensor to generate and record information in a first recording format or information in a second recording format having an information volume larger than an information volume of the information in the first recording format; and
a switching control unit that switches the recording format of the recording control unit from the first recording format to the second recording format in a case where an emotion of the electronic device or a user exceeds a threshold when the information of the first recording format is being generated; and
a server that receives and records the information either in the first recording format or in the second recording format.

9. A program that controls an action of an electronic device, the program causing a computer to execute:
a recording control procedure of processing at least part of information continuously detected by a sensor to generate and record information in a first recording format or information in a second recording format having an information volume larger than an information volume of the information in the first recording format; and
a switching control procedure of switching the recording format of the recording control procedure from the first recording format to the second recording format in a case where an emotion of the electronic device or a user exceeds a threshold when the information of the first recording format is being generated.

10. A control system comprising:
an emotion decision unit that decides an emotion value indicating intensity of an emotion of an electronic device or intensity of an emotion of a user, or a type of the emotion, based on information detected by a sensor provided in an electronic device;
a specifying unit that specifies a mode of recording data indicating information related to the user detected by the sensor, based on information decided by the emotion decision unit; and
a recording control unit that records the data based on the mode specified by the specifying unit.

11. A control system that controls an action of an electronic device, the control system comprising:
an emotion decision unit that decides an emotion of one or both of a user and the electronic device based on at least part of information detected by a sensor that continuously detects the user;
a storage unit that stores information obtained by processing at least part of the information detected by the sensor in association with the decided emotion of one or both of the user and the electronic device; and
an output control unit that performs control to change one or both of the action of the electronic device and an output timing of the information in accordance with the emotion associated with the information stored in the storage unit when the information is output by the electronic device.

12. A control system that controls storage of an electronic device, the control system comprising:
an emotion decision unit that decides emotions of a user and the electronic device based on at least part of information detected by a sensor that continuously detects the user;
a storage unit that stores information obtained by processing at least part of the information detected by the sensor in association with the decided emotion of one or both of the user and the electronic device; and
a preservation control unit that controls a preservation period of the information in accordance with the emotion associated with the information stored in the storage unit.

13. A control system that is a system controlling storage of an electronic device, the control system comprising:
an emotion decision unit that decides an emotion of an electronic device based on information detected by a sensor included in the electronic device;
a storage unit that stores information detected by the sensor included in the electronic device and the emotion decided by the emotion decision unit in association with each other; and
a recording control unit that updates an emotion decided in the past by the emotion decision unit based on an emotion newly decided by the emotion decision unit, specifically, updates the emotion decided in the past by the emotion decision unit, associated with information detected in the past by the sensor included in the electronic device, including an element common to the information newly detected by the sensor included in the electronic device, based on an element related to the emotion newly decided by the emotion decision unit.

14. A control system comprising:
an emotion decision unit that decides intensity of an emotion of a user based on at least part of information detected by a sensor that continuously detects the user; and
a storage control unit that records information obtained by processing at least part of the information detected by the sensor, and switches the information to be recorded in accordance with whether the intensity of the emotion of the user decided by the emotion decision unit exceeds a threshold.

15. A control system comprising:
an information acquisition unit that acquires event information related to an event experienced by a target object being a storage control target;
an emotion decision unit that decides intensity of an emotion of the target object based on the event information acquired by the information acquisition unit; and
a storage control unit that controls to store the intensity of the emotion decided by the emotion decision unit and the event information in association with each other.

16. A control system that controls an action of an electronic device, the control system comprising:
a recording control unit that processes at least part of information continuously detected by a sensor to generate and record information in a first recording format or information in a second recording format having an information volume larger than an information volume of the information in the first recording format; and
a switching control unit that switches the recording format of the recording control unit from the first recording format to the second recording format in response to an increase in a change of an emotion of the electronic device or an emotion of a user when the information of the first recording format is being generated.

17. A control system that controls an action of an electronic device, the control system comprising:
a recording control unit that processes at least part of information continuously detected by a sensor, generates information in a first recording format or information in a second recording format having an information volume larger than that of the information in the first recording format, and records the generated information after tagging with the information in the second recording format; and
an output control unit that controls to output information in the second recording format selected based on tagged information from among the information in the second recording format recorded by the recording control unit.
